(19) Europäisches Patentamt

European Patent Office

Office européen des brevets

(11) **EP 1 037 093 A1**

(12) **EUROPEAN PATENT APPLICATION**
published in accordance with Art. 158(3) EPC

(43) Date of publication:
20.09.2000 Bulletin 2000/38

(51) Int. Cl.$^7$: **G02F 1/136**, G02F 1/133

(21) Application number: 98955979.4

(86) International application number:
PCT/JP98/05365

(22) Date of filing: 30.11.1998

(87) International publication number:
WO 99/28784 (10.06.1999 Gazette 1999/23)

(84) Designated Contracting States:
DE FR GB

(30) Priority: 28.11.1997 JP 32777097
16.02.1998 JP 3245798
03.04.1998 JP 9118998
24.08.1998 JP 23777998

(71) Applicant:
MATSUSHITA ELECTRIC INDUSTRIAL CO., LTD.
Kadoma-shi, Osaka 571-8501 (JP)

(72) Inventors:
• TANAKA, Yukio
  Kyoto-shi Kyoto 607-8405 (JP)

• KOMORI, Kazunori
  Sanda-shi Hyogo 669-1322 (JP)
• NISHIYAMA, Kazuhiro
  Hirakata-shi Osaka 573-0081 (JP)
• TAKIMOTO, Akio
  Neyagawa-shi Osaka 572-0016 (JP)

(74) Representative:
Dempster, Benjamin John Naftel
Withers & Rogers,
Goldings House,
2 Hays Lane
London SE1 2HW (GB)

(54) **REFLECTION-TYPE DISPLAY DEVICE AND IMAGE DEVICE USING REFLECTION-TYPE DISPLAY DEVICE**

(57)    The invention provides a reflective-type liquid crystal display device that achieves a good display image by reducing a degradation of a light utilization rate and a luminance variation and by eliminating flicker even when an incident light has a large illuminance. A pixel switching element in the reflective-type display device is composed of a pair of n-channel MOS transistor and p-channel MOS transistor. A drain electrode of each MOS transistor is electrically connected to a signal line, and a source electrode of each MOS transistor is electrically connected to a pixel electrode. A storage capacitor electrically connected to the pixel electrode is provided on a p-type crystalline silicon substrate. A photocurrent produced in one of the MOS transistors and a photocurrent produced in the other MOS transistor flow in such a direction that the photocurrents are made to flow in directions such that they cancel each other.

Fig.2

EP 1 037 093 A1

## Description

### TECHNICAL FIELD

The present invention relates to a reflective-type display device which can be suitably employed for a reflective-type liquid crystal light valve and the like for use in, for example, a liquid crystal projector. The present invention also relates to an image device employing the reflective-type display device.

### BACKGROUND ART

In recent years, there has been growing interest in liquid crystal display (LCD) devices employing reflective-type liquid crystal light valves for use in image projectors. In a reflective-type LCD device of this type, one of the two substrates constituting the liquid crystal cell is composed of a polycrystalline Si substrate (a substrate in which polycrystalline Si is formed on a substrate composed of glass, quartz, or the like) or a single crystalline Si substrate, and an active matrix structure is provided thereon. In this type of LCD device, a light modulated by liquid crystal is reflected by a reflective pixel electrode (which means a pixel electrode which surface is a reflective surface) incorporated into the active matrix structure, and then output to a viewer. The LCD device is generally produced by such processes as depositing a reflective surface on elements for controlling pixel switching operation such as TFT (Thin Film Transistor) and MOS (Metal-Oxide-Semiconductor) transistors, or on storage capacitors (also called auxiliary capacitors), and thereafter planarizing the formed reflective surface by CMP (chemical mechanical polishing) and so forth. Having such a configuration, this type of LCD device is free from a drawback of conventional transmissive type LCD devices, a reduced aperture ratio caused by transistor and storage capacitors occupying a large area in a pixel, and accordingly has an advantage that a high aperture ratio is ensured even in cases where a small pixel size is demanded to meet a requirement of high resolution.

In addition, particularly when single crystal Si is employed for the semiconductor substrate and MOS transistors are employed for the pixel switching elements, there is another advantage that techniques for semiconductor memory devices such as DRAM (Dynamic Random Access Memory) and the like are fully utilized. Furthermore, when single crystal Si is employed, there is further advantage that since single crystal Si has a high carrier mobility, CMOS (Complementary MOS) capable of high speed switching operation can be formed, and thereby high speed operation can also be achieved in integrated peripheral data driver circuits.

In driving a light modulating layer such as liquid crystal with an active matrix system, if the amount of electric charge stored in a pixel electrode varies during a period in which the scanning line is not selected, a voltage of the pixel electrode accordingly varies, thereby causing picture quality degradations such as a degradation in the contrast, a degradation in the luminance, flicker occurrence, noise generation and so forth. In view of this problem, generally, an auxiliary capacitor (storage capacitor) is added to the pixel electrode so as not to cause a voltage variation even if a little leakage of electrical charge occurs.

In order to ensure a large storage capacitor, there is an example in which a MOS capacitance is employed. (This example is hereinafter referred to as a prior art device: see pp. 43-48, H. Sato et al., 1995, ITE Technical Report Vol. 19, No. 65). In this case, $SiO_2$ is generally employed as an oxide layer of the MOS capacitance. A thickness of the oxide layer is generally very thin, approximately from 10 nm to 100 nm, and in this device, a relatively large capacitance is obtained.

However, the prior art device has the following problems.

(1) In recent years, projectors have increasingly been demanded to produce images with a higher luminance, and accordingly a higher illuminance of incident light to the panel surface has been required. In addition, to reduce the manufacturing cost, it is necessary that a panel size be made smaller so that the number of the panel that can be produced per one wafer is increased. However, if an area of the panel is made smaller, an illuminance of the incident light onto the panel surface must be increased inversely proportional to the area of the panel. Thus, it is required that the illuminance of the incident light to the panel surface be increased. However, if an illuminance of the incident light to the panel surface is increased, a photocurrent produced by a portion of the incident light which leaks from gaps between pixels and reaches the MOS transistors becomes considerably large, and therefore it becomes difficult to suppress voltage variations in the pixel electrodes even with the use of large storage capacitances such as MOS capacitances.

(2) In addition, such photocurrent-induced voltage variations in pixel electrodes cause flicker. The reason for this is as follows. Generally, in driving a liquid crystal device, in order to avoid charge up, voltages having opposite polarities but approximately the same absolute values (effective values) are applied alternately for each one frame (for the sake of brevity, the explanation herein assumes a case in which an image with a constant luminance is displayed). More specifically, when a scanning line is selected at even-numbered frames, a positive voltage (the reference being the counter substrate electrode) $V_A$ is applied to the pixel electrode, and at odd-numbered frames, a negative voltage $—V_A$ is applied thereto. In contrast, the above-mentioned photocurrents flow in a constant direction irrespective of the polarity of the pixel electrode voltage, and therefore, voltage variations resulting from the photocurrents during scanning line non-selected periods are made to have the same direction irrespective of even-numbered frames or odd-numbered frames. Assuming the direction of the voltage variation has a negative direction, the variation causes such an effect that an effective value of the applied voltage to liquid crystal becomes larger at even numbered frames, and smaller at odd numbered frames. As a consequence, the luminance of the liquid crystal shows repeated variations from bright to dark at each frame, and thus, flicker is perceived by the viewer. In order to suppress such flicker caused by photocurrents, it is desirable that the storage capacitor be made further larger, but it is of course impossible to make the storage capacitor infinitely large. The reason is that when the storage capacitor is large, in order to charge such a large capacitor during a scanning line selected period, a larger amount of electric charge must be supplied, and the amount of electric charge to be supplied exceeds the charging capability of the MOS transistor. Thus, the foregoing prior art device has a drawback that flicker is caused when an illuminance of incident light to the panel surface increased, which leads to degradations in picture quality.

Now, a cause of flicker in the foregoing prior art device is detailed using mathematical expressions and so forth. The following explanation is intended to highlight the problems in the prior art device, as well as to facilitate the comparison between the present invention and the prior art device with the use of mathematical expressions etc. in the Preferred Embodiments hereinbelow.

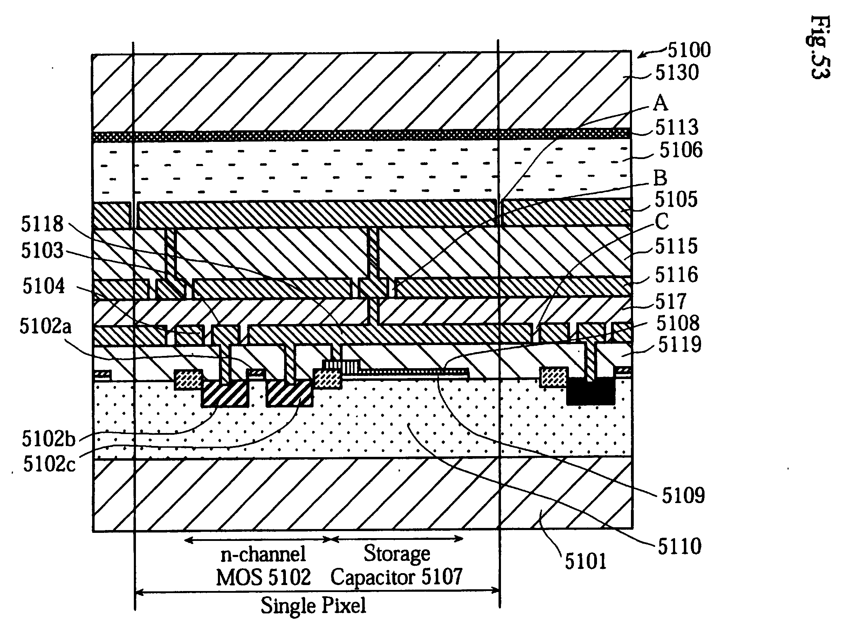

Fig. 53 shows a cross-sectional view of the foregoing prior art device. A reflective-type LCD device 5100 employs an n-type crystalline Si substrate 5101, and comprises, as its main components, a counter substrate 5130, an n-channel MOS transistor 5102, a signal line 5103, a common voltage line 5104, a scanning line (gate line, not shown), a reflective pixel electrode 5105, a liquid crystal 5106, and a storage capacitor 5107. The storage capacitor 5107 is composed of a capacitive electrode 5108, a capacitive oxide layer 5109, and a portion of a p-well 5110.

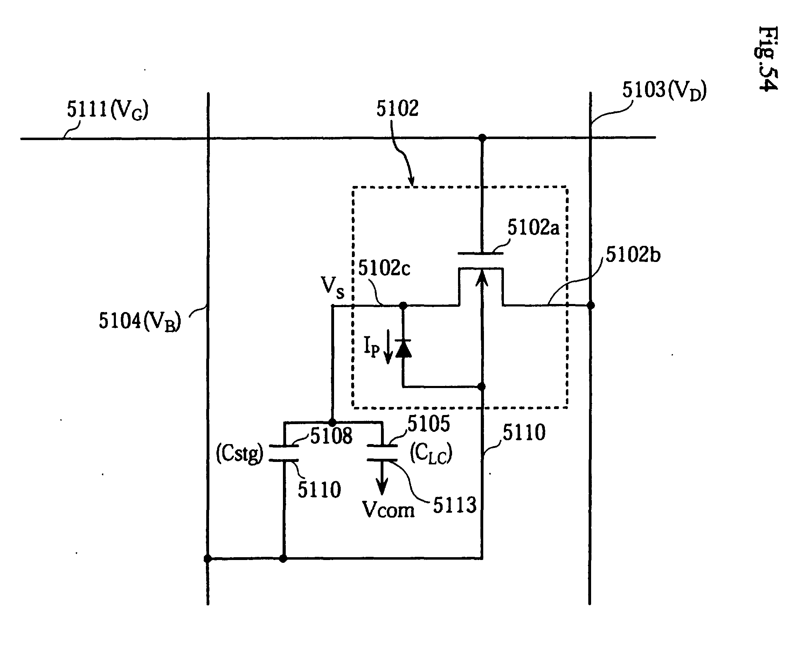

An equivalent circuit of one single pixel of the reflective-type LCD device 5100 is shown in Fig. 54. The equivalent circuit shown in Fig. 54 is a standard active matrix type circuit, and a gate 5102a of the n-channel MOS transistor 5102 is connected to a scanning line 5111 (voltage $V_G$), a drain 5102b is connected to a signal line 5103 (voltage $V_D$), and a source 5102c is connected to a pixel electrode 5105 (voltage $V_S$). The p-well 5110 is connected to a common voltage line 5104 (voltage $V_B$), and therefore, the p-well 5110 is biased to the voltage $V_B$. The voltage $V_B$ corresponds to a substrate bias voltage of the MOS transistor 5102. The voltage $V_B$ is lower than both of the voltages $V_D$ and $V_S$. The liquid crystal 5106 is sandwiched between the pixel electrode 5105 and an ITO electrode 5113 (voltage $V_{com}$), and thereby a liquid crystal capacitance $C_{LC}$ is produced. ($C_{LC}$ is a capacitance value per one single pixel.) In the storage capacitor 5107, a capacitive oxide layer 5109 is sandwiched between a capacitive electrode 5108 with a voltage $V_S$ and the p-well 5110 with a voltage $V_B$, and thereby a storage capacitance $C_{stg}$ of the storage capacitor 5107 is produced. In this figure, minute stray capacitance, leakage conductance, and so forth produced in the MOS transistor 5102 or between connected lines are ignored.

When a high luminance light is projected to the display device 5100, part of the light transmits through, for example, a gap A in the pixel electrode 5105 → the planarizing layer 5115 → a gap B in a second light blocking layer 5116 → a second insulating layer 5117 → a gap C of a first light blocking layer 5118 → a first insulating layer 5119, and reaches a reverse-biased region between the source 5102 and the p-well 5110. As a result, a photocurrent is produced according to the same principle as that in photodiodes. $I_P$ in Fig. 54 represents the photocurrent. Generally, $I_P$ results in a value proportional to an illuminance of the incident light.

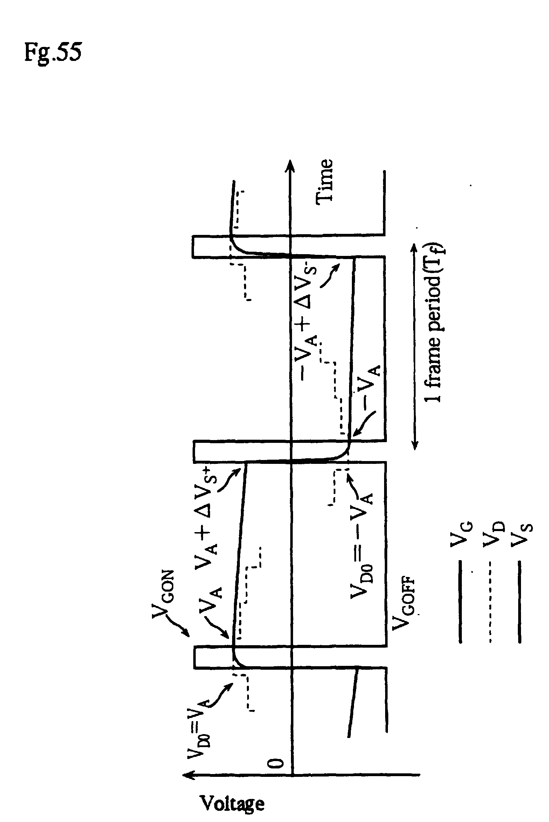

Now, the operation of the prior art device is detailed. The scanning line 5111 is selected at each one frame as shown in Fig. 55. Here, a voltage $V_G$ of the scanning line at a selected state is denoted by $V_{GON}$, a voltage $V_G$ of the scanning line at a non-selected state is denoted by $V_{GOFF}$. Also as shown in Fig. 55, a voltage $V_D$ having different polarities at every alternative frame (the absolute values being approximately equal) is fed to the signal line 5103.

First, when the scanning line 5111 of a certain pixel is selected, the MOS transistor 5102 is turned to be an ON state, and a pixel electrode voltage $V_S$ is charged until a signal line voltage $V_D$ becomes $V_{D0}$ (a signal line voltage $V_D$ during the selected period is particularly denoted by $V_{D0}$). The change of the pixel electrode voltage $V_S$ is represented by the following expression (1).

$$(C_{stg}+C_{LC}) \, dV_S \, / \, dt = k \, \{(V_{GON}—V_S)^2—(V_{GON}—V_{D0})^2\} \tag{1}$$

The right hand side of expression (1) represents a current between the drain and the source of the MOS transistor 5102, and k is a constant representing a charging performance of the MOS transistor 5102. For the sake of brevity, the threshold voltage is assumed to be 0 V here. But note that the following discussion is held to be practically valid even if the threshold voltage is not 0 V. A current between the source and drain is sufficiently larger than $I_P$ and thus the effect of $I_P$ is ignored.

At a final stage of charging where $V_S$ is becoming close to $V_{D0}$, expression (1) can be approximated as the following expression (2).

$$\text{The right side of expression (1)} = k\{(V_{GON}-V_S)^2-(V_{GON}-V_{D0})^2\}$$
$$= k\{V_{GON}^2-2V_{GON}\cdot V_S+V_S^2-V_{GON}^2+2V_{GON}\cdot V_{D0}-V_{D0}^2\}$$
$$= k\{V_S^2-V_{D0}^2+2V_{GON}(V_{D0}-V_S)\}$$
$$= k\{(V_S-V_{D0})(V_S+V_{D0})+2V_{GON}(V_{D0}-V_S)\}$$
$$= k(V_S-V_{D0})(V_S+V_{D0}-2V_{GON}) \fallingdotseq 2k(V_S-V_{D0})(V_{D0}-V_{GON}) \qquad (\because V_S\fallingdotseq V_{D0})$$

$$\therefore (C_{stg}+C_{LC})\,dV_S/dt \fallingdotseq 2k(V_S-V_{D0})(V_{D0}-V_{GON})$$

$$\therefore d(V_S-V_{D0})/dt = -2k(V_{GON}-V_{D0})(V_S-V_{D0})/(C_{stg}+C_{LC}) \tag{2}$$
$$=(V_S-V_{D0})/\tau$$

In the above expression, $\tau = (C_{stg}+C_{LC})/2k(V_G-V_{D0})$.

As apparent from the above expression (2), a time constant of charging $\tau$ becomes larger as $V_{D0}$ becomes larger and closer to $V_G$. In other words, it shows that as $V_{D0}$ becomes larger, the time for charging is longer. The value $\tau$ becomes the largest in the case of where $V_{D0}$ is the maximum signal line voltage (this is denoted by $V_{Dm}$), and the time constant $\tau$ in this case is represented by the following expression (3).

$$\tau=(C_{stg}+C_{LC})/2k(V_G-V_{Dm}) \tag{3}$$

In order to perform a sufficient charging, it is necessary that $\tau$ be sufficiently small in comparison with a width of the selected period. In the discussion hereinbelow, it is assumed that this condition is satisfied and charging is completed within a selected period, attaining $V_S = V_{D0}$.

Now, the discussion is concerned with a state after entering a non-selected period. In the non-selected period, the MOS transistor is turned to be OFF state and the connection between the drain and the source is cut off. Here, assuming an ideal condition in which a photocurrent $I_P = 0$, an electric charge stored in a storage capacitance $C_{stg}$ and a liquid crystal capacitance $C_{LC}$ is preserved during a period until the next selected period (during the non-selected period), and a voltage $V_S$ of the pixel electrode 5105 is kept at a constant level, approximately an initial level of $V_D$. In this instance, for a period of one frame, an alignment of liquid crystal is kept in a predetermined state, allowing to display a predetermined image.

However, such an ideal condition is not possible to realize, and the photocurrent $I_P$ influences the pixel electrode voltage $V_S$, causing a variation of the pixel electrode voltage $V_S$ during the non-selected period. The variation of $V_S$ is represented by the following expression (4).

$$(C_{stg} + C_{LC})\,dV_S/dt = -I_P \tag{4}$$

Here, the photocurrent $I_P$ is a positive value proportional to an illuminance of the incident light, but is also dependent on $V_S$. The reason is that, the photocurrent is produced by a hole-electron pair resulting from a light illuminating a depletion layer in a reverse-biased region between the source 5102 and the p-well 5110, and a width of the depletion layer is varied approximately in proportion to a square root of a reverse bias voltage $V_S-V_B$. Note that, depending on a profile of an impurity-doping depth in the source 5102c, it is not necessarily in proportion to the square root, but the following discussion remains to be valid.

The relationship between $V_S$ and a photocurrent $I_P$ at a certain illuminance of the incident light is shown in Fig. 56. Now, it is assumed that signals of $V_{D0} = \pm V_A$ are alternately applied at each frame to the signal line. $I_P$ in each case of $V_S = \pm V_A$ is set to be $I_{P+}$ or $I_{P-}$, respectively. When a voltage variation during the non-selected period is $\Delta V_{S+}$ or $\Delta V_{S-}$ respectively, these are represented in an approximation by the following expressions (5) and (6).

$$\Delta V_{S+} = -(I_{P+})\cdot(T_f)/(C_{stg}+C_{LC}) \tag{5}$$

$$\Delta V_{S-} = -(I_{P-})\cdot(T_f)/(C_{stg}+C_{LC}) \tag{6}$$

In the above expressions, $T_f$ denotes a frame period. Based on the foregoing, a variation of $V_S$ is shown in Fig. 55. (A so-called "field through effect", a voltage variation caused by a capacitive coupling at the moment of the transition from a selected period to a non-selected period, is ignored here.)

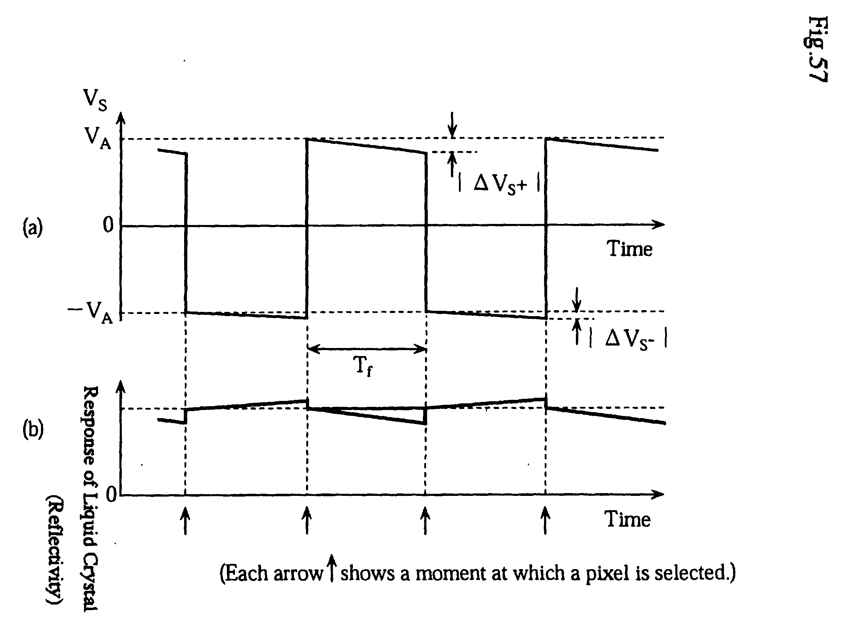

A response of reflectivity of a liquid crystal is determined by an absolute value of an applied voltage to the liquid crystal, and shows a response as shown in Fig. 57(b) corresponding to the change of $V_S$ shown in Fig. 57(a) (which shows the same $V_S$ as shown in Fig. 55). Here, it is assumed that the liquid crystal exhibits a sufficiently quick response in comparison with the frame period, and that the device is a normally-off mode in which the reflectivity increases as the applied voltage increases. It is also assumed that $V_{com} = 0$. According to Fig. 57(b), the reflectivity results in a value such that an alternating-current component having a period twice as long as the frame period $T_f$ is superimposed on a direct current average value, and thus noticeable flicker is observed by a viewer. An amplitude of the alternating current is proportional to an illuminance of the incident light, and inversely proportional to $C_{stg}+C_{LC}$. The alternating current cannot be completely eliminated even if $V_{com}$ is adjusted. The reason is that although it is possible to equalize average values of reflectivities in odd-numbered frames and even-numbered frames by changing $V_{com}$, the waveforms per se of both reflectivities cannot be equalized. From the discussion thus far, it is understood that, in the case of the prior art device, flicker increases as an illuminance of the incident light increases. Although the flicker can be suppressed by increasing $C_{stg}+C_{LC}$, it is impossible to increase $C_{stg}+C_{LC}$ limitlessly since there is a limitation that a time constant of charging shown in the foregoing expression (3) must be restricted to less than a certain value. Therefore, flicker cannot be eliminated completely.

Other Problems

Although the problems described above mainly relates to a case in which a light enters the pixel switching element, a light illuminating a region in the substrate surface other than the region of the pixel switching elements also influences nearby pixel switching elements and becomes a cause of a variation of pixel electrode voltages. Therefore, in an LCD device in which a silicon substrate is used as the substrate, four or more layers are provided for the formation of signal wiring and a light blocking layer in order to thoroughly block an incoming light, for example as described in Japanese Unexamined Patent Publication No. 9-68718. However, in such a multi-layered structure, the more the layers are provided, the larger the number of mask is required, thereby increasing the manufacturing cost. In view of this problem, for example as described in Japanese Unexamined Patent Publication No. 63-228887, there has been a device having a construction in which pixel switching elements are formed on an insulative substrate made of such a glass that is non-reactive to light, so that a light blocking performance is improved. In such a construction, unlike the case of a silicon substrate, if a light hits the insulative substrate, it does not cause a problem, and if the pixel switching elements are disposed under the reflective electrode, an incident light does not directly hit the pixel switching elements. However, in recent years, further brighter reflective-type display devices are demanded, and an intensity of the incident light tends to be further increased. In the past, an intensity of the light projected onto a reflective-type LCD device was approximately 100,000 lux. However, a light of approximately 1 million to 5 million lux is required in recent years. At a 100,000 lux level, a sufficient display performance has been obtained by, as described above, forming pixel switching elements on such an insulative substrate that is non-reactive with light and disposing the pixel switching elements under the reflective electrode. However, with a further increased intensity of the incident light, the contrast has been reduced, and at a light intensity of over 1 million lux, the resulting contrast has become approximately 10, which is a considerable degradation in display performance. In a reflective-type LCD device produced with the use of a silicon substrate as well, a similar reduction in the contrast has been observed.

The present inventors found that such a degradation in contrast is induced by a variation of pixel electrode voltages, which results from the malfunction of pixel switching elements caused by a light entering the pixel switching elements or hitting the silicon substrate.

In the case of a reflective-type LCD device made with a silicon substrate, it appears that the light is sufficiently blocked by the presence of a light blocking layer, but in fact the incident light is transmitted in the insulating layer by multiple reflections on, for example, a surface of the light blocking layer and a back surface of the reflective pixel electrode.

When an intensity of the incident light is relatively weak, light absorption takes place at the time of the reflection and the like, and therefore the incident light disappears before it reaches the silicon substrate. However, when an intensity of the incident light is increased, the light cannot be absorbed, and reaches the silicon substrate, causing the malfunction. In order to prevent this, the light blocking layer must be multi-layered to improve the light blocking performance. Yet, this leads to an increase in the number of masks required in the manufacturing, an increase in the number of the manufacturing steps, and a decrease in a rate of good product (yield), thereby resulting in a cost increase.

In the case of forming pixel switching elements on an insulative substrate on the other hand, although a light enters the insulative substrate, reflection does not takes place if the insulative substrate is made of a transparent material such as glass and quartz, and the light passes through to the back surface. Therefore, the light blocking performance is improved over the foregoing LCD device made with a silicon substrate. However, in this case of using the transparent insulative substrate, the present inventors found that a cause of the contrast degradation is an interfacial reflection at the downward surface (a surface opposite to the surface on which pixel switching elements are formed). In a transparent material, little light absorption takes place and most part of the light linearly passes through the material. However, even in the case of transparent materials, when two materials have greatly different refractive indices from each other, an interfacial reflection occurs at the interface between the two materials. A transparent material for constructing a display device generally shows a refractive index of approximately 1.5, and the interfacial reflection is small. However, since the air has a refractive index of 1, a light passing through for example glass is reflected about 4 % at the interface between the glass and the air. The reflected light is again transmitted in the glass, and if the light reaches the pixel switching elements, it causes a variation of pixel electrode voltages.

In summary, in the case of a transparent insulative substrate, a reflected light resulting from an interfacial reflection at the back surface of the substrate transmits in the substrate and reaches the pixel switching elements, and thus a variation of pixel electrode voltages is caused.

## DISCLOSURE OF THE INVENTION

In view of the foregoing problems in prior art, it is an object of the present invention to provide a reflective-type display device, in which flicker is eliminated by suppressing a variation of pixel electrode voltages, and thereby a high quality image is achieved even when a high illuminance light source is employed, and to provide an image device employing the reflective-type display device.

The present inventors have found as a result of intensive studies that a variation of pixel electrode voltages can be reduced and thereby the occurrence of flicker is prevented (1) by canceling photocurrents, (2) by further increasing a storage capacitance, and (3) by implementing a surface treatment on a back surface of the transparent insulating substrate such that light is not reflected.

Specific configurations of the invention will now be described hereinbelow.

In accordance with a first aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and
the reflective-type display device implements a display operation by applying a voltage between the transparent electrode and the pixel electrode such as to change an optical status of the light modulating layer in response to the applied voltage,
the reflective-type display device characterized in that:
in each pixel, a storage capacitor electrically connected to the pixel electrode is provided on the semiconductor substrate, and
in each pixel, a photoelectric transducer electrically connected to the pixel electrode is provided on the semiconductor substrate, the photoelectric transducer wherein a photocurrent is produced by an incident light, and the photocurrent flows in a direction such that the photocurrent cancels a photocurrent produced in the pixel switching element.

In the above-described display device, during a period in which the pixel switching element is OFF, a photocurrent is generated by part of the incident light leaking from the gap between the pixel electrodes and reaching the pixel switching element. The leaking light from the gap of the pixel electrodes also illuminates the photoelectric transducer. Thereby, a photocurrent is generated in the photoelectric transducer. The photocurrent generated by the photoelectric transducer is made to flow in a direction such that the photocurrent generated in the pixel switching element is cancelled thereby, and therefore a variation of the amount of electric charge caused by photocurrent can be minimized.

In addition to the above-described device configuration, when an electrode voltage of the counter substrate is set to be $V_C$, flicker is perfectly prevented as will be described later (in a description regarding the fifth aspect of the invention). Even when the electrode voltage of the counter substrate is not set to be $V_C$, a variation of the amount of electric charge caused by photocurrent can be reduced, and accordingly the level of flicker generated can be reduced in comparison with the prior art device, albeit not perfectly prevented.

In accordance with a second aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate, and

in each pixel, a photoelectric transducer electrically connected to the pixel electrode is provided on the semiconductor substrate, the photoelectric transducer wherein a photocurrent is produced by an incident light, and the photocurrent flows in a direction such that the photocurrent cancels a photocurrent produced in the pixel switching element.

By providing a pixel electrode having a reflective surface (i.e., a reflective pixel electrode), it becomes unnecessary to independently provide a reflective layer. Therefore, a thickness of the reflective-type display device can be reduced. The reflective-type display device of the above-described configuration can also minimize a variation of the amount of electric charge of the pixel electrode caused by photocurrent.

In accordance with a third aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

the pixel electrode is composed of a pair of an n-channel MOS transistor and an p-channel MOS transistor each in which one of a drain electrode and a source electrode is connected to the signal line and the other one of the drain electrode and the source electrode is connected to the pixel electrode,

in each pixel, a storage capacitor electrically connected to the pixel electrode is provided on the semiconductor substrate, and

a photocurrent generated in the n-channel MOS transistor and a photocurrent generated in the p-channel MOS transistor flow in directions such that the photocurrents cancel each other.

In the above-described display device, when part of the incident light leaks from the gap of the pixel electrodes and reaches the n-channel MOS transistor and the p-channel MOS transistor, photocurrents flowing such directions as to cancel each other are generated in the MOS transistors. Thereby, a variation of the amount of electric charge in the pixel electrode caused by photocurrents can be minimized.

It is to be noted here that the term "a pair of an n-channel MOS transistor and a p-channel MOS transistor" is intended to include all such variations that a pair of transistors, or a plurality of transistors are connected in series, or in parallel.

In accordance with a fourth aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate, and
a photocurrent generated in the n-channel MOS transistor and a photocurrent generated in the p-channel MOS transistor flow in directions such that the photocurrents cancel each other.

By providing a pixel electrode having a reflective surface (i.e., a reflective pixel electrode), it becomes unnecessary to independently provide a reflective layer. Therefore, a thickness of the reflective-type display device can be reduced. The reflective-type display device of the above-described configuration can also minimize a variation of the amount of electric charge of the pixel electrode caused by photocurrent as well as the display device of the third aspect of the invention.

In accordance with a fifth aspect of the invention, there is provided a reflective-type display device as in the third aspect of the invention, wherein:

an electrode voltage of the counter substrate is approximately equal to $V_C$, where a substrate bias voltage of an n-channel MOS transistor is $V_{B1}$, a substrate bias voltage of a p-channel MOS transistor is $V_{B2}$, and $V_C$ is a pixel electrode voltage such that a photocurrent in the n-channel MOS transistor and a photocurrent in the p-channel MOS transistor, both of which photocurrents being produced by an incident light, are made to be equal during a period in which the p-channel MOS transistor and the n-channel MOS transistor are switched off.

A photocurrent generated in the n-channel MOS transistor (hereafter referred to as $I_{P1}$) and a photocurrent generated in the p-channel MOS transistor (hereafter referred to as $I_{P2}$) are dependent on a pixel electrode voltage (hereafter referred to as $V_S$). Here, when a pixel electrode voltage resulting in $I_{P2}—I_{P1}=0$ is defined as $V_C$, if a voltage $V_C+V_A$ and a voltage $V_C—V_A$, each in which a certain voltage value $\pm V_A$ is added to $V_C$, are alternately applied to the signal line as a pixel electrode voltage, the varied voltages of $V_S$ during the non-selected period have approximately the same absolute values but different signs. Therefore, the pixel electrode voltage results in a waveform such that an alternating voltage waveform symmetric with respect to positive and negative is superposed on the direct-current voltage $V_C$. Hence, by setting $V_C$ to be an electrode voltage of the counter substrate, a direct current component is eliminated from the applied voltage to the light modulating layer, resulting in the same waveform in both even numbered frames and odd numbered frames, and a twofold frame period component seen in the prior art device is eliminated, thus preventing flicker regardless of the illuminance of the incident light.

In accordance with a sixth aspect of the invention, there is provided a reflective-type display device as in the fourth aspect of the invention, wherein:

an electrode voltage of the counter substrate is approximately equal to $V_C$, where a substrate bias voltage of an n-channel MOS transistor is $V_{B1}$, a substrate bias voltage of a p-channel MOS transistor is $V_{B2}$, and $V_C$ is a pixel electrode voltage such that a photocurrent in the n-channel MOS transistor and a photocurrent in the p-channel MOS transistor, both of which photocurrents being produced by an incident light, are made to be equal during a period in which the p-channel MOS transistor and the n-channel MOS transistor are switched off.

In the above-described display device, basically the same advantageous effects as in the display device of the fifth aspect of the invention are achieved.

In accordance with a seventh aspect of the invention, there is provided a reflective-type display device as in the fifth aspect of the invention, wherein:

a minimum modulation voltage $V_M$ is equal to or less than $(V_{B2}—V_C)$ and $(V_C—V_{B2})$, where the minimum modulation voltage $V_M$ is an absolute value of a voltage such that a reflectivity of 90 % of a maximum reflectivity $R_{max}$ is obtained in the case where a voltage-reflectivity characteristic of the light-modulating layer is a normally-off type, or that a reflectivity of 10 % of a maximum reflectivity $R_{max}$ is obtained in the case where a voltage-reflectivity characteristic of the light-modulating layer is a normally-on type.

In the above-described display device, an amplitude (dynamic range) of the applied voltage sufficient to drive the light modulating layer without trouble is ensured, and also an image with a sufficient contrast and luminance is achieved. The reason is described in the following. A photocurrent generated in the n-channel MOS transistor (referred to as $I_{P1}$) and a photocurrent generated in the p-channel MOS transistor (referred to as $I_{P2}$) are approximately proportional to a square root of $(V_S—V_{B1})$ and $(V_{B2}—V_S)$ respectively. Note that $V_S$ denotes a pixel electrode voltage.

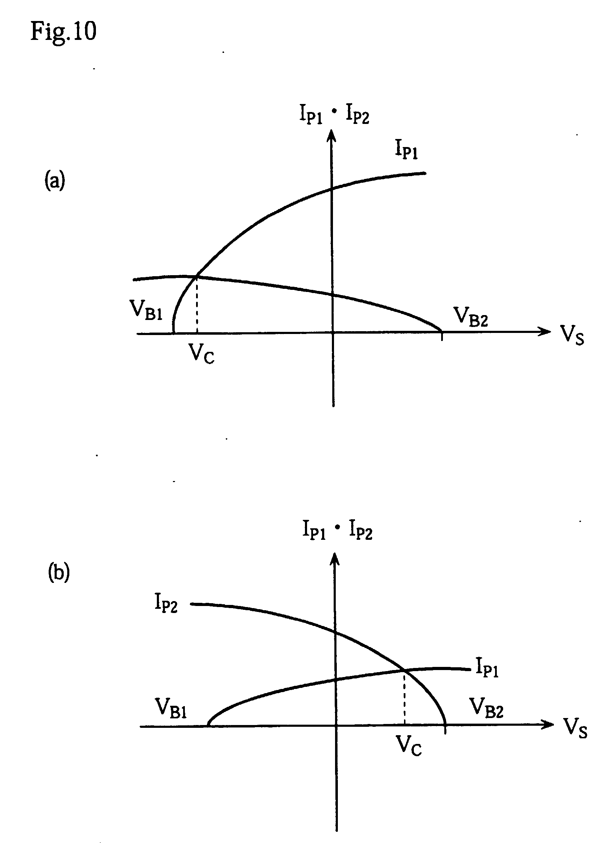

Here, if the proportional constants of $I_{P1}$ and $I_{P1}$ are extremely different, a value of $V_S$ at the intersectional point of the two curves becomes exceedingly close to either $V_{B1}$ or $V_{B2}$, and thus a sufficient dynamic range cannot be obtained (see Fig. 10).

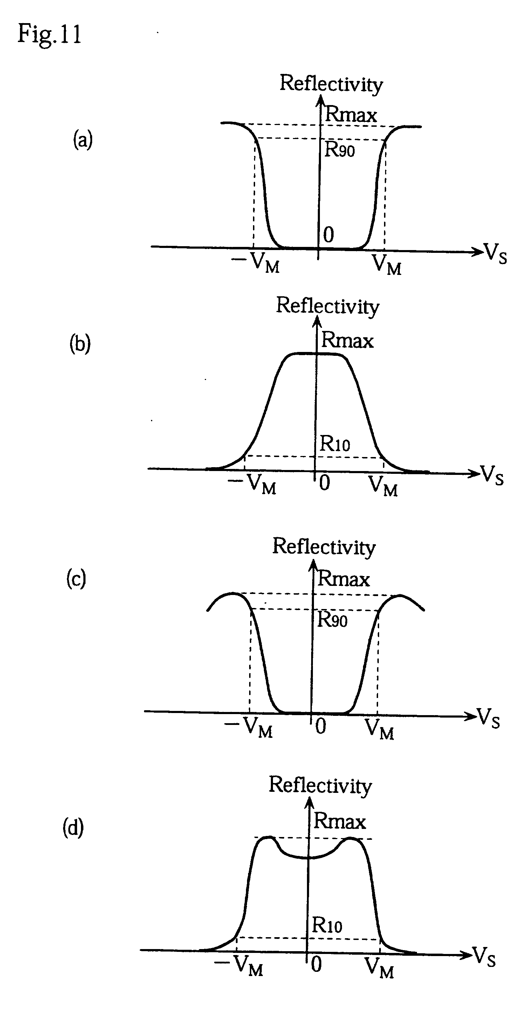

Here, in order to properly operate the MOS transistors, the pixel electrode voltage must be smaller than $V_{B2}$ and also larger than $V_{B1}$. Hence, an amplitude of the applied voltage to the light modulating layer cannot be made larger than the smaller one of ($V_{B2}$—$V_C$) and ($V_C$—$V_{B1}$). In addition, in order to obtain an image with a sufficient contrast and luminance, a reflectivity (luminance) must be varied with a sufficient range of bright to dark within a range of applied voltage to the light modulating layer. Accordingly, where a minimum voltage necessary to vary the reflectivity with a sufficient range of bright to dark is defined as a minimum modulation voltage $V_M$, when the minimum modulation voltage $V_M$ is made smaller than the smaller one of ($V_{B2}$—$V_C$) and ($V_C$—$V_{B1}$), the above-described condition can be satisfied (see Fig. 11), and an image with a sufficient contrast and luminance can be achieved.

In accordance with an eighth aspect of the invention, there is provided a reflective-type display device as in the sixth aspect of the invention, wherein:

a minimum modulation voltage $V_M$ is equal to or less than ($V_{B2}$—$V_C$) and ($V_C$—$V_{B2}$), where the minimum modulation voltage $V_M$ is an absolute value of a voltage such that a reflectivity of 90 % of a maximum reflectivity $R_{max}$ is obtained in the case where a voltage-reflectivity characteristic of the light-modulating layer is a normally-off type, or that a reflectivity of 10 % of a maximum reflectivity $R_{max}$ is obtained in the case where a voltage-reflectivity characteristic of the light-modulating layer is a normally-on type.

In the above-described display device, basically the same advantageous effects as in the display device of the seventh aspect of the invention are achieved.

In accordance with a ninth aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and
the reflective-type display device implements a display operation by applying a voltage between the transparent electrode and the pixel electrode such as to change an optical status of the light modulating layer in response to the applied voltage,
the reflective-type display device characterized in that:
the pixel electrode is composed of a MOS transistor in which one of a drain electrode and a source electrode is electrically connected to the signal line and the other one of the drain electrode and the source electrode is electrically connected to the pixel electrode,
in each pixel, a storage capacitor electrically connected to the pixel electrode is provided on the semiconductor substrate, and
in each pixel, a diode electrically connected to the pixel electrode is provided on the semiconductor substrate, the diode wherein a conduction type of a semiconductor region connected to the pixel electrode is different from a conduction type of a semiconductor region connected to the pixel electrode in the MOS transistor, and a photocurrent produced in the diode flows in a direction such that the photocurrent cancels a photocurrent produced in the pixel switching element.

In the above-described display device, when part of the incident light leaks from the gap between the pixel electrodes and reaches the diode, a photocurrent flowing in a direction such that a photocurrent generated in the MOS transistor is cancelled is produced. Thereby, a variation of the amount of electric charge in the pixel electrode caused by photocurrent can be minimized.

In addition, since a diode is employed as a photoelectric transducer for canceling the photocurrent generated in the pixel switching element in the above-described display device, the following advantageous effects are attained.

(1) In comparison with a device configuration employing MOS transistors as photoelectric transducers, the above-described device configuration can reduce an area occupied by the transducers in the semiconductor substrate and in addition, can eliminate scanning lines required in the device employing MOS transistors. As a result, extra flexibility is given to device-design and arrangement, and further reduction in device sizes can be made possible.

(2) By utilizing the extra flexibility in device design and arrangement, it is also made possible to increase a channel width of the MOS transistor. Thereby, a time constant of charging can be reduced, and additional capacitances can be ensured in the light modulating layer and the storage capacitor, making it possible to suppress a variation of effective values of applying voltage to the light modulating layer.

In accordance with a 10th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective type display device characterized in that:

the pixel electrode is composed of a MOS transistor in which one of a drain electrode and a source electrode is electrically connected to the signal line and the other one of the drain electrode and the source electrode is electrically connected to the pixel electrode,

in each pixel, a storage capacitor electrically connected to the pixel electrode is provided on the semiconductor substrate, and

in each pixel, a diode electrically connected to the pixel electrode is provided on the semiconductor substrate, the diode wherein a conduction type of a semiconductor region connected to the pixel electrode is different from a conduction type of a semiconductor region connected to the pixel electrode in the MOS transistor, and a photocurrent produced in the diode flows in a direction such that the photocurrent cancels a photocurrent produced in the pixel switching element.

In the above-described display device, basically the same advantageous effects as in the display device of the ninth aspect of the invention are achieved.

In accordance with an 11th aspect of the invention, there is provided a reflective-type display device as in the ninth aspect of the invention, wherein:

an electrode voltage of the counter substrate is approximately equal to $V_C$, where a substrate bias voltage of the MOS transistor is $V_{B1}$, an electrode voltage of an electrode in the diode not connected to the pixel electrode is $V_{B2}$, and $V_C$ is a pixel electrode voltage such that a photocurrent in the MOS transistor and a photocurrent in the diode, both which photocurrents being produced by an incident light, are made to be equal during a period in which an the MOS transistor is switched off.

In the above-described display device, basically the same advantageous effects as in the display device of the fifth aspect of the invention are achieved.

In accordance with a 12th aspect of the invention, there is provided a reflective-type display device as in the tenth aspect of the invention, wherein:

an electrode voltage of the counter substrate is approximately equal to $V_C$, where a substrate bias voltage of the MOS transistor is $V_{B1}$, an electrode voltage of an electrode in the diode not connected to the pixel electrode is $V_{B2}$, and $V_C$ is a pixel electrode voltage such that a photocurrent in the MOS transistor and a photocurrent in the diode, both which photocurrents being produced by an incident light, are made to be equal during a period in which an the MOS transistor is switched off.

In the above-described display device, basically the same advantageous effects as in the display device of the fifth aspect of the invention are achieved.

In accordance with a 13th aspect of the invention, there is provided a reflective-type display device as in the 11th aspect of the invention, wherein:

a minimum modulation voltage $V_M$ is equal to or less than $(V_{B2}—V_C)$ and $(V_C—V_{B2})$, where the minimum modulation voltage $V_M$ is an absolute value of a voltage such that a reflectivity of 90 % of a maximum reflectivity $R_{max}$ is

obtained in the case where a voltage-reflectivity characteristic of the light-modulating layer is a normally-off type, or that a reflectivity of 10 % of a maximum reflectivity $R_{max}$ is obtained in the case where a voltage-reflectivity characteristic of the light-modulating layer is a normally-on type.

In the above-described display device, by basically the operation as in the device of the foregoing seventh aspect of the invention, a dynamic range sufficient for driving the light modulating layer can be ensured, the MOS transistors can be properly operated, and an image with a sufficient contrast and high luminance can be achieved.

In accordance with a 14th aspect of the invention, there is provided a reflective-type display device as in the 12th aspect of the invention, wherein:

a minimum modulation voltage $V_M$ is equal to or less than ($V_{B2}$—$V_C$) and ($V_C$—$V_{B2}$), where the minimum modulation voltage $V_M$ is an absolute value of a voltage such that a reflectivity of 90 % of a maximum reflectivity $R_{max}$ is obtained in the case where a voltage-reflectivity characteristic of the light-modulating layer is a normally-off type, or that a reflectivity of 10 % of a maximum reflectivity $R_{max}$ is obtained in the case where a voltage-reflectivity characteristic of the light-modulating layer is a normally-on type.

In the above-described display device, basically the same advantageous effects as in the display device of the 13th aspect of the invention are achieved.

In accordance with a 15th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and the reflective-type display device implements a display operation by applying a voltage between the transparent electrode and the pixel electrode such as to change an optical status of the light modulating layer in response to the applied voltage, the reflective-type display device characterized in that: in each pixel, a storage capacitor electrically connected to the pixel electrode is provided on the semiconductor substrate, and the storage capacitor is formed of a thin film substantially composed of a ferroelectric material.

In this configuration, since a relative dielectric constant of a ferroelectric material is approximately 1000, which is far larger than the relative dielectric constant of $SiO_2$ in the prior art device being approximately 4, a far larger storage capacitance $C_{stg}$ can be obtained even if the geometrical shape of the capacitor is the same as that of the prior art device, and thus flicker can be suppressed.

In accordance with a 16th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and the reflective-type display device implements a display operation by applying a voltage between the transparent electrode and the pixel electrode such as to change an optical status of the light modulating layer in response to the applied voltage, the reflective-type display device characterized in that: in each pixel, a storage capacitor electrically connected to the pixel electrode is provided on the semiconductor substrate, and the storage capacitor is formed of a thin film substantially composed of a ferroelectric material.

In the above-described display device, basically the same advantageous effects as in the display device of the 15th aspect of the invention are achieved.

In accordance with a 17th aspect of the invention, there is provided a reflective-type display device as in the 15th aspect of the invention, wherein a common voltage line arranged approximately parallel to one of the signal line and the scanning line is provided, and one end of the storage capacitor is electrically connected to the common voltage line.

In the above-described display device, since a voltage at one end of the storage capacitor can be reliably fixed at a certain voltage, a voltage variation at the other end (an end which is connected to the pixel electrode) can be also reduced, which achieves further reduction of flicker.

In accordance with an 18th aspect of the invention, there is provided a reflective-type display device as in the 16th aspect of the invention, wherein a common voltage line arranged approximately parallel to one of the signal line and the scanning line is provided, and one end of the storage capacitor is electrically connected to the common voltage line.

In the above-described display device, basically the same advantageous effects as in the display device of the 17th aspect of the invention are achieved.

In accordance with a 19th aspect of the invention, there is provided a reflective-type display device as in the 15th aspect of the invention, wherein a thickness of the ferroelectric thin film is in the range of 2 nm to 5 μm.

The above-described display device is free from the occurrence of tunnel current (which becomes conspicuous when the thickness is smaller than 2 nm), and stable operation is realized. The above-described display device is also free from the detachment of film (which becomes conspicuous when the thickness is larger than 50 μm), and high production yield is achieved in the fabrication of reflective-type display devices.

In accordance with a 20th aspect of the invention, there is provided a reflective-type display device as in the 16th aspect of the invention, wherein a thickness of the ferroelectric thin film is in the range of 2 nm to 5 μm.

In the above-described display device, basically the same advantageous effects as in the display device of the 19th aspect of the invention are achieved.

In accordance with a 21st aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate, and

the storage capacitor is formed of a thin film substantially composed of one of $Ta_2O_5$, $Y_2O_3$, $HfO_2$, $TiO_2$, $ZrO_2$, and $Nb2O_5$.

In this display device, the relative dielectric constants of these materials are more than 10, which are far larger than the dielectric constant of $SiO_2$ used in prior art devices, which is approximately 4. Therefore, flicker is suppressed to a remarkable degree although it may not be as remarkable as in the case of the ferroelectric thin film in the 11th aspect of the invention.

In accordance with a 22nd aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate, and

the storage capacitor is formed of a thin film substantially composed of one of $Ta_2O_5$, $Y_2O_3$, $HfO_2$, $TiO_2$, $ZrO_2$, and $Nb2O_5$.

In the above-described display device, basically the same advantageous effects as in the display device of the 21st aspect of the invention are achieved.

In accordance with a 23rd aspect of the invention, there is provided a reflective-type display device as in the 21st aspect of the invention, wherein a common voltage line arranged approximately parallel to one of the signal line and the scanning line is provided, and one end of the storage capacitor is electrically connected to the common voltage line.

In accordance with a 24th aspect of the invention, there is provided a reflective-type display device as in the 22nd aspect of the invention, wherein a common voltage line arranged approximately parallel to one of the signal line and the scanning line is provided, and one end of the storage capacitor is electrically connected to the common voltage line.

In accordance with a 25th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate, and

a groove is provided on a surface of the semiconductor substrate, and at least a part of the storage capacitor is formed on a side wall of the groove.

By utilizing the side wall of the groove, the storage capacitor can be formed to have a large area, and thus flicker is suppressed.

In accordance with a 26th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate,

a groove is provided on a surface of the semiconductor substrate, and at least a part of the storage capacitor is formed on a side wall of the groove.

In the above-described display device, basically the same advantageous effects as in the display device of the 25th aspect of the invention are achieved.

In accordance with a 27th aspect of the invention, there is provided a reflective-type display device as in the 25th aspect of the invention, wherein a common voltage line arranged approximately parallel to one of the signal line and the scanning line is provided, and one end of the storage capacitor is electrically connected to the common voltage line.

In accordance with a 28th aspect of the invention, there is provided a reflective-type display device as in the 26th aspect of the invention, wherein a common voltage line arranged approximately parallel to one of the signal line and the scanning line is provided, and one end of the storage capacitor is electrically connected to the common voltage line.

In accordance with a 29th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate,

an upper surface of the pixel switching element is covered with an insulating layer, and

at least part of the storage capacitor is formed on the insulating layer.

In the above-described display device, the storage capacitor is formed even in an upper part of the pixel switching element, and thereby further larger capacitance value $C_{stg}$ is obtained. Thus, flicker is suppressed.

In accordance with a 30th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate, and

at least part of the storage capacitor is formed on the insulating layer.

In the above-described display device, basically the same advantageous effects as in the display device of the 29th aspect of the invention are achieved.

In accordance with a 31st aspect of the invention, there is provided a reflective-type display device as in the 29th aspect of the invention, wherein a common voltage line arranged approximately parallel to one of the signal line and the scanning line is provided, and one end of the storage capacitor is electrically connected to the common voltage line.

In accordance with a 32nd aspect of the invention, there is provided a reflective-type display device as in the 30th aspect of the invention, wherein a common voltage line arranged approximately parallel to one of the signal line and the scanning line is provided, and one end of the storage capacitor is electrically connected to the common voltage line.

In accordance with a 33rd aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate, and

a ratio W/L is in the range of 0.005 to 1.5, where W is a channel width and L is a channel length in the pixel switching element.

In the above-described display device, a photoleakage current between the drain and the source in the MOS transistor (this is omitted in expression (4)) is suppressed, and thus flicker is suppressed.

In accordance with a 34th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and the scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the insulating substrate, and

a ratio W/L is in the range of 0.005 to 1.5, where W is a channel width and L is a channel length in the pixel switching element.

In a reflective-type display device having such a configuration that a thin film transistor (TFT) as the pixel switching element is formed on, for example, a glass substrate as the insulating substrate, flicker is suppressed by the same operation as in the foregoing 33rd aspect of the invention.

In accordance with a 35th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate, and

a ratio W/L is in the range of 0.005 to 1.5, where W is a channel width and L is a channel length in the pixel switching element.

In the above-described display device, basically the same advantageous effects as in the display device of the 33rd aspect of the invention are achieved.

In accordance with a 36th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode electrically is disposed, the pixel electrode connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the insulating substrate, and

a ratio W/L is in the range of 0.005 to 1.5, where W is a channel width and L is a channel length in the pixel switching element.

In the above-described display device, basically the same advantageous effects as in the display device of the 34th aspect of the invention are achieved.

In accordance with a 37th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate, and

the storage capacitor has a layered structure in which N insulating layers are sandwiched between N+1 conductor layers or between N+1 semiconductor layers, and in the N+1 conductor layers or N+1 semiconductor layers, 2 to N layers constitutes a first electrode and the remaining layers constitutes a second electrode.

In the above-described display device, the storage capacitor can be formed in a multi-layered form, which can increase the capacitance by approximately N times as high, and thus flicker is suppressed.

In accordance with a 38th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and the scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the insulating substrate, and

the storage capacitor has a layered structure in which N insulating layers are sandwiched between N+1 conductor layers or between N+1 semiconductor layers, and in the N+1 conductor layers or N+1 semiconductor layers, 2 to N layers constitutes a first electrode and the remaining layers constitutes a second electrode.

In a reflective-type display device having such a configuration that a thin film transistor as the pixel switching element is formed on, for example, a glass substrate as the insulating substrate, flicker is suppressed by the same operation as in the foregoing 37th aspect of the invention.

In accordance with a 39th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and
the reflective-type display device implements a display operation by applying a voltage between the transparent electrode and the pixel electrode such as to change an optical status of the light modulating layer in response to the applied voltage,
the reflective-type display device characterized in that:
in each pixel, a storage capacitor electrically connected to the pixel electrode is provided on the semiconductor substrate, and
the storage capacitor has a layered structure in which N insulating layers are sandwiched between N+1 conductor layers or between N+1 semiconductor layers, and in the N+1 conductor layers or N+1 semiconductor layers, 2 to N layers constitutes a first electrode and the remaining layers constitutes a second electrode.

By the same operation as in the foregoing 41st aspect of the invention, flicker is suppressed.

In accordance with a 40th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode electrically is disposed, the pixel electrode connected to the signal line via the pixel switching element and the pixel electrode having a reflective surface formed on a surface thereof, and
the reflective-type display device implements a display operation by applying a voltage between the transparent electrode and the pixel electrode such as to change an optical status of the light modulating layer in response to the applied voltage,
the reflective-type display device characterized in that:
in each pixel, a storage capacitor electrically connected to the pixel electrode is provided on the insulating substrate, and
the storage capacitor has a layered structure in which N insulating layers are sandwiched between N+1 conductor layers or between N+1 semiconductor layers, and in the N+1 conductor layers or N+1 semiconductor layers, 2 to N layers constitutes a first electrode and the remaining layers constitutes a second electrode.

By the same operation as in the foregoing 37th aspect of the invention, flicker is suppressed.

In accordance with a 41st aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and
the reflective-type display device implements a display operation by applying a voltage between the transparent electrode and the pixel electrode such as to change an optical status of the light modulating layer in response to the applied voltage,
the reflective-type display device characterized in that:
in each pixel, a storage capacitor electrically connected to the pixel electrode is provided on the semiconductor substrate, and
one or more insulating layers is/are provided over the pixel switching element, the one or more insulating layers including at least one insulating layer composed of an organic insulator containing carbon particles.

In the above-described display device, the incident light is effectively blocked by the organic insulator containing carbon particles, and thereby photoleakage current is reduced, resulting in the suppression of flicker.

In accordance with a 42nd aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and the scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the insulating substrate, and

one or more insulating layers is/are provided over the pixel switching element, the one or more insulating layers including at least one insulating layer composed of an organic insulator containing carbon particles.

In a reflective-type display device having such a configuration that a thin film transistor (TFT) as the pixel switching element is formed on, for example, a glass substrate as the insulating substrate, flicker is suppressed by the same operation as in the foregoing 41st aspect of the invention.

In accordance with a 43rd aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate, and

one or more insulating layers is/are provided over the pixel switching element, the one or more insulating layers including at least one insulating layer composed of an organic insulator containing carbon particles.

By the same operation as in the foregoing 41st aspect of the invention, flicker is suppressed.

In accordance with a 44th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode electrically is disposed, the pixel electrode connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the insulating substrate, and

one or more insulating layers is/are provided over the pixel switching element, the one or more insulating layers including at least one insulating layer composed of an organic insulator containing carbon particles.

By the same operation as in the foregoing 42nd aspect of the invention, flicker is suppressed.

In accordance with a 45th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate,

a layer of conductor or semiconductor is formed over the pixel switching element so that an insulating layer is disposed between the pixel switching element and the layer of conductor or semiconductor, the layer of conductor or semiconductor constituting a light blocking layer separately provided for each pixel, and

a distance between a foot of a perpendicular dropped from a center of a channel in the pixel switching element to a plane of the light blocking layer and a centroid of the light blocking layer is equal to or less than 2/3 of a square root of an area of the light blocking layer.

In the above-described display device, the pixel switching element is located under the center of the light blocking layer, and thereby a leaked light from the gap between the pixel electrodes does not easily reach the pixel switching element. As a result, photoleakage current is reduced, and accordingly flicker is suppressed.

In accordance with a 46th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and the scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the insulating substrate,

a layer of conductor or semiconductor is formed over the pixel switching element so that an insulating layer is disposed between the pixel switching element and the layer of conductor or semiconductor, the layer of conductor or semiconductor constituting a light blocking layer separately provided for each pixel, and

a distance between a foot of a perpendicular dropped from a center of a channel in the pixel switching element to a plane of the light blocking layer and a centroid of the light blocking layer is equal to or less tan 2/3 of a square root of an area of the light blocking layer.

By the same operation as in the foregoing 45th aspect of the invention, flicker is suppressed.

In accordance with a 47th aspect of the invention, there is provided a reflective-type display device comprising a semiconductor substrate, a transparent counter substrate having a transparent electrode, a light-modulating layer disposed between the semiconductor substrate and the counter substrate, wherein:

on the semiconductor substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode is disposed, the pixel electrode electrically connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the semiconductor substrate,

a layer of conductor or semiconductor is formed over the pixel switching element so that an insulating layer is disposed between the pixel switching element and the layer of conductor or semiconductor, the layer of conductor or semiconductor constituting a light blocking layer separately provided for each pixel, and

a distance between a foot of a perpendicular dropped from a center of a channel in the pixel switching element to a plane of the light blocking layer and a centroid of the light blocking layer is equal to or less than 2/3 of a square root of an area of the light blocking layer.

By the same operation as in the foregoing 45th aspect of the invention, flicker is suppressed.

In accordance with a 48th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode electrically is disposed, the pixel electrode connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

in each pixel, a storage capacitor electrically connected to the pixel electrode is provided on the insulating substrate,

a layer of conductor or semiconductor is formed over the pixel switching element so that an insulating layer is disposed between the pixel switching element and the layer of conductor or semiconductor, the layer of conductor or semiconductor constituting a light blocking layer separately provided for each pixel, and

a distance between a foot of a perpendicular dropped from a center of a channel in the pixel switching element to a plane of the light blocking layer and a centroid of the light blocking layer is equal to or less than 2/3 of a square root of an area of the light blocking layer.

By the same operation as in the foregoing 45th aspect of the invention, flicker is suppressed.

In accordance with a 49th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and the scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and

the reflective-type display device implements a display operation by applying a voltage between the transparent electrode and the pixel electrode such as to change an optical status of the light modulating layer in response to the applied voltage,

the reflective-type display device characterized in that:

an antireflection-treated layer is formed on a lower surface of the insulating substrate.

In the above-described display device, in the light incoming from the side of the counter substrate, a light passing through the transparent insulating substrate is reflected at the lower surface (back surface) of the insulating substrate, and thereby the light which enters the pixel switching element can be reduced. As a result, flicker is suppressed.

In accordance with a 50th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode electrically is disposed, the pixel electrode connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

an antireflection-treated layer is formed on a lower surface of the insulating substrate.

In addition to the advantageous effects in the foregoing 49th aspect of the invention, it is made possible to reduce a thickness of the reflective-type display device since it is unnecessary to separately provide a reflective layer.

In accordance with a 51st aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and the scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and

the reflective-type display device implements a display operation by applying a voltage between the transparent electrode and the pixel electrode such as to change an optical status of the light modulating layer in response to the applied voltage,

the reflective-type display device characterized in that:

a film plate provided with an antireflection-treated layer on one of the surfaces of the film plate is attached on a lower surface of the insulating substrate by an adhesive layer provided with the other surface of the film plate, and reflective indices of the insulating substrate, the adhesive layer, and the film plate are approximately equal.

In this device as well, flicker can be reduced for the same reason as in the 49th aspect of the invention. In addition, since the antireflection treated layer is formed on the film plate in advance, the film plate with the antireflection treated layer is attached on the lower surface of the insulating substrate in the device fabrication, which makes the fabrication of the device simpler. Furthermore, attaching the film plate can be implemented after testing whether the device (except the film plate) is good or bad, and therefore it is unnecessary to destroy an entire device having the film plate, achieving cost reduction.

In accordance with a 52nd aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode electrically is disposed, the pixel electrode connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

a film plate provided with an antireflection-treated layer on one of the surfaces of the film plate is attached on a lower surface of the insulating substrate by an adhesive layer provided with the other surface of the film plate, and reflective indices of the insulating substrate, the adhesive layer, and the film plate are approximately equal.

In addition to the advantageous effects in the foregoing 51st aspect of the invention, it is made possible to reduce a thickness of the reflective-type display device since it is unnecessary to separately provide a reflective layer.

In accordance with a 53rd aspect of the invention, there is provided a reflective-type display device as in the 51st aspect of the invention, wherein the film plate has a function for absorbing a part of an incident light.

In the above-described display device, further reduction of flicker is achieved since the incident light is absorbed by the film plate.

In accordance with a 54th aspect of the invention, there is provided a reflective-type display device as in the 52nd aspect of the invention, wherein the film plate has a function for absorbing a part of an incident light.

In the above-described display device, substantially the same advantageous effects as in the display device of the 53rd aspect of the invention are achieved.

In accordance with a 55th aspect of the invention, there is provided a reflective-type display device as in the 53rd aspect of the invention, wherein the film plate is a polarizing plate.

In the above-described display device, in a light entering the insulating substrate, a polarized light component parallel to the absorbing axis of the polarizing plate is at first absorbed by the polarizing plate. A component in a direction of transmitting axis is allowed to pass through the insulating substrate. The light coming out of the insulating substrate reflects at an object outside the device, for example, at a casing enclosing the device, and reenters the insulating substrate. Here, the direction of polarization is in most cases rotated by the reflection at the object outside the device, and therefore the reflected light is absorbed by the insulating substrate. Hence, the incident light does not reach the pixel switching element formed on the insulating substrate, and thus, the occurrence of flicker can be prevented.

In accordance with a 56th aspect of the invention, there is provided a reflective-type display device as in the 54th aspect of the invention, wherein the film plate is a polarizing plate.

In the above-described display device, substantially the same advantageous effects as in the display device of the 55th aspect of the invention are achieved.

In accordance with a 57th aspect of the invention, there is provided a reflective-type display device as in the 53rd aspect of the invention, wherein the film plate comprises a layered structure composed of a polarizing plate and a retardation plate.

When the incident light passes through the retardation plate, the phase is shifted. Therefore, it is possible to make a component of the incident light be in agreement with the absorbing axis of the polarizing plate by for example adjusting the retardation of the retardation plate, and thereby the incident light can be efficiently absorbed.

In accordance with a 58th aspect of the invention, there is provided a reflective-type display device as in the 54th aspect of the invention, wherein the film plate comprises a layered structure composed of a polarizing plate and a retardation plate.

When the incident light passes through the retardation plate, the phase is shifted. Therefore, it is possible to make a component of the incident light be in agreement with the absorbing axis of the polarizing plate by for example adjusting the retardation of the retardation plate, and thereby the incident light can be efficiently absorbed.

In accordance with a 59th aspect of the invention, there is provided a reflective-type display device as in the 57th aspect of the invention, wherein a retardation of the retardation plate is approximately $\lambda/4$, where $\lambda$ is a wavelength of the incident light.

Among the incident light components passing through the insulting substrate, a polarized light component parallel to the absorbing axis of the polarizing plate is absorbed by the polarizing plate. The light component parallel to the transmitting axis is allowed to pass through. The retardation plate shifts the phase by $\lambda/4$. When the shifted light reflects outside the device and reenters the insulating substrate, the retardation plate again shifts the phase by $\lambda/4$. Consequently, the light reentering the polarizing plate has a phase of $\lambda/2$, which is in agreement with the absorbing axis of the polarizing plate. As a result, the light is again absorbed in the polarizing plate. Thus, in the above-described display device, the light reflected outside the device is also absorbed by the polarizing plate, and thereby it is made possible to prevent a variation of pixel electrode voltages caused by the reflected light at the back surface of the insulating substrate.

In accordance with a 60th aspect of the invention, there is provided a reflective-type display device as in the 58th aspect of the invention, wherein a retardation of the retardation plate is approximately $\lambda/4$, where $\lambda$ is a wavelength of the incident light.

In the above-described display device, substantially the same advantageous effects as in the display device of the 59th aspect of the invention are achieved.

In accordance with a 61st aspect of the invention, there is provided a reflective-type display device as in the 55th aspect of the invention, wherein an incident light is a polarized light, and an absorbing axis of the polarizing plate is approximately equal to a direction of polarization of the incident light.

By making the absorbing axis of the polarizing plate approximately in agreement with the direction of polarization of the polarizing plate, it is achieved that most of the incident light is absorbed by the polarizing plate.

In accordance with a 62nd aspect of the invention, there is provided a reflective-type display device as in the 56th aspect of the invention, wherein an incident light is a polarized light, and an absorbing axis of the polarizing plate is approximately equal to a direction of polarization of the incident light.

In the above-described display device, substantially the same advantageous effects as in the display device of the 61st aspect of the invention are achieved.

In accordance with a 63rd aspect of the invention, there is provided a reflective-type display device as in the 57th aspect of the invention, wherein an incident light is a polarized light, and an absorbing axis of the polarizing plate is approximately equal to a direction of polarization of the incident light.

In the above-described display device, substantially the same advantageous effects as in the display device of the 61st aspect of the invention are achieved.

In accordance with a 64th aspect of the invention, there is provided a reflective-type display device as in the 58th aspect of the invention, wherein an incident light is a polarized light, and an absorbing axis of the polarizing plate is approximately equal to a direction of polarization of the incident light.

In the above-described display device, substantially the same advantageous effects as in the display device of the 61st aspect of the invention are achieved.

In accordance with a 65th aspect of the invention, there is provided a reflective-type display device as in the 59th aspect of the invention, wherein an incident light is a polarized light, and an absorbing axis of the polarizing plate is approximately equal to a direction of polarization of the incident light.

In the above-described display device, substantially the same advantageous effects as in the display device of the 61st aspect of the invention are achieved.

In accordance with a 66th aspect-of the invention, there is provided a reflective-type display device as in the 60th aspect of the invention, wherein an incident light is a polarized light, and an absorbing axis of the polarizing plate is approximately equal to a direction of polarization of the incident light.

In the above-described display device, substantially the same advantageous effects as in the display device of the 61st aspect of the invention are achieved.

In accordance with a 67th aspect of the invention, there is provided a reflective-type display device as in the 55th aspect of the invention, wherein an incident light is a polarized light, the light modulating layer is a twisted-nematic mode liquid crystal layer, and an absorbing axis of the polarizing plate is approximately equal to such a direction that an angle of twist of the liquid crystal is added to a direction of polarization of the polarized light.

In the above-described display device, the direction of polarization of the light entering the polarizing plate becomes the same as the absorbing axis of the polarizing plate, and thereby it is achieved that most of the incident light is absorbed by the polarizing plate.

In accordance with a 68th aspect of the invention, there is provided a reflective-type display device as in the 56th aspect of the invention, wherein an incident light is a polarized light, the light modulating layer is a twisted-nematic mode liquid crystal layer, and an absorbing axis of the polarizing plate is approximately equal to such a direction that an angle of twist of the liquid crystal is added to a direction of polarization of the polarized light.

In the above-described display device, substantially the same advantageous effects as in the display device of the 67th aspect of the invention are achieved.

In accordance with a 69th aspect of the invention, there is provided a reflective-type display device as in the 57th aspect of the invention, wherein an incident light is a polarized light, the light modulating layer is a twisted-nematic mode liquid crystal layer, and an absorbing axis of the polarizing plate is approximately equal to such a direction that an angle of twist of the liquid crystal is added to a direction of polarization of the polarized light.

In the above-described display device, substantially the same advantageous effects as in the display device of the 67th aspect of the invention are achieved.

In accordance with a 70th aspect of the invention, there is provided a reflective-type display device as in the 58th aspect of the invention, wherein an incident light is a polarized light, the light modulating layer is a twisted-nematic mode liquid crystal layer, and an absorbing axis of the polarizing plate is approximately equal to such a direction that an angle of twist of the liquid crystal is added to a direction of polarization of the polarized light.

In the above-described display device, substantially the same advantageous effects as in the display device of the 67th aspect of the invention are achieved.

In accordance with a 71st aspect of the invention, there is provided a reflective-type display device as in the 59th aspect of the invention, wherein an incident light is a polarized light, the light modulating layer is a twisted-nematic mode liquid crystal layer, and an absorbing axis of the polarizing plate is approximately equal to such a direction that an angle of twist of the liquid crystal is added to a direction of polarization of the polarized light.

In the above-described display device, substantially the same advantageous effects as in the display device of the 67th aspect of the invention are achieved.

In accordance with a 72nd aspect of the invention, there is provided a reflective-type display device as in the 60th aspect of the invention, wherein an incident light is a polarized light, the light modulating layer is a twisted-nematic mode liquid crystal layer, and an absorbing axis of the polarizing plate is approximately equal to such a direction that an angle of twist of the liquid crystal is added to a direction of polarization of the polarized light.

In the above-described display device, substantially the same advantageous effects as in the display device of the 67th aspect of the invention are achieved.

In accordance with a 73rd aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and the scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and
the reflective-type display device implements a display operation by applying a voltage between the transparent electrode and the pixel electrode such as to change an optical status of the light modulating layer in response to the applied voltage,
the reflective-type display device characterized in that:
a light absorbing layer is formed on a lower surface of the insulating substrate.

In the above-described display device, it is achieved that the incident light passing through the insulating substrate is led to the light absorbing layer without being reflected at the lower surface (back surface) of the insulating substrate, and the light is completely absorbed in the light absorbing layer.

In accordance with a 74th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode electrically is disposed, the pixel electrode connected to the signal line via the pixel switching element and the pixel electrode having a reflective surface formed on a surface thereof, and
the reflective-type display device implements a display operation by applying a voltage between the transparent electrode and the pixel electrode such as to change an optical status of the light modulating layer in response to the applied voltage,
the reflective-type display device characterized in that:
a light absorbing layer is formed on a lower surface of the insulating substrate.

In the above-described display device, it is achieved that the incident light passing through the insulating substrate is led to the light absorbing layer without being reflected at the lower surface (back surface) of the insulating substrate, and the light is completely absorbed in the light absorbing layer.

In accordance with a 75th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and the scanning lines arranged in a matrix such as to correspond to a matrix of a pixel arrangement, and over the pixel switching element, a pixel electrode and a reflective layer are formed so that the reflective layer is layered over the pixel electrode, the pixel electrode provided for each pixel and electrically connected to the signal line via the pixel switching element, and
the reflective-type display device implements a display operation by applying a voltage between the transparent electrode and the pixel electrode such as to change an optical status of the light modulating layer in response to the applied voltage,
the reflective-type display device characterized in that:
a film plate in which a material for absorbing an incident light is dispersed is attached on a lower surface of the insulating substrate by an adhesive layer interposed between the film plate and the insulating substrate, the material including one of a dye, a pigment, and a colorant, and
reflective indices of the insulating substrate, the adhesive layer, and the film plate are approximately equal.

In the above-described display device, the incident light is absorbed by dye and the like when it passes through the film plate containing dye and the like. Thereby, interfacial reflection at the back surface of the insulating substrate can be prevented.

In accordance with a 76th aspect of the invention, there is provided a reflective-type display device comprising a transparent insulating substrate, a transparent counter substrate having a transparent electrode, a light-modulating layer disposed between the insulating substrate and the counter substrate, wherein:

on the insulating substrate, a pixel switching element is formed at each intersectional position of a plurality of signal lines and a plurality of scanning lines, the signal lines and scanning lines being arranged in a matrix so as to correspond to a matrix of a pixel arrangement, and over the pixel switching element, a pixel electrode electrically is disposed, the pixel electrode connected to the signal line via the pixel switching element and the pixel electrode having a reflective surface formed on a surface thereof, and

the reflective-type display device implements a display operation by applying a voltage between the transparent electrode and the pixel electrode such as to change an optical status of the light modulating layer in response to the applied voltage,

the reflective-type display device characterized in that:

a film plate in which a material for absorbing an incident light is dispersed is attached on a lower surface of the insulating substrate by an adhesive layer interposed between the film plate and the insulating substrate, the material including one of a dye, a pigment, and a colorant,

reflective indices of the insulating substrate, the adhesive layer, and the film plate are approximately equal.

In the above-described display device, the incident light is absorbed by dye and the like when it passes through the film plate containing dye and the like. Thereby, interfacial reflection at the back surface of the insulating substrate can be prevented.

In accordance with a 77th aspect of the invention, there is provided an image device comprising a light source, a semitransparent mirror, and a liquid crystal light valve, wherein the liquid crystal light valve is composed of a reflective-type display device as in the first aspect of the invention.

By the above-described configuration, an image device that achieves high quality images is realized.

In accordance with a 78th aspect of the invention, there is provided an image device comprising a light source, a semitransparent mirror, and a liquid crystal light valve, wherein the liquid crystal light valve is composed of a reflective-type display device as in the second aspect of the invention.

By the above-described configuration, an image device that achieves high quality images is realized.

## BRIEF DESCRIPTION OF THE DRAWINGS

Fig. 1 is a schematic view illustrating a construction of a liquid crystal projector in which a reflective-type LCD device according to the present invention is used.

Fig. 2 is a vertical sectional view of a reflective-type LCD device in accordance with Embodiment 1.

Fig. 3 is a horizontal sectional view of a reflective-type LCD device illustrating an arrangement of MOS transistors.

Fig. 4 is a horizontal sectional view of a reflective-type LCD device illustrating a wiring arrangement of signal lines, common voltage lines, scanning lines and so forth.

Fig. 5 is a circuit diagram illustrating an equivalent circuit of one single pixel of a reflective-type LCD device in accordance with Embodiment 1.

Fig. 6 is a waveform chart illustrating an operation of a reflective-type LCD device in accordance with Embodiment 1.

Fig. 7 is a diagram for deriving expression (15).

Figs. 8(a) and 8(b) are diagrams illustrating a relationship of a photocurrent and a pixel electrode voltage $V_S$ in a reflective-type LCD device in accordance with Embodiment 1.

Fig. 9 is a waveform chart showing a response waveform of liquid crystal in a reflective-type LCD device in accordance with Embodiment 1.

Figs. 10(a) and 10(b) are diagrams illustrating a relationship of photocurrents $I_{P1}$ and $I_{P2}$ and bias voltages $V_{B1}$ and $V_{B2}$.

Figs. 11(a) to 11(d) are diagrams illustrating a relationship of a minimum modulation voltage $V_M$ and a reflective rate (luminance).

Fig. 12 is a vertical sectional view of a reflective-type LCD device in accordance with Embodiment 2.

Fig. 13 is a circuit diagram showing an equivalent circuit for one single pixel of a reflective-type LCD device in accordance with Embodiment 2.

Fig. 14 is a vertical sectional view of a reflective-type LCD device in accordance with Embodiment 3.

Fig. 15 is an enlarged view of a portion A1 in Fig. 14.

Fig. 16 is a vertical sectional view of a reflective-type LCD device in accordance with Embodiment 5.

Fig. 17 is a vertical sectional view illustrating another example of a configuration in which a capacitance is obtained by a side wall of a groove.

Fig. 18 is a vertical sectional view of a reflective-type LCD device in accordance with Embodiment 4.

Fig. 19 a vertical sectional view illustrating further another example of a configuration in which a capacitance is obtained by a side wall of a groove.

Fig. 20 is a vertical sectional view of a reflective-type LCD device in accordance with Embodiment 7.

Fig. 21 is a cross-sectional view taken along the line X3-X3 in Fig. 20.

Fig. 22 is a cross-sectional view taken along the line X4-X4 in Fig. 20.

Fig. 23 is a cross-sectional view taken along the line X5-X5 in Fig. 20.

Fig. 24 is a circuit diagram illustrating an equivalent circuit of one single pixel of a reflective-type LCD device in accordance with Embodiment 7.

Fig. 25 is a vertical sectional view of a reflective-type LCD device in accordance with Embodiment 8.

Fig. 26 is an enlarged view of a portion A2 in Fig. 25.

Fig. 27 is a horizontal sectional view of a reflective-type LCD device in accordance with Embodiment 9.

Fig. 28 is a vertical sectional view of a reflective-type LCD device in accordance with Embodiment 9.

Fig. 29 is an enlarged view of a portion A3 in Fig. 28.

Fig. 30 is a vertical sectional view illustrating another example of capacitance retention in a multi-layer configuration.

Fig. 31 is a vertical sectional view illustrating further another example of capacitance retention in a multi-layer configuration.

Fig. 32 is a vertical sectional view of a reflective-type LCD device in accordance with Embodiment 10.

Fig. 33 is a horizontal sectional view of a reflective-type LCD device in accordance with Embodiment 11.

Fig. 34 is a diagrammatic view for illustrating a relationship of locations of a light blocking layer 208 and a channel 225.

Fig. 35 is a plan view of a reflective-type LCD device in accordance with Embodiment 12.

Fig. 36 is an enlarged view of a portion A4 in Fig. 35.

Fig. 37 is a cross-sectional view taken along the line Y1-Y1 in Fig. 35.

Fig. 38 is a plan view of a reflective-type LCD device in accordance with Embodiment 13.

Fig. 39 is an enlarged view of a portion A5 in Fig. 38.

Fig. 40 is a cross-sectional view taken along the line Y2-Y2 in Fig. 38.

Fig. 41 is a plan view of a reflective-type LCD device in accordance with Embodiment 14.

Fig. 42 is an enlarged view of a portion A6 in Fig. 41.

Fig. 43 is a cross-sectional view taken along the line Y3-Y3 in Fig. 41.

Fig. 44 is a plan view of a reflective-type LCD device in accordance with Embodiment 15.

Fig. 45 is an enlarged view of a portion A7 in Fig. 44.

Fig. 46 is a cross-sectional view taken along the line Y4-Y4 in Fig. 44.

Fig. 47 is a plan view of a reflective-type LCD device in accordance with Embodiment 16.

Fig. 48 is an enlarged view of a portion A8 in Fig. 47.

Fig. 49 is a cross-sectional view taken along the line Y5-Y5 in Fig. 47.

Fig. 50 is a plan view of a reflective-type LCD device in accordance with Embodiment 17.

Fig. 51 is an enlarged view of a portion A9 in Fig. 50.

Fig. 52 is a cross-sectional view taken along the line Y6-Y6 in Fig. 50.

Fig. 53 is a vertical sectional view of a prior-art reflective-type LCD device.

Fig. 54 is a circuit diagram showing an equivalent circuit of one single pixel of a prior-art reflective-type LCD device.

Fig. 55 is a waveform chart for illustrating an operation of a prior-art reflective-type LCD device.

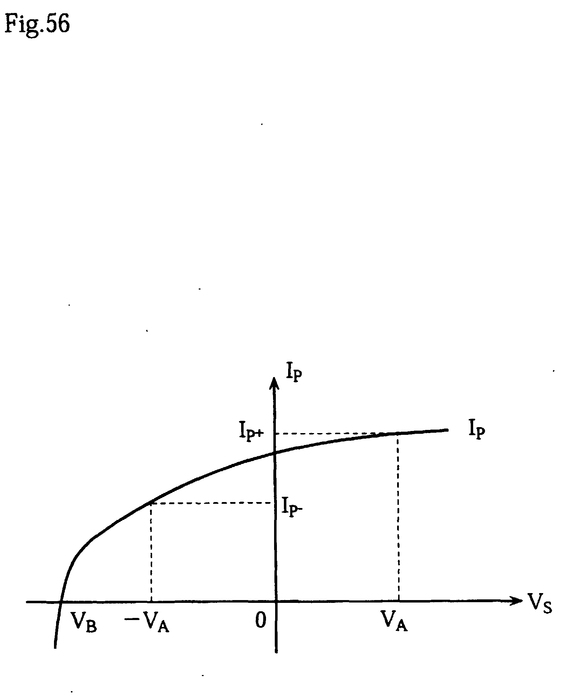

Fig. 56 is a diagram illustrating a relationship of a photocurrent and a pixel electrode voltage $V_S$.

Fig. 57 is a waveform chart illustrating a response waveform of liquid crystal in a prior-art reflective-type LCD device.

## BEST MODE FOR CARRYING OUT THE INVENTION

EMBODIMENT 1

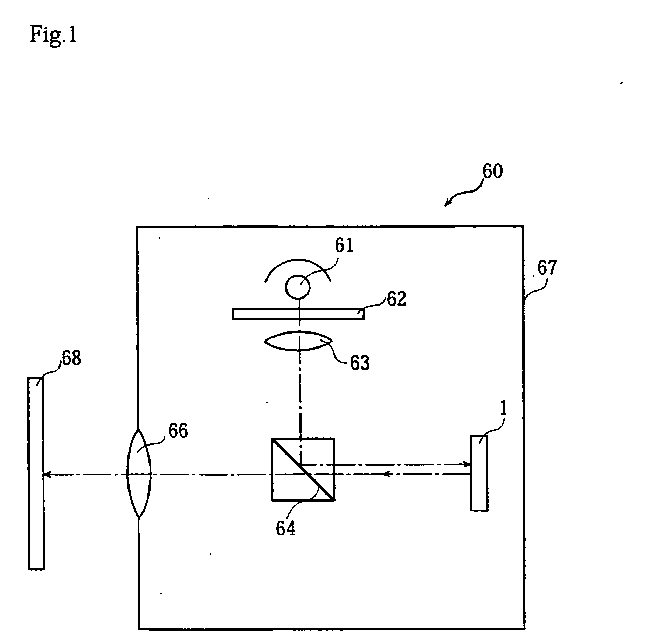

Fig. 1 schematically shows a cross sectional view of a liquid crystal projector employing a reflective-type liquid crystal display (LCD) device according to the present invention. A liquid crystal projector 60 comprises a light source 61, a color filter 62, a condenser lens 63, a semi-transparent mirror 64, a reflective-type LCD device 1, and a projection lens 66. These components such as the light source 61, the reflective-type LCD device 1 and so forth are enclosed in a casing 67.

An operation of the liquid crystal projector is briefly described below. A light from the light source 61 is projected to a semi-transparent mirror via the color filter 62 and the condenser lens 63. Then, an oscillatory wave perpendicular to the paper surface of Fig. 1 is reflected by the semi-transparent mirror 64, guided to the reflective-type LCD device 1, and reflected by the reflective-type LCD device 1. Here, a direction of oscillation of the reflected light is inverted. Thereby the reflected light from the LCD device 1 is allowed to pass through the semi-transparent mirror 64, and then guided to a screen 68 via the projection lens 66, and a predetermined image is projected thereon.

It is to be noted that Fig. 1 shows only the construction for one of the primary colors of R (red), G (green), and B (blue).

Now, a configuration and a producing method of the foregoing reflective LCD device 1 are detailed below.

Configuration of a reflective-type LCD device

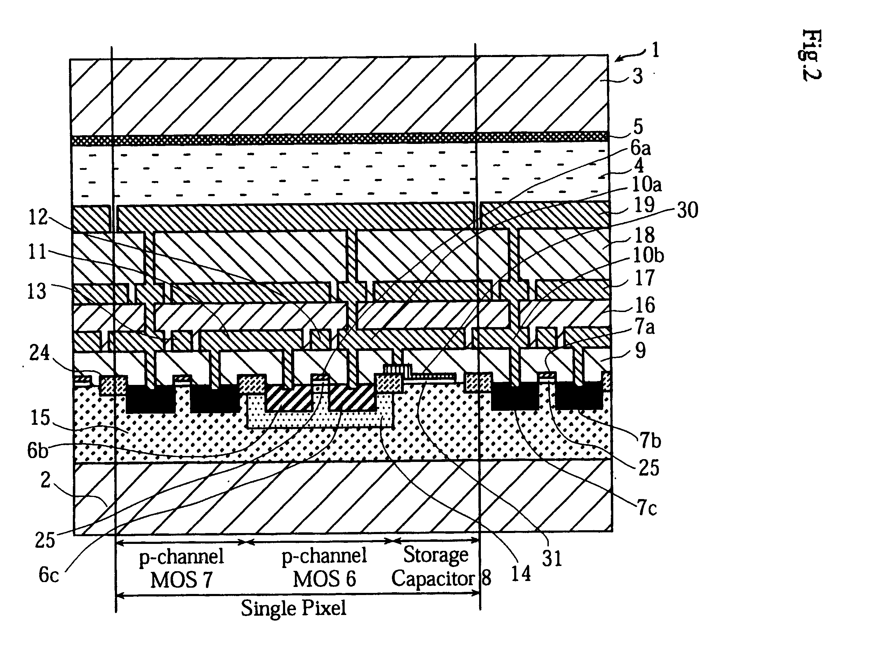

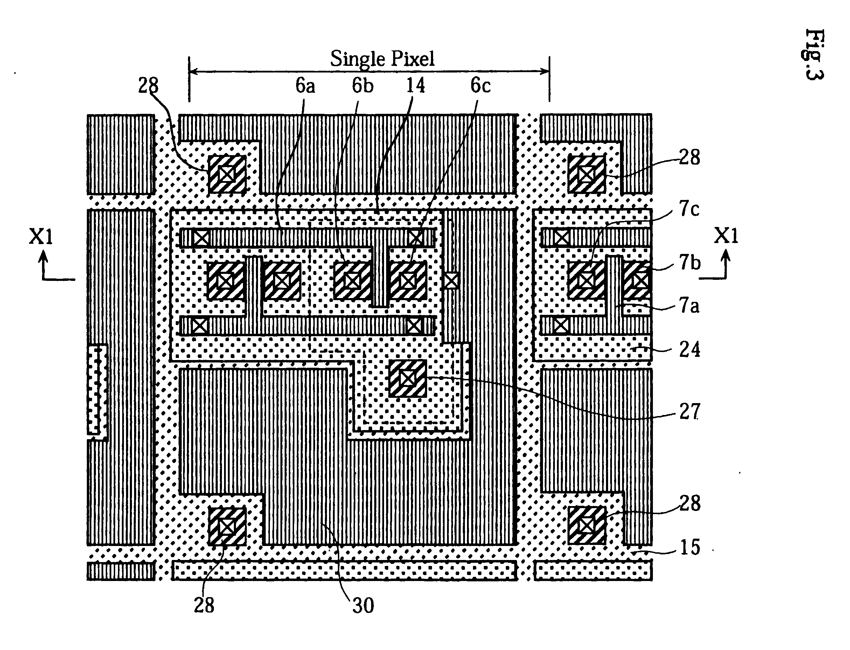

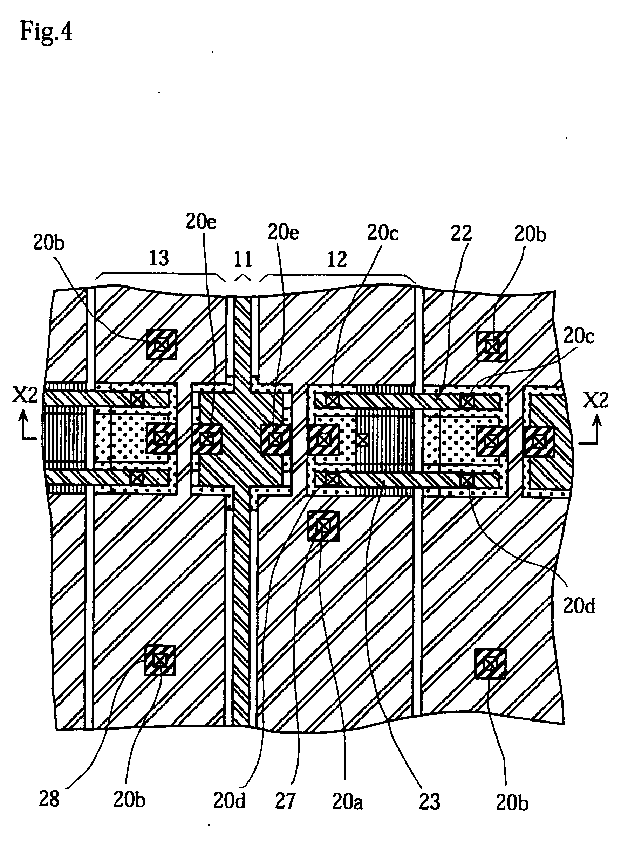

Fig.2 shows a vertical sectional view of a reflective-type LCD device in accordance with Embodiment 1, Fig. 3 shows a horizontal sectional view of the reflective-type LCD device illustrating an arrangement of MOS transistors, and Fig. 4 shows a horizontal sectional view of the reflective-type LCD device illustrating a wiring arrangement of signal lines, scanning lines and so forth. Fig. 2 is a cross sectional view taken along the line X1-X1 in Fig. 3, and likewise Fig. 2 is a cross sectional view taken along the line X2-X2 in Fig. 4. A reflective-type LCD device 1 in accordance with Embodiment 1 comprises a p-type crystalline silicon substrate 2, a transparent counter substrate 3 opposed to the p-type crystalline silicon substrate 2, and a liquid crystal 4 enclosed between the p-type crystalline silicon substrate 2 and the counter substrate 3. The counter substrate 3 is a glass substrate. On the inner surface of the counter substrate 3, an ITO (indium-titanium oxide) electrode 5 is formed. On the silicon substrate 2, a pair of an n-channel MOS transistor 6 and a p-channel MOS transistor 7, a storage capacitor 8 are formed. Over these MOS transistors 6, 7, and the storage capacitor 8, there is formed a first insulating layer 9, and on the first insulating layer 9, there is formed a first light blocking layer designated by the reference numerals 10a and 10b, a signal line 11, scanning lines 22, 23 (see Fig. 4), and common voltage lines 12, 13. The first light blocking layer designated by the reference numerals 10a and 10b is so formed as to overlay the source of the MOS transistors 6, 7. The scanning line 22 (voltage $V_{G1}$) is, as shown in Figs. 3 and 4, connected to a gate 6a of the n-channel MOS transistor 6 via a contact hole 20c. The scanning line 23 (voltage $V_{G2}$) is, as shown in Figs. 3 and 4, connected to a gate 7a of the p-channel MOS transistor 7 via a contact hole 20d. The signal line 11 is, as shown in Figs. 3 and 4, commonly connected to drains 6b, 7b of the MOS transistors 6, 7. The common voltage line 12 is, as shown in Figs. 3 and 4, connected to a p-well 14 via a p-well contact region 27 through the contact hole 20a. This enables the p-well 14 to retain a constant voltage ($V_{B1}$). The common voltage line 13 is, as shown in Figs. 3 and 4, connected to an n-well 15 via an n-well contact region 28 through a contact hole 20b. This enables the n-well 15 to retain a constant voltage ($V_{B2}$). Over these first light blocking layer 10a, 10b, signal line 11, scanning lines 22, 23, and common voltage lines 12, 13, there is formed a second insulating layer 16, and over the second insulating layer 16 there is formed a second light blocking layer 17. Over the second light blocking layer 17, a planarizing layer 18 is formed, and over the planarizing layer 18, a pixel electrode 19 of which surface is formed to be a reflective surface (hereinafter referred to as a reflective pixel electrode) is formed. The above-mentioned storage capacitor 8 is composed of a capacitive electrode 30, a capacitive oxide layer 31 and a portion of the n-well 15. Note that a retained capacitance of the storage capacitor 8 is denoted by $C_{stg}$. In Fig. 2, the reference numeral 24 denotes a field oxide layer, and the numeral 25 denotes an oxide layer.

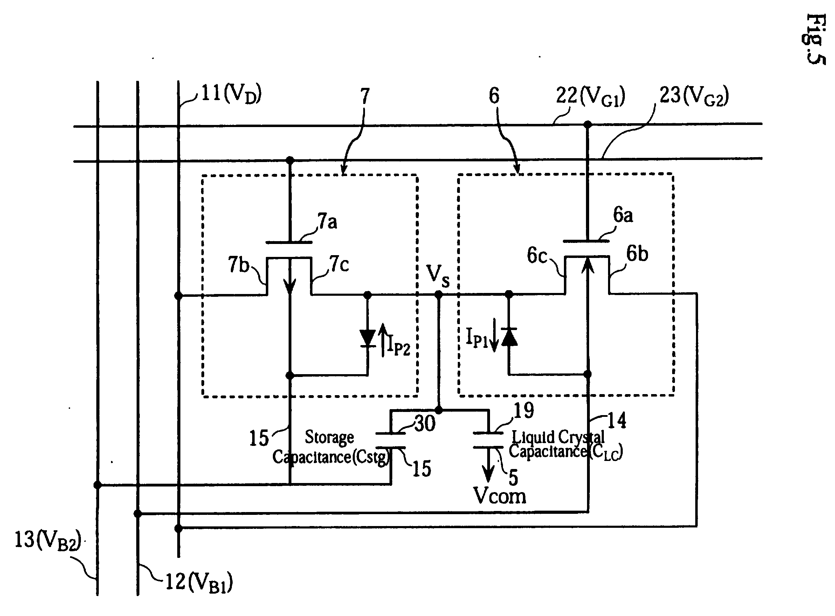

Fig. 5 shows an equivalent circuit for one single pixel of the reflective-type LCD device 1. Referring now to Fig. 5, a state of electrical connection of the MOS transistors 6 and 7 etc. is detailed below. The gate 6a of the n-channel MOS transistor 6 is connected to the scanning line 22 (voltage $V_{G1}$), and the gate 7a of the p-channel MOS transistor 7 is connected to the scanning line 23 (voltage $V_{G2}$). Each of the drains 6b and 7b of MOS transistors 6 and 7 are both connected to the signal line 11 (voltage $V_D$), and each of the sources 6c and 7c of MOS transistors 6 and 7 are both connected to the reflective pixel electrode 18 (voltage $V_S$). The p-well 14 is biased at a constant voltage $V_{B1}$ by the common voltage line 12, and the n-well 15 is biased at a constant voltage $V_{B2}$ by the common voltage line 13. Here, $V_{B1}$, $V_{B2}$, $V_D$, and $V_S$ are predetermined so as to satisfy the relationships of $V_{B1} < V_D < V_{B2}$, and $V_{B1} < V_S < V_{B2}$. The voltage $V_{B1}$ corresponds to a substrate bias voltage of the MOS transistor 6, and the voltage $V_{B2}$ corresponds to a substrate voltage of the MOS transistor 7. The liquid crystal 4 and the storage capacitor 8 are similar to the prior art device, and a liquid crystal capacitance $C_{LC}$ and a storage capacitance $C_{stg}$ are formed. In Fig. 5, very small stray capacitance and leakage conductance are ignored for the sake of brevity.

In such a reflective-type liquid crystal display device 1, a photocurrent is produced in a reverse-biased region at a source-well junction in both MOS transistors 6 and 7 (in the n-channel MOS transistor 6, the region corresponds to a region between the source 6c and p-well 14, and in the p-channel MOS transistor 7, the region corresponds to a region between the source 7c and n-well 15.). The photocurrents are denoted by $I_{P1}$ and $I_{P2}$.

Production of a reflective-type LCD device

The above-described reflective-type LCD device 1 is produced in the following manner.

1) Phosphorus (P) ions are implanted to the entire display area of a p-type crystalline Si substrate to form an n-well 15, and boron (B) ions are implanted to part of the display area to form a p-type portion (a p-well layer 14).

2) A field oxide layer 24 made of $SiO_2$ for insulating is formed in a region corresponding to a peripheral region of MOS transistors.

3) An $SiO_2$ thin film, which corresponds to a gate oxide layer 25 in each of MOS transistors 6, 7 is formed. Here, a capacitive oxide layer 31 of a storage capacitor 8 is formed at the same time.

4) Gates 6a, 7a of the MOS transistors 6, 7 and a capacitive electrode 30 are formed of polycrystalline Si.

5) A drain 6b and a source 6c (both of which are n+ conduction type) of the n-channel MOS transistor 6 is formed by implanting high concentration phosphorus (P) to a portion of the p-well 14. Here, a p-well contact region 27 for connecting the p-well 14 and a common voltage line 22 is formed at the same time.

6) High concentration boron (B) is implanted to a portion of the n-well 15 to form 7b and 7c (both of which are p+ type) of the p-channel MOS transistor 7. Here, an n-well contact region 28 (which is n+ type conduction) for connecting the n-well 15 and the common voltage line 23 is formed at the same time.

7) Phosphorus-silicate glass (PSG), which corresponds to the first insulating layer 9, is formed in a film over the entire surface, and contact holes 20a- 20e are formed at necessary positions. Note that Fig. 3 illustrates the sectional view at the stage where this step has been completed.

8) Al is deposited on the entire surface, and patterning is performed. Thereby, a first light blocking layer 10a, 10b, common voltage lines 12, 13, a signal line 11, and scanning lines 22, 23 are formed. (Fig. 4 shows the sectional view at the stage where this step has been completed.)

9) PSG is again formed in a film over the entire surface, and contact holes are formed at necessary positions. This forms a second insulating layer 16.

10) Al is again deposited over the entire surface, and patterning is performed. Thereby a second light blocking layer 17 is formed.

11) Polyimide is coated on the entire surface, and the surface is planarized by chemical mechanical polishing (CMP).

12) Al is again deposited over the entire surface, and patterning is performed. Thereby a reflective pixel electrode 19 is formed.

13) Indium titanium oxide (ITO) electrode 5 is formed on a glass substrate (counter substrate 3) opposite to the substrate 2.

14) An alignment layer (not shown) is coated on the reflective electrode 19 formed on the Si substrate and on the ITO electrode 5 formed on the counter substrate 3, and an alignment treatment such as rubbing is performed.

15) The two substrates are attached together and a liquid crystal 4 is injected in the gap of the two substrates. Thus, a reflective-type LCD device 1 is produced.

It is to be noted that the materials above are given for illustrative purposes only. For example, the gate insulating layer 25 may be formed of insulators such as $Ta_2O_5$ and $Si_3N_4$ (or stacked materials, mixed materials, and the like of such insulators) instead of $SiO_2$. In addition, the insulating layers 9 and 16 may be formed of insulators such as polyimide, $SiO_2$, and $Si_3N_4$, instead of PSG. Further, the planarizing layer 18 formed by CMP may be formed of materials such as PSG, SiO2, Si3N4, or the like. The light blocking layers 10a, 10b, and 17, and the reflective pixel electrode 19 may be composed of materials other than Al, for example such as Cr, Ag, Au, ITO, or the like, or may be composed of alloys or mixtures of such materials, or may be composed of materials in which a small amount of impurities are mixed in these metals (for example, Al in which Si is contained). Further, a transparent electrode made of ZnO and the like may be used instead of the ITO electrode 5.

Operation of a reflective-time LCD device

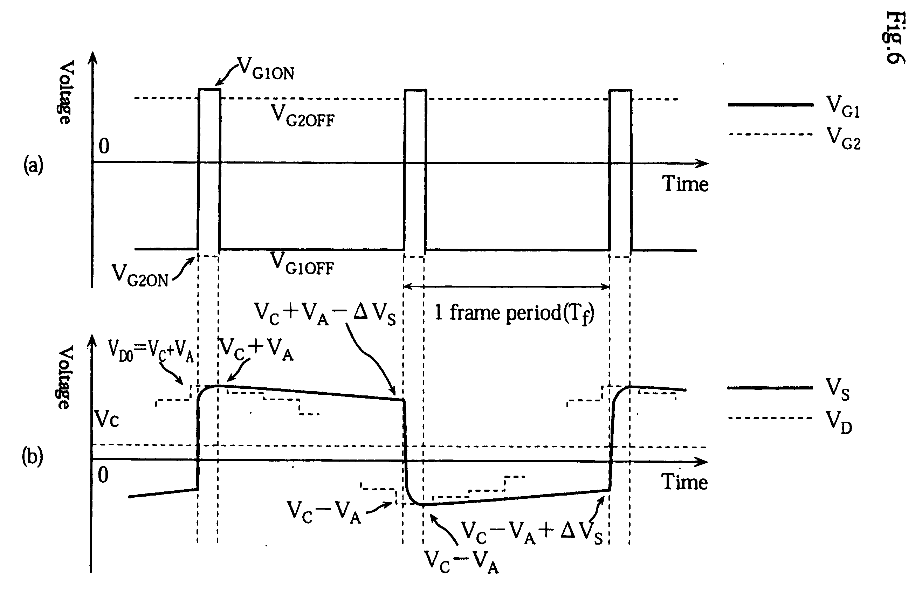

Now, an operation of the reflective-type LCD device 1 is described. In the reflective-type LCD device 1, a voltage $V_{G1}$ at the scanning line 22 and a voltage $V_{G2}$ at the scanning line 23 always change with a reverse phase as shown in Fig. 6(a), and the two MOS transistors 6, 7 are either simultaneously turned to be a selected state or simultaneously turned to be a non-selected state (except during a transition state). First, when the scanning lines 22 and 23 of a certain pixel are selected (thus resulting in $V_{G1}=V_{G1ON}$ and $V_{G2}=V_{G2ON}$), the MOS transistors 6, 7 are both turned to be ON state, and as in the case of the prior art device, the pixel electrode voltage $V_S$ is charged until it becomes equal to a voltage of the signal line 11 ($V_{D0}$). The change of the pixel electrode $V_S$ in this case is represented by the following expression (7), as in the case of the prior art device.

$$(Cstg+C_{LC}) \, dV_S/dt = k_1\{(V_{G1ON}-V_S)^2 - (V_{G1ON}-V_{D0})^2\} + k_2\{(V_{G1ON}-V_S)^2 - (V_{G1ON}-V_{D0})^2\} \qquad (7)$$

In the above expression, $k_1$ denotes a constant showing a charging performance of the n-channel MOS transistor 6, and $k_2$ denotes a constant showing a charging performance of the p-channel MOS transistor 7.

When the pixel electrode voltage $V_S$ becomes dose to $V_{D0}$, the above expression (7) can be expressed as shown in the following expression (8).

$$d(V_S-V_{D0})/dt = -(V_S-V_{D0})/\tau \qquad (8)$$

In the above expression, $\tau=(C_{stg}+C_{LC})/2[k_1(V_{G1ON}-V_{D0})+k_2(V_{D0}+V_{G2ON})]$

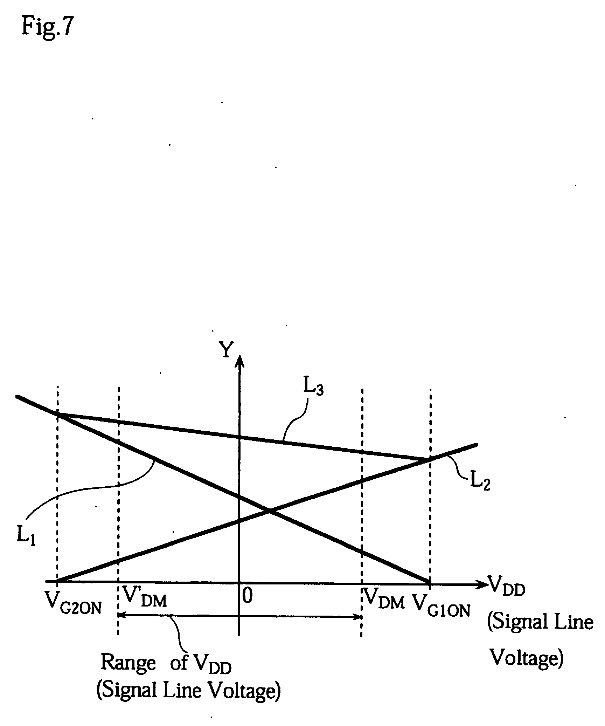

In the above expression for $\tau$ of expression (8), the denominator of the expression for $\tau$ is the sum of $2k_1(V_{G1ON}-V_{D0})$ and $2k_2(V_{D0}+V_{G2ON})$, in which $2k_1(V_{G1ON}-V_{D0})$ represents a charging performance of the n-channel MOS transistor and $2k_2(V_{D0}+V_{G2ON})$ represents a charging performance of the p-channel MOS transistor. In the case where $Y=2k_1(V_{G1ON}-V_{D0})$ or $Y=2k_2(V_{D0}+V_{G2ON})$, $Y=2k_1(V_{G1ON}-V_{D0})$ is indicated as line L1 and $Y=2k_2(V_{D0}+V_{G2ON})$ as line L2 in Fig. 7, a graph with the vertical axis indicating Y and the horizontal axis indicating $V_{D0}$. A variation range of the signal line voltage $V_{D0}$ is $V_{Dm'} \leqq V_{D0} \leqq V_{Dm}$, where $V_{Dm'}$ is a minimum value of the signal line voltage, and $V_{Dm}$ is a maximum value of the signal line voltage. As shown clearly in Fig. 7, $V_{G1ON}$ is larger than $V_{Dm}$, and $V_{G2ON}$ is smaller than $V_{Dm'}$. Since the denominator of $\tau$ in the above expression (8) is the sum of these, $Y=2[k_1(V_{G1ON}-V_{D0})+k_2(V_{D0}+V_{G2ON})]$ is shown as line L3 in Fig. 7.

Since, generally, a hole mobility is smaller than an electron mobility, $k_1>k_2$ in a case where the geometrical shapes of the p-channel MOS transistor and the n-channel MOS transistor are approximately the same. In such a case of $k_1>k_2$, an absolute value of the slope of the line L1 $(=2k_1)$ is larger than an absolute value of the slope of the line L2 $(=2k_2)$, and therefore the line L3 shown in Fig. 7 slopes downwards when going from left to right. Therefore, in a variation range of $V_{D0}$, it is in the case where $V_{D0}$ is the largest value of $V_{Dm}$ that the denominator of $\tau$ becomes the smallest (i.e., $\tau$ becomes the largest). $\tau$ in this case is represented by the following expression (9).

$$\tau=(C_{stg} + C_{LC})/2[k_1 (V_{G1ON}-V_{D0})+k_2(V_{D0}+V_{G2ON})] \qquad (9)$$

By contrast, in the case of $K_1 \leqq K_2$, the line L3 slopes upwards when going from left to right. Therefore, $\tau$ becomes the largest in the case where $V_{D0}$ is the smallest value of $V_{Dm'}$. In whichever case, it is necessary that $\tau$ of the above expression (9) be sufficiently smaller than a width of the selected period.

Next, when the selected period is completed, both MOS transistors 6 and 7 are turned to be OFF state. Accordingly, each of the photocurrents $I_{P1}$ and $I_{P2}$ flows in a direction such that the change of the electric charge in the pixel electrode 19 is cancelled. The change of the pixel electrode voltage $V_S$ is shown as the following expression (10).

$$(C_{stg} + C_{LC})dV_S/dt = I_{P2} - I_{P1} \qquad (10)$$

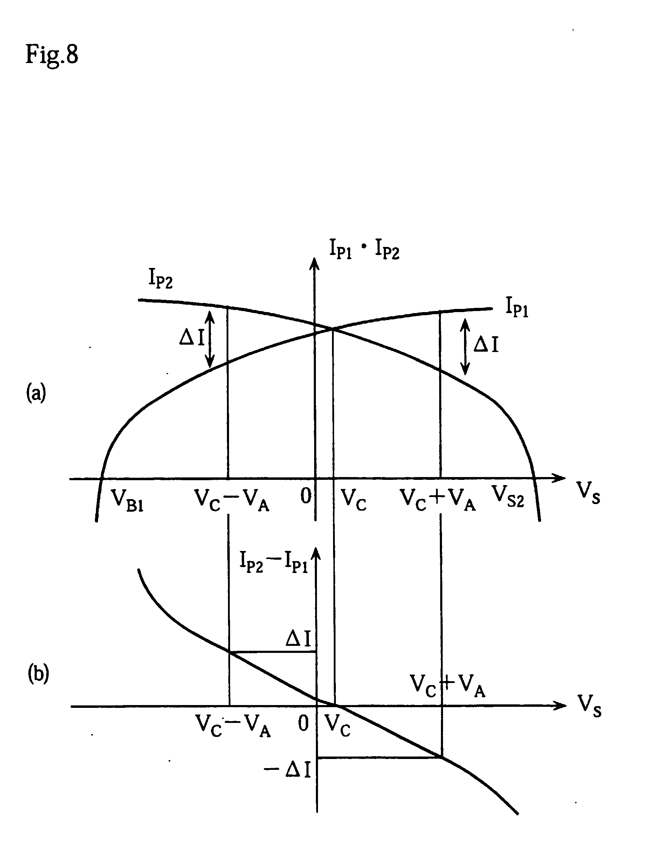

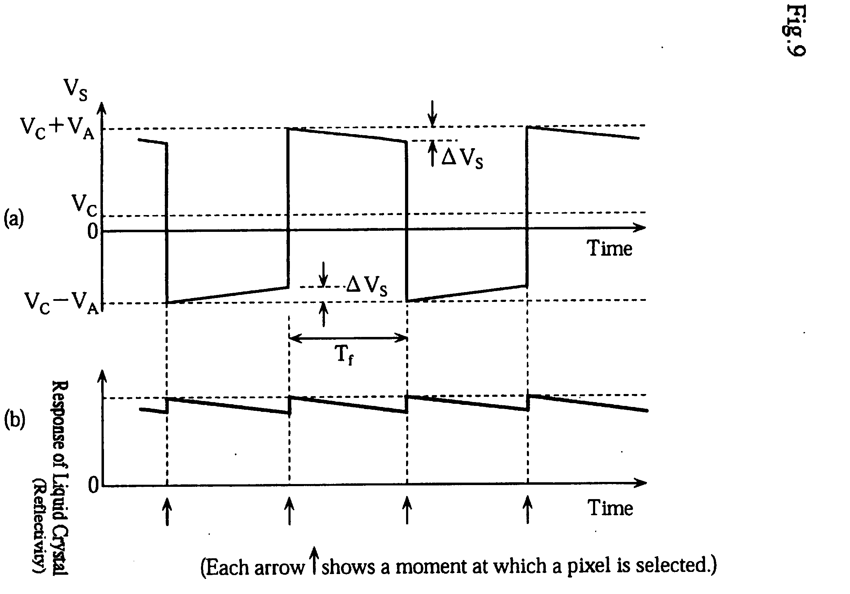

Here, if $I_{P1}$ and $I_{P2}$ are not dependent on $V_S$ and are approximately equal, the right side of expression (10) is completely canceled and becomes 0, and thus $V_S$ is kept at a constant voltage during a non-selected period. However, due to the change of the width of the depletion layer as has been stated in the foregoing BACKGROUND ART, $I_{P1}$ and $I_{P2}$ are dependent on $V_S$. The relationship of $I_{P1}$ and $I_{P2}$ with $V_S$ is shown in Fig. 8(a). Based on this, the relationship of $I_{P2}-I_{P1}$ and $V_S$ is shown in Fig. 8(b), and the graph becomes approximately symmetric with respect to a point of the value $V_S$ at which $I_{P1}=I_{P2}$ (hereinafter referred to as $V_C$). This indicates that when $V_A$ is a certain voltage value, $I_{P2}-I_{P1}$ in the case of the pixel electrode voltage being $V_C+V_A$ and $I_{P2}-I_{P1}$ in the case of the pixel electrode voltage being $V_C-V_A$ have approximately the same absolute values but different signs. The absolute value of $I_{P2}-I_{P1}$ is referred to as $\Delta I_P$. Accordingly, if a voltage such that $V_{D0}=V_C \pm V_A$ is applied to the signal line alternately for each frame, the variation of $V_S$ during non-selected period becomes approximately the same absolute value with different signs in each case, and as a result $V_S$ shows a variation shown in Fig. 6(b) and Fig. 9(a). This waveform can be seen as a waveform in which alternating voltage waveforms symmetric with respect to positive and negative are superposed on the direct-current voltage $V_C$. In Fig. 6(b) and Fig. 9(a), $\Delta V_S$ is an absolute value of the variation of $V_S$ during a non-selected period, and therefore $\Delta V_S$ is represented by the following expression (11).

$$\Delta V_S = \Delta I_P \cdot T_f /(C_{stg} + C_{LC}) \qquad (11)$$

Response of a liquid crystal is determined by an absolute value of a voltage applied to the liquid crystal. Assuming now that a voltage $V_{com}$ of the counter ITO electrode 5 is made equal to $V_C$, a direct-current component is eliminated from the applied voltage to the liquid crystal, and the response shows the same waveforms in both even numbered frames and odd numbered frames, as shown in Fig. 9(b). Thus, a component having a period twice as long as the frame period, as seen in the prior art device, is eliminated, and regardless of an illuminance of the incident light, no flicker is caused.

Now, an additional explanation for the two curves in Fig. 8(a) is given here. $I_{P1}$ and $I_{P2}$ are approximately proportional to the square root of $(V_S—V_{B1})$ and the square root of $(V_{B2}—V_S)$. Under a certain projecting-light illuminance, when the proportionality constants are extremely different, the value of $V_S$ at the intersection of the two curves $(V_C)$ becomes extremely dose to either $V_{B1}$ or $V_{B2}$, and it becomes impossible to ensure a sufficient amplitude (dynamic range) of the applied voltage to the liquid crystal in the case of $V_{com} = V_C$. In view of this, conditions for ensuring a sufficient amplitude of the applied voltage to the liquid crystal are discussed below. In the present invention, in order to suppress flicker, it is necessary that the counter substrate voltage $V_{com}$ be made equal to the voltage $V_C$, which is a voltage at the intersection in Fig. 8(a), and that an applied voltage to the pixel electrode be alternating voltages symmetric with respect to positive and negative are superposed on the direct-current voltage $V_C$, as has been described above. In addition, in order to properly operate the MOS transistors, it is necessary that the pixel electrode voltage be smaller than $V_{B2}$ and larger than $V_{B1}$. Accordingly, an amplitude of the applied voltage to the liquid crystal cannot be made larger than the smaller one of $(V_{B2}—V_C)$ and $(V_C—V_{B1})$. Here, a case where $V_C$ becomes extremely close to $V_{B1}$ as shown in Fig. 10(a) is considered. When an amplitude of the applied voltage is 10 % or more of the maximum amplitude of the applied voltage in a normal operation state, it is considered that the device can be driven without any particular problems. Thus, under such a condition of an amplitude of the applied voltage being 10 % or more of the maximum amplitude, it is desired that $V_C$ satisfy $0.1 \leq (V_C—V_{B1})/(V_{B2}—V_{B1})$. Also, a case where $V_C$ becomes extremely close to $V_{B2}$ as shown in Fig. 10(b) is considered. In this case as well, based on the same ground as above, it is desired that $V_C$ satisfy $0.1 \leq (V_{CB2}—V_C)/(V_{B2}—V_{B1})$. Here, when the variation of $V_{B2}—V_{B1}$ is seen as the variation of $V_C—V_{B1}$, $0.1 \leq (V_{CB2}—V_C)/(V_{B2}—V_{B1})$ can be represented as $(V_C—V_{B1})/(V_{B2}—V_{B1}) \leq 0.9$. Therefore, in order to prevent an oscillation of the applied voltage, it is preferable that $V_C$ be in the range of the following expression (12).

$$0.1 \leq (V_C—V_{B1}) / (V_{B2}—V_{B1}) \leq 0.9 \tag{12}$$

The above expression (12) is reached based on the assumption that it is desired that the amplitude of the applied voltage be 10 % or more of the maximum amplitude of the applied voltage in a normal operation state, without strictly considering contrast and luminance. Now, given below are conditions of $V_C$ in the case where contrast and luminance are strictly considered. In order to obtain an image with sufficient contrast and luminance, it is required that, in the range of the voltage to the liquid crystal layer, a reflectivity (luminance) be varied with a sufficient range from bright to dark. Now, as a voltage-reflectivity characteristic (T-V curve) of a liquid crystal layer, there are two types, one being a type shown in Fig. 11(a), in which the transmissivity becomes larger as an absolute value of the voltage becomes larger (hereinafter referred to as a normally-off type), the other being a type shown in Fig. 11(b), in which the transmissivity becomes smaller as the absolute value of the voltage becomes larger (hereinafter referred to as a normally-on type). For each of the types, a minimum modulation voltage $V_M$ is defined as follows.

(1) In the case of normally-off type

An absolute value of a voltage at which a luminance (reflectivity) of 90 % of the maximum luminance $R_{max}$, a luminannce $R_{90}=(9/10)R_{max}$, is obtained is defined as a minimum modulation voltage $V_M$. As for the maximum luminance $R_{max}$, in the case of the V-T curve showing a tendency to have a saturation as the voltage increases as in Fig. 11(a), the saturation point is employed for $R_{max}$, whereas in the case of the V-T curve having a peak as in Fig. 11(c), a luminance at the peak point is employed for $R_{max}$.

(2) In the case of normally-on type

An absolute value of a voltage at which a luminance of 10 % of the maximum luminance $R_{max}$, $R_{10}=(1/10)R_{max}$, is obtained is defined as a minimum modulation voltage $V_M$. As for the maximum luminance $R_{max}$, in the case of a largest luminance being obtained at a voltage of 0 as in Fig. 11(b), the largest luminance is employed for $R_{max}$, whereas in the case of the V-T curve having a peak as in Fig. 11(d), a luminance at the peak point is employed for $R_{max}$.

When the minimum modulation voltage $V_M$ is defined as described above, by varying the applied voltage to the liquid crystal layer within the range of $—V_M$ to $+V_M$, modulation can be performed with a range of 90 % or greater of the maximum luminance range (0 to $R_{max}$), achieving a sufficient luminance and contrast in either of the cases. In order to make such an operation possible in Fig. 8 or Fig. 10, a necessary condition is that "the maximum modulation voltage $V_M$ is equal to or less than the smaller one of $(V_{B2}—V_C)$ and $(V_C—V_{B1})$."

This condition is represented by the following expression (13).

$$V_M \leqq \min(V_C - V_{B1}, V_{B2} - V_C) \tag{13}$$

This expression is equivalent to the following expression (14).

$$V_M \leqq V_C - V_{B1} \text{ and } V_M \leqq V_{B2} - V_C \tag{14}$$

This expression further yields the following expression (15), which has a similar shape as expression (12).

$$V_M / (V_{B2} - V_{B1}) \leqq (V_C - V_{B1}) / (V_{B2} - V_{B1}) \leqq 1 - V_M / (V_{B2} - V_{B1}) \tag{15}$$

It is noted here that when driving the LCD device 1 based on the foregoing expression (12) or (15), it is necessary that $V_C$ be determined in advance. The major factors that determine a position of $V_C$ are the following four factors:

(1) a ratio of an attenuation rate of an incident light reaching a biased region between the source 17 and the p-well 18 and attenuation rate of an incident light reaching a biased region the source 22 and the n-well 23,
(2) a ratio of the widths of the depletion layers of the two reverse-biased regions at the same applied voltage,
(3) a ratio of the areas of the junctions of the two reverse-biased regions, and
(4) a ratio of the quantum efficiencies of the generation of holes and electron pairs in the two reverse-biased regions.

Even when these factors are asymmetrical and the ratios are far off from 1, the condition of the foregoing expressions (12) or (15) is satisfied provided that the product of all the four factors is dose to 1. Therefore, it is preferable that $V_C$ is varied by adjusting a factor that can be readily controlled at the stage of device designing, for example the above factor (3), so that the foregoing expression (12) or (15) is satisfied.

In an actual LCD device 1, a specific value of $V_C$ can be obtained in the following manner, and based on the obtained value, it is possible to decide whether or not $V_C$ is set to be the optimum value.

[1] First, the projecting-light illuminance is made sufficiently small so as not to cause a variation of $V_S$ during a non-selected period. Then, a certain voltage values $V_C'$ and $V_A'$ are predetermined, and signal voltages $V_D$, which is $V_D = V_C' \pm V_A'$, are alternately applied to a signal line at every one frame. In this condition, an electrode voltage $V_{com}$ of the counter substrate is varied to find a point at which flicker becomes the smallest (the $V_{com}$ at this point is defined as $V_{com}'$). This $V_{com}'$ corresponds to an average voltage of the pixel electrode. $V_{com}'$ is supposed to be equal to $V_C'$, but in the case where "field through effect" is not negligible, they result in slightly different values. That is to say, it is shown that by field through effect, $V_S$ deviates from $V_D$ averagely with the value of $(V_{com}' - V_C')$.
[2] Second, the projecting-light illuminance is increased up to a state of normal use. Then, the same bias $\delta V$ is added to both the voltage values $V_{com}'$ and $V_C'$ obtained in [1] above so that $V_{com} = V_{com}' + \delta V$, and $V_D = V_C' + \delta V \pm V_A'$ to drive the device. When a point at which flicker becomes the smallest is obtained with varying $\delta V$, the value of the $V_{com} = V_{com}' + \delta V$ is the value of $V_C$.

In an actual LCD device 1, even in the case where $\delta V$ in [2] is slightly deviated from the optimum condition (i.e., in the case of $V_{com} \neq V_C$), a certain degree of advantageous effect of flicker suppression can be obtained, although the effect is not as remarkable as in the case of the optimum condition.

In the present invention, an absolute value of the applied voltage $V_S - V_{com}$ is bound to change towards a smaller value during a non-selected period. An effective value $V_{LCeff}$ (a time average value) of $|V_S - V_{com}|$ can be calculated as shown by the following expression (16), and it is understood therefrom that $V_{LCeff}$ becomes smaller than an effective value $V_A$ in which it is assumed that light is not projected.

$$V_{LCeff} = V_A - \Delta V_S / 2 = V_A - \Delta I_P T_f / 2 (C_{stg} + C_{LC}) \tag{16}$$

On the other hand, an effective value $V_{LCeff}$ of the applied voltage to the liquid crystal of the prior art device is calculated as shown by the following expression (17), and the $V_{LCeff}$ in this case also becomes smaller than $V_A$. It is noted that even in the case of $V_{com} \neq 0$, $V_{LCeff}$ does not depend on $V_{com}$ provided that $V_{com}$ is sufficiently small.

$$V_{LCeff} = V_A - (|\Delta V_{S+}| - |\Delta V_{S-}|) / 4$$
$$= V_A - [I_{P+} - I_{P-}] T_f / 4 (C_{stg} + C_{LC}) \tag{17}$$

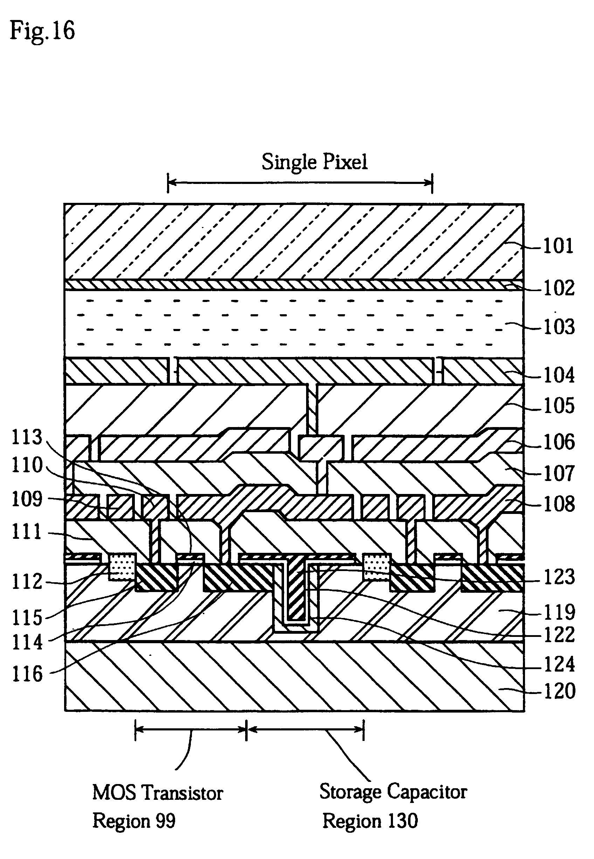

Now, assuming that the curves of $I_{P_1}$ and $I_{P_2}$ in Fig. 8 (a) are approximately symmetric with respect to $V_C$ and that the $I_{P_1}$ is the same as the $I_P$ in Fig. 16, $\Delta I_P$ and $I_{P+}$—$I_{P-}$ can be seen as approximately equal. Accordingly, a difference of $V_{LCeff}$ from $V_A$ in the present invention is approximately twice as that in the prior art device. Since such degradation of the effective value causes undesirable effects such as a degradation in a luminance of the images (light utilization efficiency) and a variation of reflectivity resulting from an illuminance distribution of the incident light in a plane, it is necessary that such degradation of the effective value be minimized as small as possible.

In order to suppress degradation in an effective value of an applied voltage to liquid crystal, it is effective to increase $C_{stg}+C_{LC}$, as seen from the expressions (16) and (17). However, $C_{stg}+C_{LC}$ cannot be increased unlimitedly since $C_{stg}+C_{LC}$ is restricted by the time constant of charging $\tau$ as shown in the above expressions (3) and (9). Now, it is assumed temporarily that the maximum voltage supply to the LCD device 1 is 15 V (—7.5 V to 7.5V) and an oscillation of the applied voltage to the liquid crystal is 6V, and accordingly $V_{GON}$ = 7.5 V, and $V_{Dm}$ = 6 V in the case of the prior art device, and $V_{G1ON}$ = 7.5 V, $V_{G2ON}$ = —7.5 V, and $V_{Dm}$ = 6 V in the case of the present invention. Also, it is assumed that a ratio of k1 and k2 is k1/k2=2 (considering a ratio of the mobility of holes and the mobility of electrons). Further, it is assumed that k=k1 based on the assumption that the n-channel MOS transistors both in the present invention and in the prior art device have the common design. Based on these assumptions, a ratio of the time constant of charging of the present invention to that of the prior art device is calculated from the expressions (3) and (9), and thereby $\tau$ (the present invention) / $\tau$ (the prior art device) = 0.18 is obtained. That is to say, assuming that the identical capacitance $C_{stg}+C_{LC}$ is employed, the present invention can achieve a charging time which is 0.18 times that of the prior art device. In other words, in the present invention, the upper limit of $C_{stg}+C_{LC}$ can be set at 1 / 0.18 = 5.5 times higher than that of the prior art device. Accordingly, the degradation of an effective value of applied voltage to liquid crystal can be suppressed to 2 / 5.5 = 0.36 times that of the prior art device, and as a result, a good image with little degradation in a light utilization efficiency and a small luminance distribution can be obtained. Alternatively, utilizing such a margin, it is possible to obtain an image with a further higher luminance by further increasing the illuminance of the incident light.

As described above, according to the present invention, $\tau$ is remarkably reduced compared to the prior art device. This is considered to be due to the following reason. Generally, in MOS transistors, when the voltage between the gate and the drain (or the voltage between the gate and the source) is smaller, the charging performance is accordingly smaller. However, if two MOS transistors, one being a p-channel type and the other being an n-channel type, are employed, the degree of the charging performance of each transistor becomes opposite according to the drain voltage (= the signal line voltage). Thus, these two MOS transistors complement each other (the charging performances of the two MOS transistors do not become small at the same time).

For reference, it may appear that by employing the device construction in which an n-channel MOS transistor and a p-channel transistor are combined, a variation of a pixel electrode voltage resulting from parasitic capacitance or parasitic resistance can be suppressed even if a large storage capacitor is not particularly employed. However, it is by making $C_{stg} + C_{LC}$ sufficiently large in addition to combining a p-channel MOS transistor and an n-channel MOS transistor, that a variation of effective values of an applied voltage to liquid crystal, which results from the photocurrents produced by an incident light having a high illuminance, (this variation is far larger than the variation resulting from parasitic capacitance or parasitic resistance) can be suppressed. It is noted here that once a liquid crystal material (a dielectric constant), a cell gap, and a pixel pitch are determined, a liquid crystal capacitance $C_{LC}$ is accordingly fixed. For this reason, it is in fact essential to make $C_{stg}$ large. For a rough standard, it is preferable that a storage capacitance be at least 3 times larger than a liquid crystal capacitance $C_{LC}$. In this regard, since the storage capacitance $C_{stg}$ is formed on the silicon substrate 2 in the present invention, it is easy in the present invention to form a storage capacitance $C_{stg}$ having a size at least 3 times larger than a liquid crystal capacitance $C_{LC}$.

The foregoing limitation that "a storage capacitance be at least 3 times larger than a liquid crystal capacitance $C_{LC}$" is due to the following reason. When a storage capacitance $C_{stg}$ is excessively smaller than a liquid crystal capacitance $C_{LC}$, a variation of the effective value of applied voltage from $V_A$ becomes large according to the above equation (16). This is also recognized from the fact that the voltage variation $\Delta V_S$ is represented by the above expression (11). When such variation from $V_A$ is large, it causes a luminance decrease of images and a luminance variation in a display panel. Therefore, it is necessary that a storage capacitance $C_{stg}$ be sufficiently larger than a liquid crystal capacitance $C_{LC}$.

For the storage capacitor, a MOS capacitance using $SiO_2$ as the capacitive oxide layer is generally employed, but other types of capacitors may be employed insofar as a sufficiently large capacitance is ensured. Examples for other capacitors are ferroelectric capacitors, materials having a high dielectric constant such as $Ta_2O_5$, $Y_2O_3$, $HfO_2$, $TiO_2$, $ZrO_2$, $Si_3N_4$, $Nb_2O_5$, and the like (including ones in which these materials and SiO2 and the like are layered), capacitors having a groove structure, capacitors formed on the insulating layer. Further, capacitors having a multilayer-structure of $SiO_2/Si_3N_4/SiO_2$ may be employed.

In this embodiment, a MOS capacitance is formed on the n-well 15, but it may be formed on the p-well 14. The MOS capacitance may of course be formed both on the n-well 15 and on the p-well 14, and this provides another advantage that an undesirable influence caused by the MOS capacitances' nonlinearity can be cancelled.

In the foregoing example, the storage capacitor was formed between the capacitive electrode 30 and the n-well 15, but the present invention is not limited thereto. For example, the storage capacitor may be formed by forming a metal layer or a semiconductor layer on the n-well 15, and forming an insulating layer between the formed layer and the capacitive electrode 30. The capacitive electrode 30 may be a metal such as Al and the like, and may be an n-type semiconductor or a p-type semiconductor.

In addition, a p-type crystalline Si substrate is illustrated in this Embodiment 1, but the substrate may be an n-type crystalline Si substrate. When an n-type crystalline Si substrate is employed, all the types of conduction (either p or n) in the region formed by Si semiconductor illustrated in Fig. 2 are reversed (except the gate 6a, 7a, and the capacitive electrode 30).

In addition, the invention is not limited to a structure in which the p-well 14 is formed in the n-well 15 as illustrated in Fig. 2, and such a structure that an n-well is formed only in the region of p-channel MOS transistor and a p-well is formed only in the region of n-channel MOS transistor may be employed. Further, such a structure that for example, only a p-well is formed on an n-type crystalline Si substrate and a p-channel MOS transistor is formed on the n-type crystalline Si substrate and an n-channel MOS transistor is formed on the p-well may be employed.

The storage capacitor 8 may be formed between the source 6c, 7c and the scanning line 22 next to the source 6c, 7c, and may be formed between the source 6c, 7c and the scanning line 23 next to the source 6c, 7c.

The p-channel MOS transistor and the n-channel MOS transistor are not limited to the ones as describe above, but it may be such that a plurality of MOS transistors are connected in serial or in parallel.

In addition, although the reflective-type LCD device 1 according to this Embodiment 1 has a planarizing layer 18, a second light blocking layer 17, a second insulating layer 16, a first light blocking layer 10a, 10b, a first insulating layer 9, and a field oxide layer 24, a reflective-type LCD device according to the present invention does not necessarily have all of these components. In other words, these components such as the planarizing layer 18 etc. are not essential components in a reflective-type LCD device according to the present invention. Further, in order to obtain a high reflectivity, a step of planarizing is preferable, but the step may be omitted. Still further, the number of the layers in the structure for light blocking may be increased. Yet further, each of the p-well contact region 27 and the n-well contact region 28 may be opposite type of conduction.

In addition, a mode for the liquid crystal 4 is not particularly limited. Various modes may be employed such as TN (Twisted Nematic) liquid crystal, STN (Super Twisted Nematic) liquid crystal, ECB (Electrically Controlled Birefringence) type liquid crystal including VA liquid crystal (Vertical Alignment liquid crystal, or Homeotropic liquid crystal) and homogeneous alignment liquid crystal, bend-type liquid crystal, IPS (In-plane Switching) liquid crystal, GH (Guest-Host) liquid crystal, polymer dispersed liquid crystal, ferroelectric liquid crystal, anti-ferroelectric liquid crystal, and so forth. Furthermore, materials other than liquid crystal may be used if the materials are such that optical characteristics of the materials change by applying voltage. For example, it is considered that electro-optic crystals such as BSO (Bismuth Silicon Oxide) and the like, and materials that show electroluminescence can be used for such materials.

EMBODIMENT 2

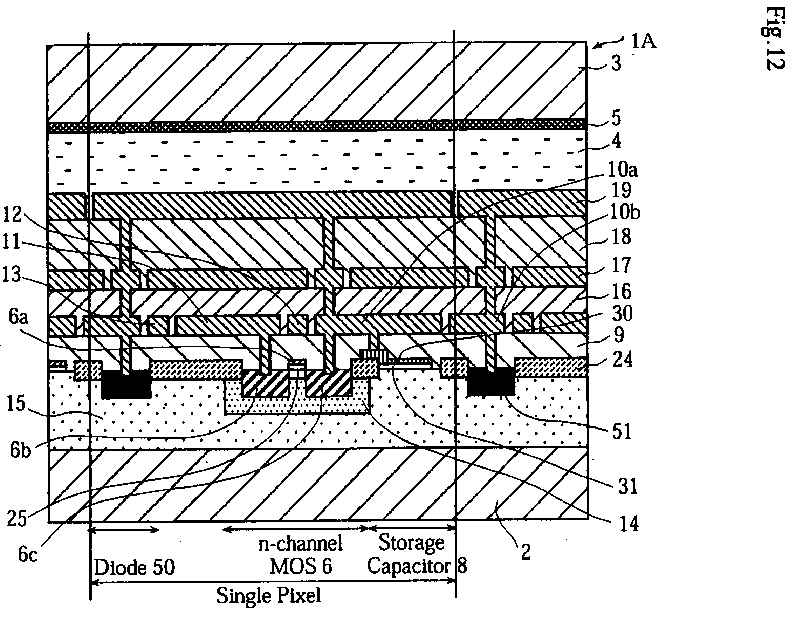

Fig. 12 shows a cross-sectional view of a reflective-type LCD device 1A in accordance with Embodiment 2. Embodiment 2 is similar to Embodiment 1, and like reference numerals and characters refer to like parts. In Embodiment 2, an n-channel transistor 6 is used as the pixel switching element, and in place of the p-channel MOS transistor 7 in Embodiment 1, a p-n junction diode 50 is employed. The diode 50 is composed of a p+ region 51 and an n-well 15. The producing procedure of the reflective-type LCD device 1A of Embodiment 2 is fundamentally the same as that of the reflective-type LCD device 1 of Embodiment 1, and therefore the description is not repeated for the sake of brevity.

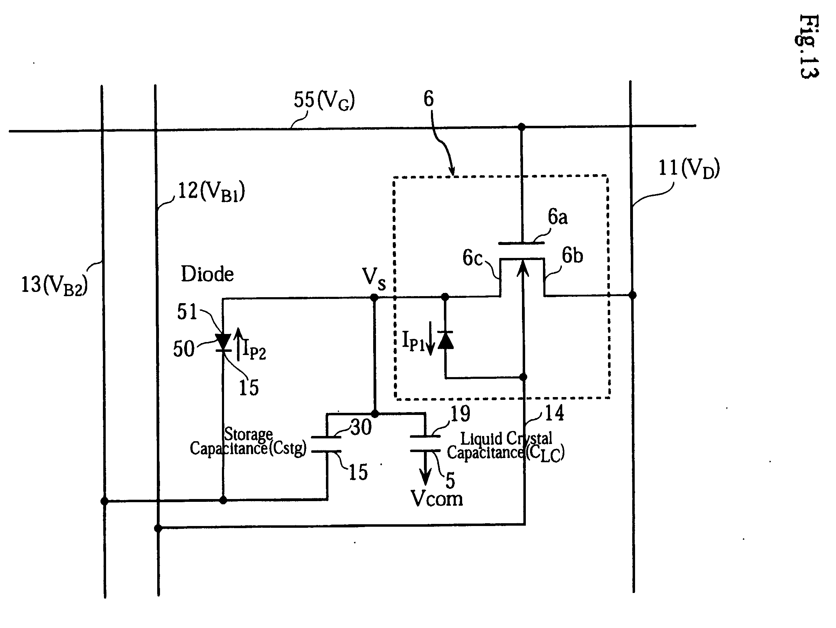

An equivalent circuit for a single pixel of the reflective-type LCD device 1 is shown in Fig. 13. The p+ region 51 (which corresponds to the anode of the diode 50) is connected to the pixel electrode 19, and the n-well 15 (which corresponds to the cathode of the diode 50) is connected to the common voltage line 12. Here, as mentioned above, the voltage $V_{B2}$ of the common voltage line 12 is larger than the voltage $V_S$ of the pixel electrode, and therefore, the diode 50 is reverse-biased. Also, as in Embodiment 1, a region between the source 6a and the p-well 14 in the MOS transistor 6 is reverse-biased. As a result, when light is projected onto the MOS transistor 6 and the diode 50, photocurrents $I_{P1}$ and $I_{P2}$ are produced at the MOS transistor 6 and the diode 50 respectively. Note that the p-well 14 is connected to the common voltage line 12, and the n-well 13 is connected to the common voltage line 13. (These connections are not shown in Fig. 12.) Although two types of scanning lines 22 and 23 are employed in Embodiment 1, only one type of scanning line 55 is employed in Embodiment 2.

In the reflective-type LCD device 1A, charging of the pixel is performed by the n-channel MOS transistor alone, unlike that in Embodiment 1. Therefore, the operation here can be explained by the description of the prior art device, and the response speed is represented by expression (3). Conversely, the operation during the non-selected period is identical to that in Embodiment 1, and in this regard, the explanation in Embodiment 1 is entirely applicable.

That is, although the reflective-type LCD device 1A has an upper limit of $C_{stg}+C_{LC}$ which is not different from that of the prior art device insofar as the device employs the same MOS transistor as that of the prior art device or of Embodiment 1, and therefore cannot resolve the degradation of an effective value of an applied voltage to the liquid crystal, the reflective-type LCD device 1A can achieve an advantageous effect of suppressing flicker, which effect is obtained by making the waveform of an applied voltage to the liquid crystal symmetric. In addition, it is preferable that expression (12) or (15) be satisfied, as is in Embodiment 1. Furthermore, in comparison with Embodiment 1, the occupied area in the surface area of the substrate is smaller, and only one scanning line per a single pixel is necessary. This allows additional flexibility in device designing and further reduction in a device size. In addition, by utilizing the additional flexibility in device designing, it is possible to increase the channel width of the n-channel MOS transistor (i.e., in expression (1), k is increased). This makes it possible to reduce the time constant of charging and to suppress the variation of effective values of an applied voltage to the liquid crystal by having a large margin in $C_{stg}+C_{LC}$.

It is to be noted here that, as stated in Embodiment 1, a value of $C_{stg}$ needs to be at least 3 times larger than a value of $C_{LC}$ in order to sufficiently suppress a variation of effective values of an applied voltage to the liquid crystal.

It is also to be noted that, naturally, the description regarding the variations of Embodiment 1 set forth hereinbefore is also applicable to Embodiment 2. In particular, all the types of conduction in the regions made up with Si semiconductor may be reversed.

Supplementary Remarks for Embodiments 1 and 2

In Embodiment 1 and 2, a p-channel MOS transistor or a p-n junction diode is employed as an element for canceling the photocurrents in the n-channel MOS transistor, but the present invention is not limited thereto. For example, other semiconductor devices such as a bipolar transistor, a phototransistor, and the like may be employed.

In addition, although Embodiments 1 and 2 describe a reflective-type LCD device having a reflective pixel electrode, the reflective-type LCD of the invention may such a device that comprises, in place of the reflective electrode, a pixel electrode without reflective property and a reflective layer provided over the pixel electrode and composed of for example a dielectric mirror.

EMBODIMENT 3

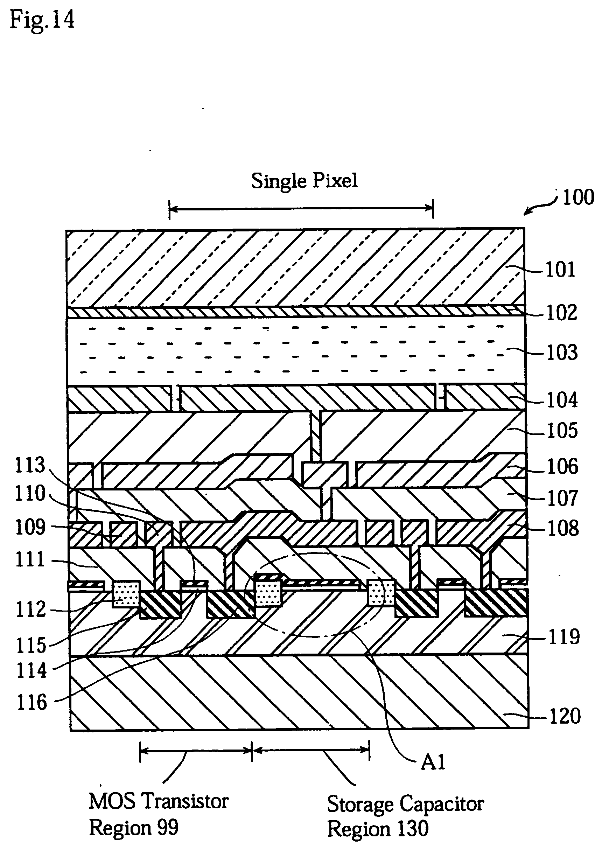

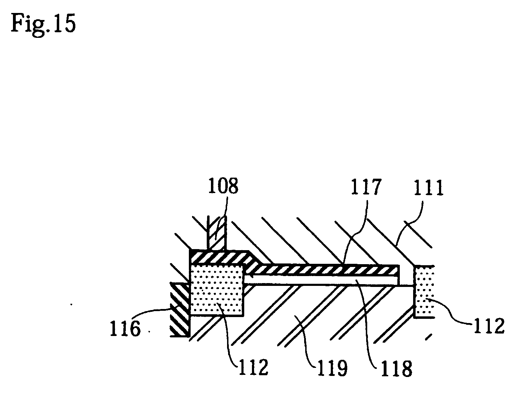

Fig. 14 shows a cross sectional view of a reflective-type LCD device 100 according to Embodiment 3. Fig. 15 shows an enlarged view of a portion A1 in Fig. 14. This Embodiment 3 has a similar construction to that of Embodiment 1. In Embodiment 1, in order to prevent a variation of pixel electrode voltages, a pair of the n-channel MOS transistor 6 and the p-channel MOS transistor 7 are employed to cancel photocurrents. Embodiment 3, however, is characterized in that a storage capacitance of a storage capacitor 130 is increased. It is noted that Embodiments 4 to 6, which will be described later, are also characterized in that a storage capacitance is increased as in Embodiment 1.

A reflective-type LCD device 100 according to Embodiment 3 comprises a n-channel MOS transistor 99, a signal line 110, a common voltage line 109, a scanning line (not shown in Fig. 14), a reflective pixel electrode 104, a liquid crystal 103, and a storage capacitor 130 employing a ferroelectric thin film 118. Shown in Fig. 14 are a counter substrate 101, an ITO electrode 102, a liquid crystal 103, a planarizing layer 105, a second light blocking layer 106, a second insulating layer 107, a first light blocking layer 108, a first insulating layer 111, a field oxide layer 112, a gate 113, an oxide layer 114, a drain 115, a source 116, a capacitive electrode 117, a p-well 119, and an n-type Si substrate 120.

The producing method of the reflective-type LCD device 100 is basically the same as that in Embodiment 1, and not therefore not repeated here.

An equivalent circuit of a portion corresponding to a single pixel in the reflective-type LCD device 100 is basically the same as the equivalent circuit of the prior art device (shown in Fig. 54), and the operation thereof is also the same.

A storage capacitance $C_{stg}$ is represented by the following expression (18).

$$C_{stg} = \varepsilon 0 \, \varepsilon r \, S / d \qquad (18)$$

In the above expression (18), $\varepsilon 0$ is a dielectric constant of vacuum, $\varepsilon r$ is a relative dielectric constant of a ferroelectric material composing the ferroelectric thin film 118, S is an area of the storage capacitor, d is a thickness of the storage capacitor. While a relative dielectric constant of $SiO_2$ is approximately 4, a relative dielectric constant of the ferroelectric material is 100 to 1000, which is very large. Therefore, when it is assumed that a lower limit of a thickness and an upper limit of an area in the ferroelectric material are the same as those in the case of $SiO_2$, a storage capacitance $C_{stg}$ can be increased up to 250 times as large, and thereby a variation of $V_S$ can be suppressed to 1/250 or smaller. As a result, it is made possible to obtain a high quality image which is free from degradation in the contrast and luminance, flicker, noise, and so forth.

This is particularly effective when a pixel size is small. An upper limit of an area of the storage capacitor is determined by an area of a pixel, and accordingly $C_{stg}$ is reduced almost proportionally to a reduction of the area of a pixel (i.e., proportionally to a reduction of the square of a pixel size). On the other hand, in order to obtain images with the same brightness with the same pixel number, an intensity of the light to be incident on a single pixel must be the same, and accordingly it should be considered that $I_P$ is constant regardless of a pixel size. Therefore, $I_P/C_{stg}$ increases inversely proportionally to a reduction of the square of a pixel size, and thus flicker becomes larger as a pixel size becomes smaller, as understood from expressions (5) and (6). In view of this, by employing a ferroelectric material as a dielectric material for the storage capacitor in place of $SiO_2$ employed in the prior art device, a lower limit of a pixel size can be relaxed to a remarkable extent, and thus a further higher resolution and further size reduction (or higher luminance) can be achieved.

Preferable ferroelectric materials include materials comprising $PbTiO_3$, $BaTiO_3$, $SrTiO_3$, $PbZrO_3$, PZT (a solid solution of $PbTiO_3$ and $PbZrO_3$), PLZT (a substance in which La is added to PZT), PLT (a substance in which La is added to $PbTiO_3$), $LiNbO_3$, $LiTaO_3$, $KNbO_3$, $KTaO_3$, SbSI, $KH_2PO_4$, $(CH_2NH_2COOH)_3H_2SO_4$ (triglycine sulfate), $(CH_2NH_2COOH)_3H_2SeO_4$ (triglycine selenate), $(CH_2NH_2COOH)_3H_2BeF_4$, $Gd_2(MoO_4)_3$, SnTe, $Pb_{1-x}Ge_xTe$, BaMgF4, and the like. A mixture or a compound of these materials may be employed, and a layered material in which these materials are formed in plural layers may also be employed. It is also preferable that a thickness of the ferroelectric thin film 118 be larger than 2 nm, at which an influence of a tunnel current starts to emerge, and be smaller than 50 $\mu$m, at which film detachment by a thermal stress resulting from a thermal expansion in the manufacturing process becomes apparent.

Although in Fig. 14, in the storage capacitor 130, a voltage of the region of the capacitive electrode 117 becomes a source voltage, and a voltage of the region of the p-well 119 becomes the same voltage as that of a voltage of the common voltage line 109, a construction contrary to this may be employed. Specifically, such a construction may be employed that the capacitive electrode 117 is connected to the common voltage line 109, and the p-well 119 is connected to the source 116.

In addition, the storage capacitor in Fig. 14 is formed between the capacitive electrode 117 of polycrystalline Si and the p-well 119, but the present invention is not limited thereto. For example, the storage capacitor may be formed by forming a film made of a metal or a semiconductor on the p-well 119, and then forming the ferroelectric thin film 118 between the formed film and the capacitive electrode 117.

Further, although the dielectric material in the storage capacitor is formed only by the ferroelectric thin film 118 in this embodiment, other construction is also possible. For example, the dielectric material in the storage capacitor may be divided into plural areas so that one of the areas is formed by a ferroelectric material, and another area is formed by a material employed in the prior art device, such as $SiO_2$ and the like.

Further, in the case where the use of the ferroelectric thin film 118 alone cannot achieve a sufficient dielectric strength, a layered structure with an ordinary dielectric material such as $SiO_2$ and the like and the ferroelectric thin film 118 may be employed so as to improve a dielectric strength.

Still further, the oxide film of the MOS transistor may be made of a ferroelectric thin film, in place of $SiO_2$. This achieves further advantageous effects of a simplified manufacturing process and an increase in a charging performance of the transistor.

EMBODIMENT 4

Embodiment 4 employs a $Ta_2O_5$ (tantalum oxide) thin film in place of the ferroelectric thin film 118 employed in Embodiment 3. A relative dielectric constant of $Ta_2O_5$ is generally between 10 and 100, which is remarkably larger than a relative dielectric constant of $SiO_2$, which is 4, and therefore the same advantageous effects as those in the case of a ferroelectric thin film can be obtained. Thus, what has been described in the foregoing Embodiment 3 is applicable to $Ta_2O_5$ as well, and as a result, it is made possible to obtain a high quality image which is free from degradation in the contrast and luminance, flicker, noise, and so forth, even with a high-resolution and small-sized panel.

$Y_2O_3$, $HfO_2$, $TiO_2$, $ZrO_2$, $Nb_2O_5$, or the like may be employed in place of $Ta_2O_5$. These materials also have a high relative dielectric constant of 10 to 100 as $Ta_2O_5$ does, and therefore, by employing one of these materials in place of the $Ta_2O_5$ thin film, the same advantageous effects as those of $Ta_2O_5$ can be obtained. Additionally, the storage capacitor may be formed by a combination of Embodiments 3 and 4, i.e., a combination of a ferroelectric material and these materials (making a layered structure, forming a mixture, connecting in parallel, and the like).

EMBODIMENT 5

Fig. 16 shows a cross sectional view of a reflective-type LCD device according to Embodiment 5. In this embodiment, a groove is provided on a surface of the p-well 119 on the n-type crystalline Si substrate 120 by etching. A U-shaped lower capacitive electrode 124 is provided in the groove, a capacitive oxide layer 122 is formed over the lower capacitive electrode 124, and a T-shaped upper capacitive electrode is formed over the capacitive oxide layer 122. The lower capacitive electrode 124 is connected to the source 116, and the upper capacitive electrode 123 is connected to the common voltage line 109 (the connection is not shown in Fig. 16 since the connection is made at a position different from this cross section). The construction and manufacture except what is described above are basically the same as those in Embodiment 3.

An equivalent circuit of this embodiment is also represented by Fig. 54, and the operation is the same as that of the prior art device. However, the storage capacitor in this embodiment results in a capacitor formed between the upper capacitive electrode 123 and the lower capacitive electrode 124 which sandwich the capacitive oxide layer 122. As in the construction of this embodiment, by employing a side wall of the groove as a storage capacitance, a capacitive oxide layer 122 having a very large area can be formed in a limited area of a single pixel, achieving a larger storage capacitance compared to a conventional capacitor having a flat shape (this corresponds to that S is increased in expression (18)). Accordingly, as in Embodiment 3, a variation of $V_S$ during a non-selected period can be suppressed, and a high quality image free from flicker can be obtained even in a high-resolution, small-sized panel.

It is noted here that it is desired that the bottom of the foregoing groove to be formed in a semiconductor substrate (this term refers to an entire component in which the p-well 119 is formed on the n-type crystalline Si substrate) be deeper than a surface of the semiconductor substrate which has not yet undergone preparation of the pixel structure.

The upper capacitive electrode 123 and the lower capacitive electrode 124 may be composed of such a material as Al, Cr, and other metals or alloys, and may be composed of an n-type or a p-type semiconductor . The capacitive oxide layer 122 may be composed of any insulator, although $SiO_2$ is generally employed.

In Fig. 16, such a construction may be employed that the upper capacitive electrode 123 is connected to the source 116, and the lower capacitive electrode 124 is connected to the common voltage line 109.

In addition, a partial portion or an entire portion of the upper capacitive electrode 123 and the lower capacitive electrode 124 may be substituted by the p-well 119 per se, or may be substituted by the source 116 per se.

The bottom of the groove may pierce the p-well 119 and reach the n-type crystalline Si substrate 120.

In addition, the groove may not be formed directly on the surface of the p-well 119 but may be formed by firstly forming the first insulating layer 111, the second insulating layer 107, the planarizing layer 105, and so forth, and then etching the substrate so as to reach a point deeper than the bottom of the p-well 119.

Further, the storage capacitor may be employed in combination with the MOS capacitance of the prior art device. If plural groove shaped capacitances are provided per single pixel, a further larger storage capacitance can be obtained, which is highly desirable.

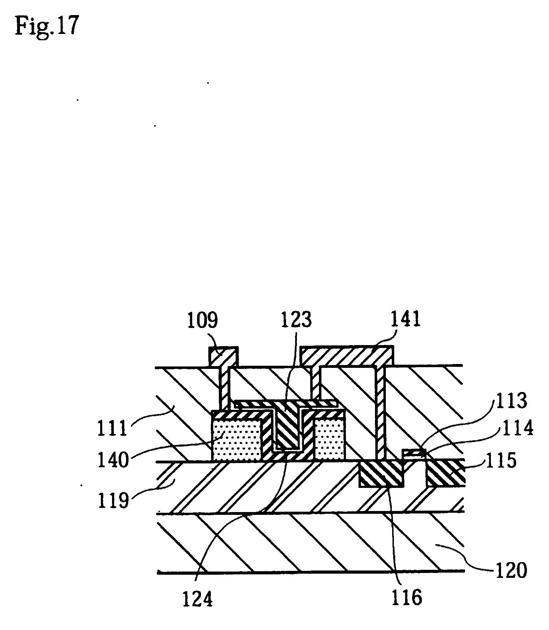

Although the example of Fig. 16 obtains a capacitance by the side wall of the groove provided in the p-well 119, such a construction shown in Fig. 17 may be employed that a projected region 140 is formed on the p-well 119 and a groove is provided in the projected region 140 so as to obtain a capacitance by a side wall of the groove. Note that in Fig. 17, the lower capacitive electrode 124 is connected to the common voltage line 109, and the upper capacitive electrode 123 is connected to the source 116 via a capacitance-source connecting line 141.

EMBODIMENT 6

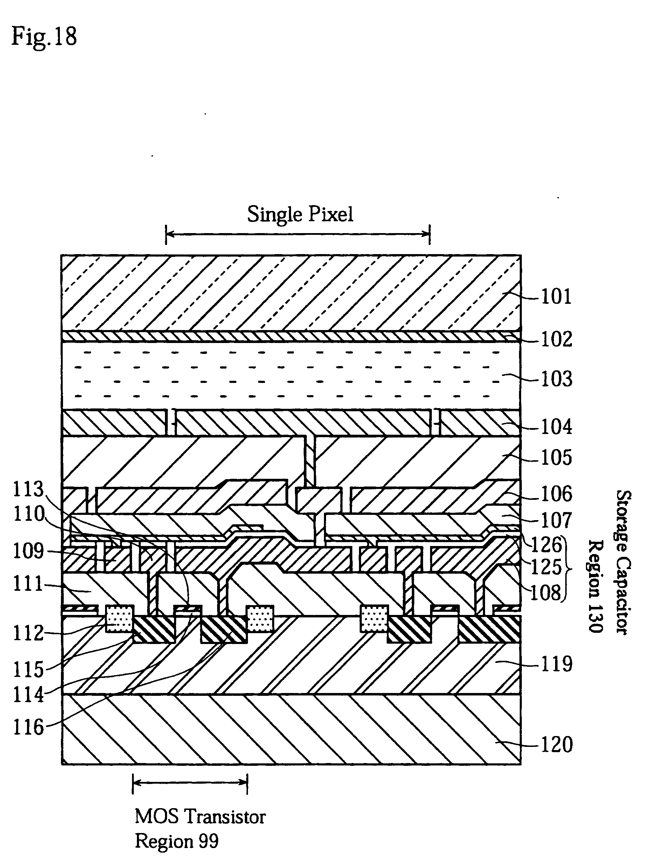

Fig. 18 shows a cross sectional view of a reflective-type LCD device according to Embodiment 4. In this embodiment, in place of providing a storage capacitance by MOS in the prior art device, a capacitance by an oxide layer is formed on the first light blocking layer 108. Specifically, a storage capacitor 130 in Embodiment 6 is composed of a first light blocking layer 108, a capacitive electrode 126, and a capacitive oxide layer 125 sandwiched between the first light blocking layer 108 and the capacitive electrode 126, and the capacitive electrode 126 is connected to a common voltage line 109. Having such a configuration, a storage capacitance $C_{stg}$ is formed in the storage capacitor 130.

In the prior art device, an area of the storage capacitor cannot be made larger than (an area of a single pixel) — (an occupied area of a MOS transistor), but in a device according to Embodiment 6, since the capacitive oxide layer 125 can be formed over the MOS transistor 99, an upper limit of an area of the storage capacitor is virtually an area of a single pixel per se. Thereby, a larger storage capacitance can be obtained than that of the prior art device, and high quality images free from flicker can be attained even in a small-sized, high resolution panel.

The capacitive electrode 126 may be a metal such as Al and the like, or may be an n-type or p-type semiconductor. The capacitive oxide layer 125 may be any insulator, for example, $SiO_2$. In Fig. 18, the capacitive oxide layer 125 is formed on the entire surface, but this is not essential and it is sufficient that the capacitive oxide layer 125 is present at least a portion overlapping the capacitive electrode 126.

In addition, other than a configuration shown in Fig. 18, a portion or an entire portion of, for example, the second light blocking layer 106 or the reflective pixel electrode 104 may be used for one of the electrodes. In any of such configurations, it is sufficient that the first insulating layer 11 is provided and that a portion or an entire portion of the storage capacitor is formed upward of the first insulating layer 111.

Supplementary Remarks for Embodiments 3 to 6

In the foregoing Embodiments 3 to 6, the common voltage line 109 may be omitted. Specifically, the storage capacitor is not provided between the reflective pixel electrode and the common voltage line, but may be formed, for example, between the scanning line either in the upstream or the downstream and the reflective pixel electrode.

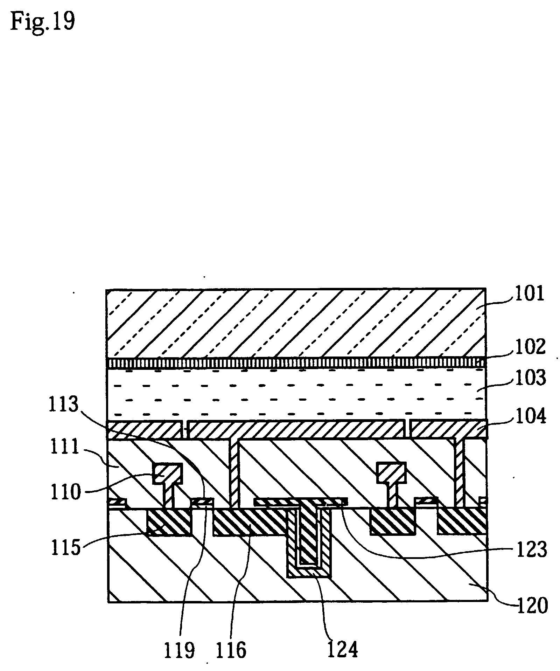

The planarizing layer 105, the second light blocking layer 106, the second insulating layer 107, the first light blocking layer 108, the field oxide layer 112, the p-well 119 and so forth are also not essential to the present invention, although it is preferable that these components are provided. In particular, the p-well 119 may be omitted and instead a p-type Si substrate may be employed. For example, a simplest example of a reflective-type LCD device according to Embodiment 5, in which capacitance is obtained by a side wall of a groove, may be such a configuration shown in Fig. 19.

In addition, the MOS transistors shown in Embodiments 3 to 6 are n-channel MOS transistors (in which the charge carrier in the channel is electrons) but of course, p-channel MOS transistors (in which the charge carrier is holes) may be employed. When p-channel MOS transistors are employed, the substrate may be a p-type Si substrate in which n-well is provided, or an n-type substrate alone.

The substrate need not be a crystalline Si substrate, but may be a poly-crystalline Si substrate or may be an SOI (silicon on insulator) substrate.

In addition, a mode for the liquid crystal 4 is not particularly limited. Various modes may be employed such as TN (Twisted Nematic) liquid crystal, STN (Super Twisted Nematic) liquid crystal, ECB (Electrically Controlled Birefringence) type liquid crystal including VA liquid crystal (Vertical Alignment liquid crystal, or Homeotropic liquid crystal) and homogeneous alignment liquid crystal, bend-type liquid crystal, IPS (In-plane Switching) liquid crystal, GH (Guest-Host) liquid crystal, polymer dispersed liquid crystal, ferroelectric liquid crystal, anti-ferroelectric liquid crystal, and so forth. Furthermore, materials other than liquid crystal may be used if the materials are such that optical characteristics of the materials change by applying voltage. For example, it is considered that electro-optic crystals such as BSO (Bismuth Silicon Oxide) and the like, and materials that show electroluminescence can be used for such materials.

Further, it is of course possible to combine some of the foregoing Embodiments 3 to 6. For example, such a configuration is possible that a groove is formed on a surface of a semiconductor substrate, and the storage capacitor may be formed with the use of a ferroelectric thin film or $Ta_2O_5$ in the groove. Further, the storage capacitor may be formed upward of the first insulating layer 111 with the use of a ferroelectric thin film or $Ta_2O_5$.

EMBODIMENT 7

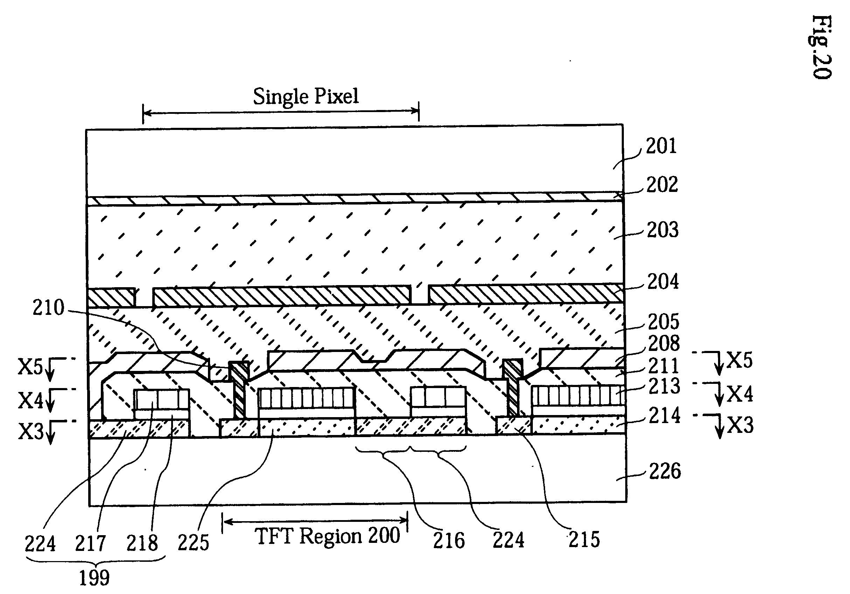

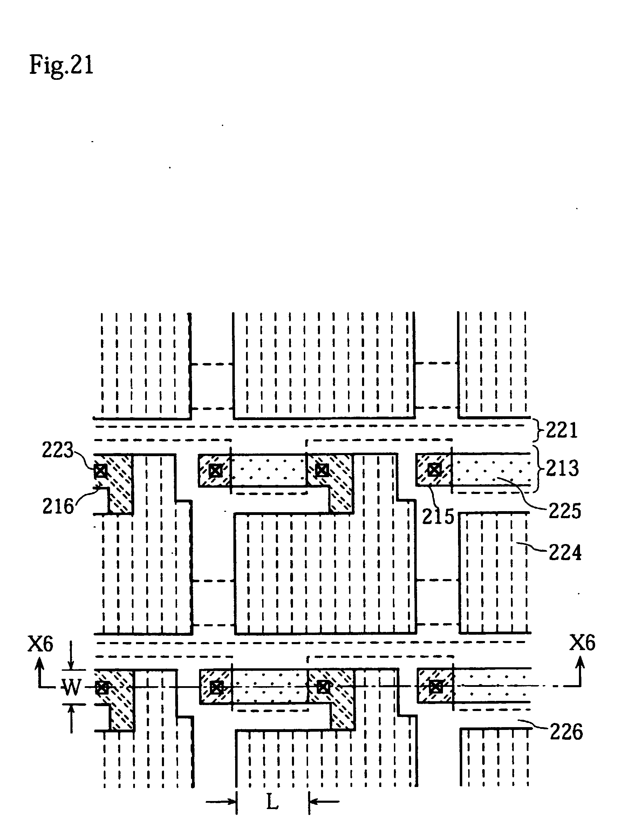

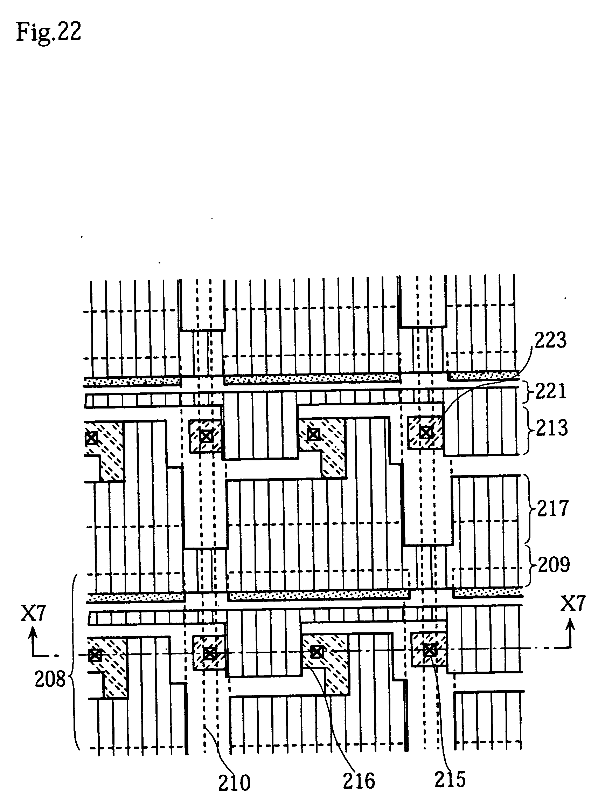

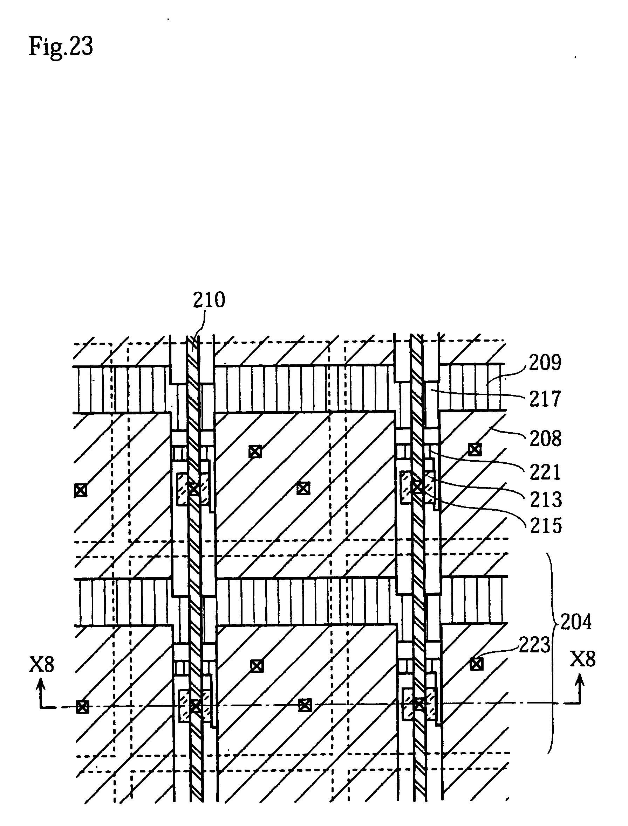

Fig.20 shows a sectional view of a reflective-type LCD device in accordance with Embodiment 7, Fig. 21 shows a cross sectional view taken along the line X3-X3 in Fig. 20, Fig 22 shows a cross sectional view taken along the line X4-X4 in Fig. 20, and Fig. 23 shows a cross sectional view taken along the line X5-X5 in Fig. 20. It is noted that Fig. 20 also shows a cross sectional view taken along the line X6-X6 in Fig. 21, likewise a cross sectional view taken along the line X7-X7 in Fig. 22, and likewise a cross sectional view taken along the line X8-X8 in Fig. 23. This Embodiment 7 is characterized in that a variation of a pixel electrode voltage is prevented by adjusting a ratio W/L, which is an index indicating a charging performance of TFT as a pixel switching element.

A reflective-type LCD device according to Embodiment 7 employs a semiconductor substrate in which a poly-crystalline Si thin film is formed on glass (or on quartz). A configuration and an operation of the device according to Embodiment 7 slightly differ from the foregoing devices according to Embodiment 1 to 6 in which a single crystal Si substrate is used.

More specifically, a reflective-type LCD device according to Embodiment 7 comprises as its main components a TFT 200, a signal line 210, a common voltage line 209 (not shown in Fig. 20), a scanning line (not shown in Fig. 20), a reflective pixel electrode 204, a liquid crystal 203, a storage capacitor 199, and so forth. The storage capacitor 199 is composed of an upper capacitive electrode 217, a lower capacitive electrode 224, and a capacitive oxide layer 218.

A reflective-type LCD device having the above-described configuration can be produced in the following manner.

1) On a glass substrate 226, a poly-crystalline Si is formed in a film, and by using patterning, the regions corresponding to a drain 215, a source 216, a channel 225, and the lower capacitive electrode 224, are formed. (Fig. 21 illustrates a cross sectional view when this layer is formed.)

2) Then, n+ ions of phosphorus (P) are implanted to a region corresponding to the lower capacitive electrode 224 to reduce resistance.

3) An $SiO_2$ thin film, which corresponds to a gate oxide layer 214 and a capacitive oxide layer 218 in the TFT 200, is deposited.

4) A gate 213, a scanning line 221, a common voltage line 209, and an upper capacitive electrode 217 are formed of poly-crystalline Si. (Fig. 22 illustrates a cross sectional view when this layer is formed.)

5) Then, n+ ions of phosphorus (P) are implanted on the entire surface to form a drain 215 and a source 216 of TFT.

6) PSG (phosphorus glass) corresponding to an insulating layer 211 is deposited on the entire surface, and contact holes 223 are formed at required positions.

7) Al is deposited on the entire surface, and patterning is performed. Thereby a light blocking layer 208 and a signal line 210 are formed. (Fig. 23 illustrates a cross sectional view when this layer is formed.)

8) Polyimide is applied on the entire surface, and the entire surface is planarized by CMP (chemical mechanical polishing). Then, contact holes are formed. This forms a planarizing layer 205.

9) Al is again deposited on the entire surface, and patterning is performed. Thereby a reflective pixel electrode 204 is formed.

10) An ITO (indium tin oxide) electrode 202 is formed on a counter glass substrate (counter substrate 1).

11) An alignment layer (not shown) is coated on the reflective pixel electrode 204 formed on the Si substrate and on the ITO electrode formed on the counter substrate 201, and an alignment treatment such as rubbing and optical alignment treatment is performed.

12) The two substrates are attached together and a liquid crystal 203 is injected into the gap between the two substrates. Thus, a reflective-type LCD device is produced.

It is to be understood that the materials shown above are given for illustrative purposes only. For example, the gate oxide layer 214 may be formed of such insulators as $Ta_2O_5$ and $Si_3N_4$, (or a layered material made of these, or a mixed material of these), in place of $SiO_2$. The insulating layer may be formed of such insulators as polyimide, $SiO_2$, $Si_3N_4$ and so forth, in place of PSG. The planarizing layer for CMP may be likewise formed of PSG, $SiO_2$, $Si_3N_4$, and so forth.

The light blocking layer and the reflective pixel electrode are not limited to Al. For example, Cr, Ag, Au, ITO, or alloys thereof, or mixtures thereof, or the like may also be employed. Further, a very small amount of impurities may be contained in these metals. In addition, a transparent electrode made of ZnO may be employed in place of that of ITO.

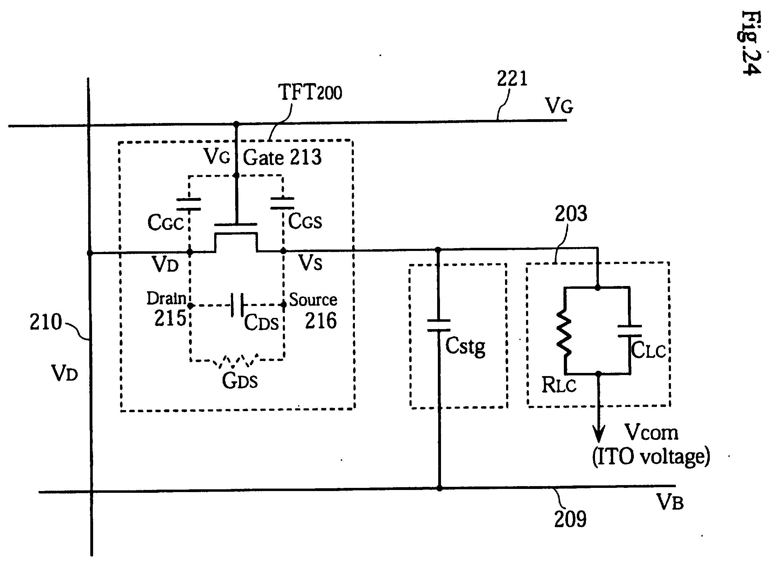

An equivalent circuit of a single pixel in the reflective-type LCD device is shown in Fig. 24. The gate 213 of the TFT 200 is connected to the scanning line 212 (voltage $V_G$), and the drain 215 is connected to the signal line 210 (voltage $V_D$). The source 216 is connected to the reflective pixel electrode 204 via the light blocking layer 208, and to the lower capacitive electrode 224. The ITO electrode 202 is kept at a constant voltage $V_{com}$ such that a time average of applied voltage to the liquid crystal results in approximately 0. The upper capacitive electrode 217 is connected to the common voltage line 209 and is dropped at a constant voltage $V_B$. The lower capacitive electrode 224 is connected to the source 216, and a storage capacitance $C_{stg}$ is formed between the upper capacitive electrode 217 and the lower capacitive electrode 224. Note that in Fig. 24, $C_{GS}$, $C_{GD}$, $C_{DS}$, and so forth shown with using dashed lines are stray capacitances existing between each of the layers, and a capacitance formed between the gate 213 and the channel 225 directly under the gate 213. $R_{LC}$ denotes a resistance of the liquid crystal.

When a high luminance light is projected to the reflective-type LCD device, a portion of the light is transmitted from gaps between the reflective pixel electrodes 204, through the planarizing layer 205, the insulating layer 211, and finally to the channel 225. Thereby, carriers (holes and electrons) are generated by photoconduction effect in the channel 225, and a leakage current is generated between the drain 215 and the source 216. $G_{DS}$ in Fig. 24 denotes a conductance caused by this leakage.

In this circuit, since the periphery of the source 216 is not a p-n junction, a photoleakage current $I_P$ as shown in Fig. 54 does not occur.

Next, an operation of the reflective-type LCD device is detailed. The basic operation is similar to that of the prior art device. The difference is that a leakage current by light is generated not in a reverse-biased region between the source and the p-well, but in a channel region between the drain and the source.

In this case, the conductance by leakage is represented by the following expression (19).

$$G_{DS} = \sigma \, D \, (W/L) \tag{19}$$

In the above expression, $\sigma$ denotes a photoconductance, which is proportional to an illuminance of a projecting light. W denotes a width of the channel, L denotes a length of the channel, and D denotes a thickness of the poly-crystalline Si layer in the channel region. The greater the value of $G_{DS}$ is, the greater the photoleakage current in the channel region, resulting in greater flicker, since the photoleakage current causes the same effect as that of $I_P$ in the case of the single crystal Si.

In order to suppress $G_{DS}$, it is effective that a ratio W/L be made larger. According to the configuration shown in Fig. 20, the reflective-type LCD devices having a ratio W/L of 0.002, 0.005, 0.05, 0.5, 1.0, 1.5, and 2.0 respectively were prepared (by fixing W = 10 μm and varying L), and the displayed images were observed. As a result, no obvious flicker was observed in the devices having a ratio W/L = 1.5 or lower, whereas substantial flicker was observed in the device having a ratio W/L = 2.0. The reflective-type LCD devices used in the experiment had a pixel pitch of μm and $1024 \times 768$ pixels, and the projecting light illuminance was 1 million lx (lux). It is noted that if the ratio W/L is extremely small, charging during a gate selected period becomes insufficient, causing image deterioration such as a luminance variation. This corresponds to a phenomenon that in the expression (3) shown in the description of the prior art device, a constant k representing charging performance becomes smaller and accordingly a time constant of charging $\tau$ becomes larger. In the experiment, the devices having a ratio W/L of 0.005 or larger did not result in such a luminance variation, but the device having a ratio W/L of 0.002 showed a considerable luminance variation.

As understood from the result of the experiment shown above, it is desirable that a range of the ratio W/L be 0.005 to 1.5, in which range a good quality image can be attained.

As for the lower limit of the ratio W/L, an additional explanation is now given below. When comparing a liquid crystal panel used for a projector and a direct view type liquid crystal panel, since the liquid crystal panel for a projector has a smaller pixel size, a storage capacitance (and a liquid crystal capacitance) is accordingly smaller, requiring a smaller electric charge to be supplied during a gate selected period. In addition, since a charging performance of the transistor during a gate selected period is determined by a ratio of the channel length and the channel width W/L, not by an area of the transistor, a charging performance of the transistor in the LC panel for a projector and that in the direct view type LC panel are equal, assuming that the transistor in the former has a similar shape in a plane to that in the latter. Therefore, in an LC panel for a projector, a lower limit of the ratio W/L can be made remarkably smaller than that in a direct view type LC panel (in which the ratio W/L is normally approximately 2-10).

In the expression (19), it might be possible that a thickness D be made smaller. However, a certain thickness must be ensured in the gate oxide layer 214 and the capacitive oxide layer 218 so that the influences of leakage current or tunnel current do not occur, and therefore a thickness D cannot be made small infinitely.

EMBODIMENT 8

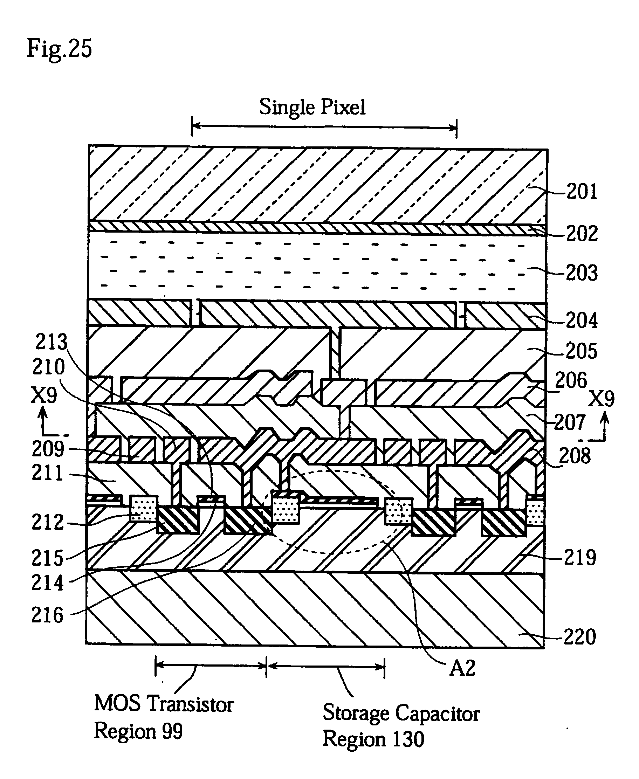

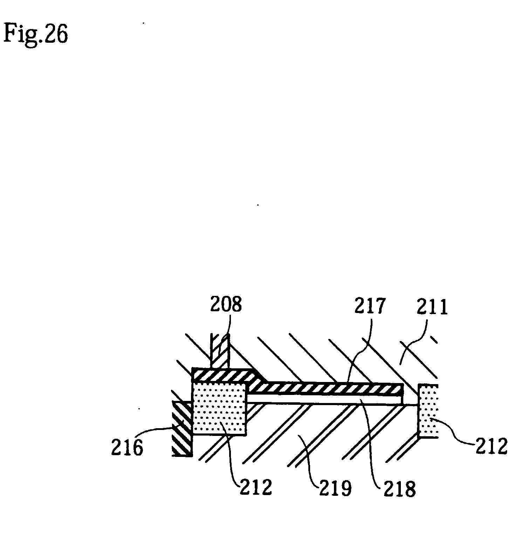

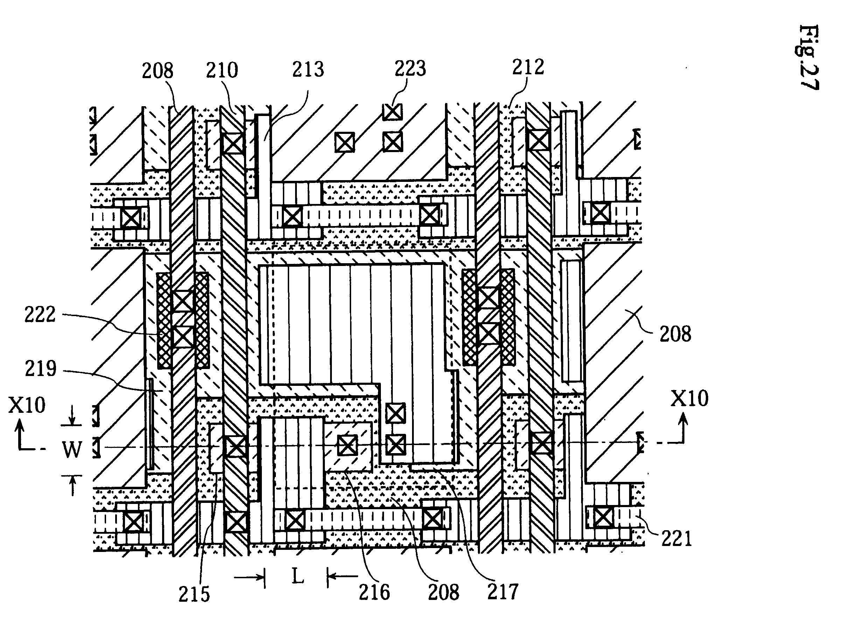

Fig. 25 shows a cross sectional view of a reflective-type LCD device according to Embodiment 8, Fig. 26 shows an enlarged view of a portion A2 in Fig. 25, and Fig. 27 shows a cross sectional view taken along the line X9-X9 in Fig. 25. Note that Fig. 25 is a cross sectional view taken along the line X10-X10 in Fig. 27. Unlike the foregoing Embodiment 7, this Embodiment 8 employs a single crystal Si substrate and, in place of the TFT in Embodiment 7, an n-channel MOS transistor 99. For the storage capacitor, a MOS capacitance is employed. This Embodiment 8 is characterized in that a variation of a pixel electrode voltage is prevented by adjusting a ratio W/L, which is an index indicating a charging performance of the MOS transistor as a pixel switching element.

As shown in Fig. 24, the reflective-type LCD device comprises a counter substrate 201, an ITO electrode 202, a liquid crystal 203, a reflective pixel electrode 204, a planarizing layer 205, a second light blocking layer 206, a second insulating layer 207, a first light blocking layer 208, a common voltage line 209, a signal line 210, a first insulating layer 211, a field oxide layer 212, a gate 213, a gate oxide layer 214, a drain 215, a source 216, an upper capacitive electrode 217, a capacitive oxide layer 218, a p-well layer 219, an n-type crystalline substrate 220, a scanning line 221, a p-well contact region 222, and a contact hole 223.

The reflective-type LCD device according to Embodiment 8 can be produced in a similar manner to that in the prior art device.

It is to be understood that the materials shown above are given for illustrative purposes only. For example, the gate oxide layer 214 may be formed of such insulators as $Ta_2O_5$ and $Si_3N_4$, (or a layered material made of these, or a mixed material of these), in place of $SiO_2$. The insulating layer may be formed of such insulators as polyimide, $SiO_2$, $Si_3N_4$ and so forth, in place of PSG. The planarizing layer for CMP may be likewise formed of PSG, $SiO_2$, $Si_3N_4$, and so forth. The light blocking layer and the reflective pixel electrode are not limited to Al. For example, Cr, Ag, Au, ITO, or alloys thereof, or mixtures thereof, or the like may also be employed. Further, a very small amount of impurities may be contained in these metals. In addition, a transparent electrode made of ZnO may be employed in place of that of ITO.

An equivalent circuit of a single pixel in the reflective-type LCD device is the same as shown in Fig. 54 of the prior art device. The operation of the reflective-type LCD device is also approximately the same as that of the prior art device. In this reflective-type LCD device as well, in addition to the photoleakage current $I_P$ a small amount of photocurrent generated between the source and the drain (resulting from $G_{DS}$) is present as a photoleakage current. Therefore, as in a similar manner to that in Embodiment 7, by making a ratio W/L large, flicker can be suppressed. It is preferable that a ratio W/L be in the range of 0.005 to 1.5, as in Embodiment 7.

In Fig. 25, although the storage capacitor is formed between the capacitive electrode 217 of poly-crystalline Si and the p-well 219, but it is not limited thereto. For example, the storage capacitor may be formed by firstly forming a metal layer or a semiconductor layer on the p-well 219, and then forming the capacitive oxide layer 218 between the formed metal or semiconductor layer and the capacitive electrode 217.

EMBODIMENT 9

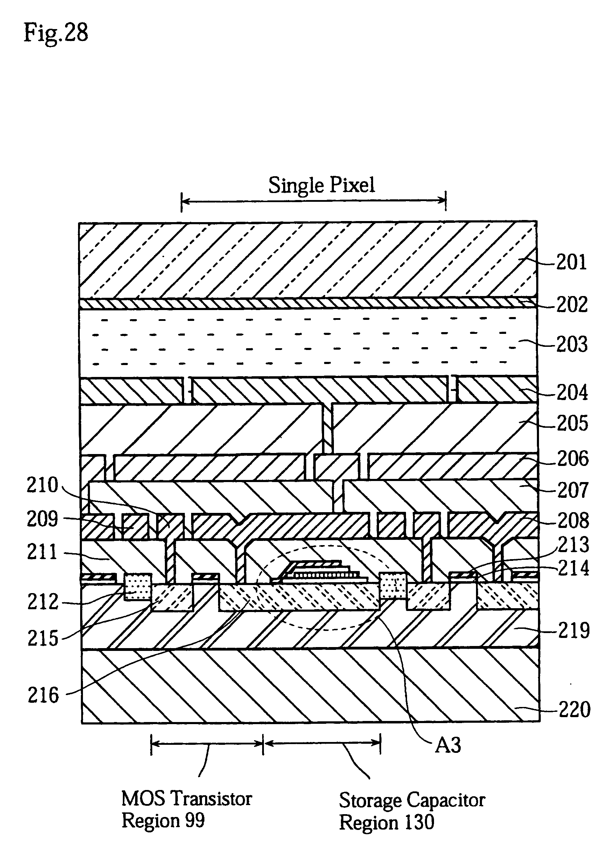

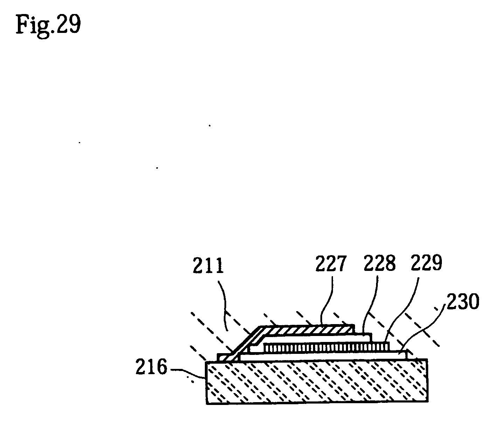

Fig. 28 shows a cross sectional view of a reflective-type LCD device according to Embodiment 3, Fig. 29 shows an enlarged view of a portion A3 in Fig. 28. In this Embodiment 9, a single crystal Si substrate is employed as in Embodiment 8 and a variation of a pixel electrode voltage is prevented by employing a storage capacitor having a multi-layered structure.

The basic configuration of Embodiment 9 is identical to that of Embodiment 9, but characterized in that, on a source 216 having an extended area, a second insulating layer 230, a second electrode 229, a first insulating layer 228, and a first electrode 227 are formed. The source 216 is electrically connected to the first electrode 227, and the second electrode 228 is connected to a common voltage line 209 (the connection is not shown in Fig. 28).

An equivalent circuit for a single pixel in the reflective-type LCD device is identical to Fig. 54. However, since the storage capacitor is formed by two insulating layer 228 and 230, the capacitance value increases twice as large as that of the prior art device. Thereby, flicker can be suppressed.

It is preferable that the insulating layers 228 and 230 be formed of an insulator such as, for example, $SiO_2$, $Ta_2O_5$, and $Si_2N_4$ (or a layered material thereof, or a mixture thereof). In addition, it is preferable that the storage capacitive electrode 227 and 229 be formed of, for example, a metal such as Al, Cr, Au and Ag, or a semiconductor such as Si, or a transparent electrode such as ITO, or alloys thereof, or mixtures thereof. A very small amount of impurities may be mixed therein.

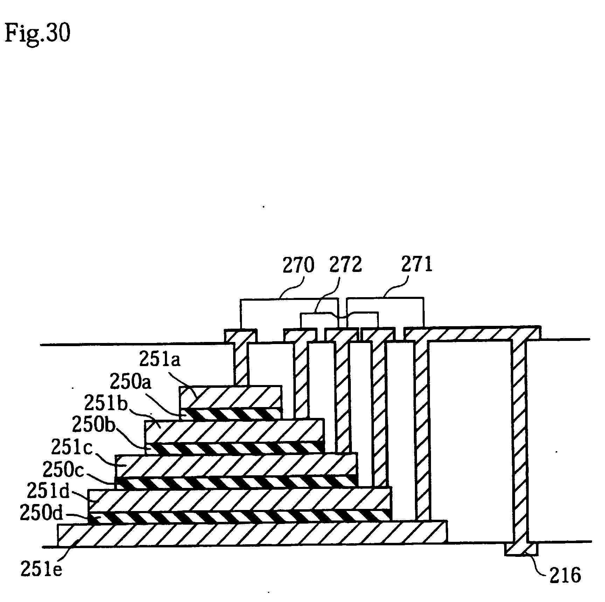

Furthermore, if the number of the insulating layers are increased to 3 layers, 4 layers... , and so forth, the storage capacitance accordingly increases to 3 times larger, 4 times larger..., and so forth. This makes it possible to achieve a further higher resolution and a further reduction in the device size. For example, as shown in Fig. 30, four insulating layers 250a, 250b, 250c, and 250d are respectively sandwiched by five layers of conductive materials 251a, 251b, 251c, 251d, and 251e, and the conductive materials 251a, 251b, 251c, 251d, and 251e are connected to the common voltage line. In Fig. 30, a connecting line 270 for connecting the conductive materials 251a and 251c, a connecting line 271 for connecting the conductive materials 251c and 251e, and a connecting line 272 for connecting the conductive materials 251b and 251d are schematically illustrated. By employing such a configuration, the storage capacitance can be increased. Generally, when N layers of insulating layers (where N is an integer equal to or greater than 2) are respectively sandwiched by N+ 1 layers of conductive materials or semiconductors and the N+1 layers of conductive materials or semiconductors are connected to either the source 216 or the common voltage line 209 (at least one of the N+1 layers of conductive materials or semiconductors must be connected to each of the source 216 and the common voltage line 209), the storage capacitance can be increased and desired effects can be thereby obtained.

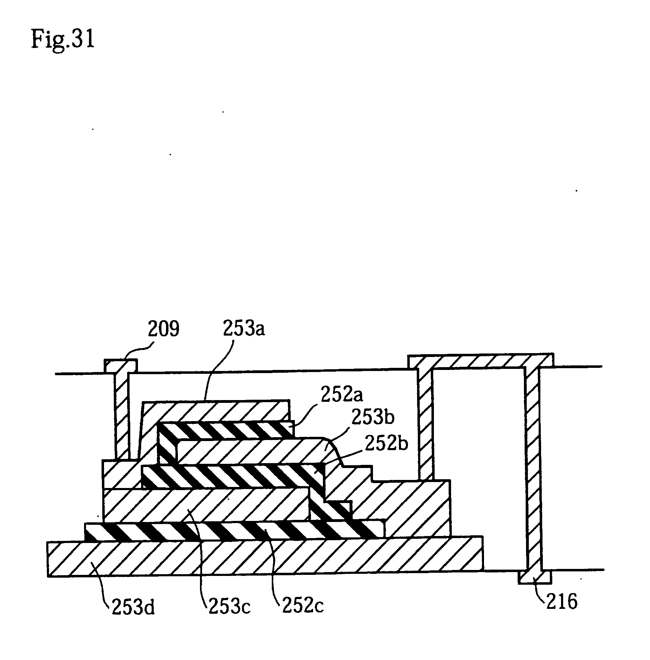

Alternatively, as shown in Fig. 31, such a configuration may be employed that 3 insulating layers 252a, 252b, and 252c are respectively sandwiched by 4 conductive materials 253a, 253b, 253c, and 253d, the conductive materials 253a and 253c are connected to the common voltage line 209, and the conductive materials 253b and 253d are connected to the source 216. In other words, such a configuration may be that N+1 layers of conductive materials or semiconductors are in turn connected to the source 216 or the common voltage line 209. This configuration achieves an N times as large storage capacitance, which is most preferable.

Although a single crystal Si is used as a substrate in the above-described examples, the same multi-layered storage capacitor can be configured using a substrate made of poly-crystalline Si and glass (or quartz) as shown in Fig. 21, and this configuration also achieves desired effects.

EMBODIMENT 10

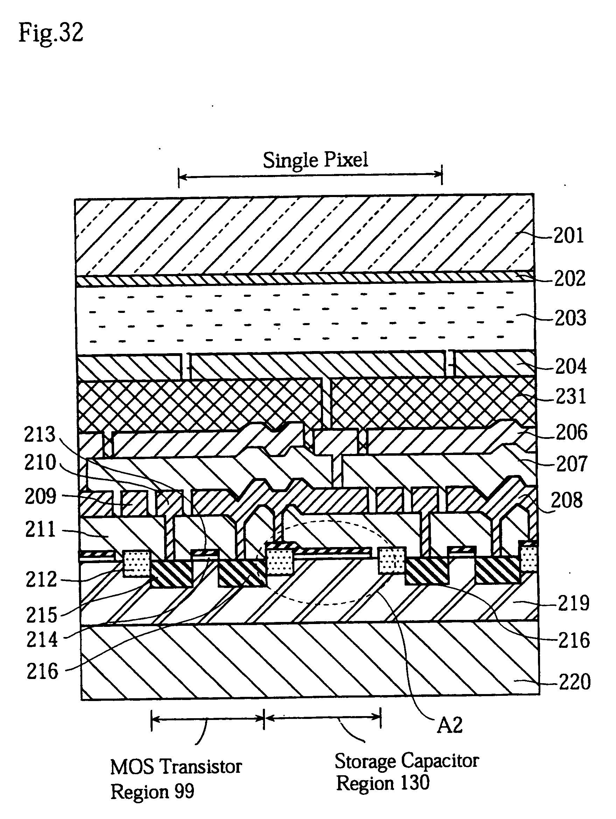

Fig. 32 shows a cross sectional view of a reflective-type LCD device according to Embodiment 10. Embodiment 10 is similar to the foregoing Embodiment 9. Embodiment 10 differs from the foregoing Embodiment 9 in that at least one of the insulating layers (here, the planarizing layer) is formed of an organic insulator containing carbon particles (a photoresist layer 231 containing carbon particles in Fig. 32). An organic insulator containing carbon particles has a large light absorption coefficient, and therefore it is possible to block a light incoming through gaps of the reflective pixel electrodes 204 into the MOS transistors inside the device and consequently to suppress flicker. Examples of such organic insulating layer materials containing carbon particles include a material in which carbon particles are contained in a photoresist or polyimide. From the viewpoint of the electrical insulation between the pixels and between the conductor light blocking layers, it is preferable that a relative resistivity of the organic insulator containing carbon particles be sufficiently large.

It is possible to employ the organic insulator layer containing carbon particles for an insulating layer (for example, a first insulating layer 211 and a second insulating layer 207 in Fig. 32) as well as the planarizing layer. It is also possible to employ the organic insulator layer containing carbon particles for more than one layer of the planarizing layer and the insulating layers. It is also possible that the planarizing layer or one of the insulating layers may be composed of a layered structure comprising a plurality of materials and at least one of the layers may be composed of the organic insulator layer containing carbon particles.

Although this embodiment describes a device using a single crystal Si substrate, such a substrate as in Embodiment 7 that poly-crystalline Si is formed on a glass (or quartz) substrate may also be used.

EMBODIMENT 11

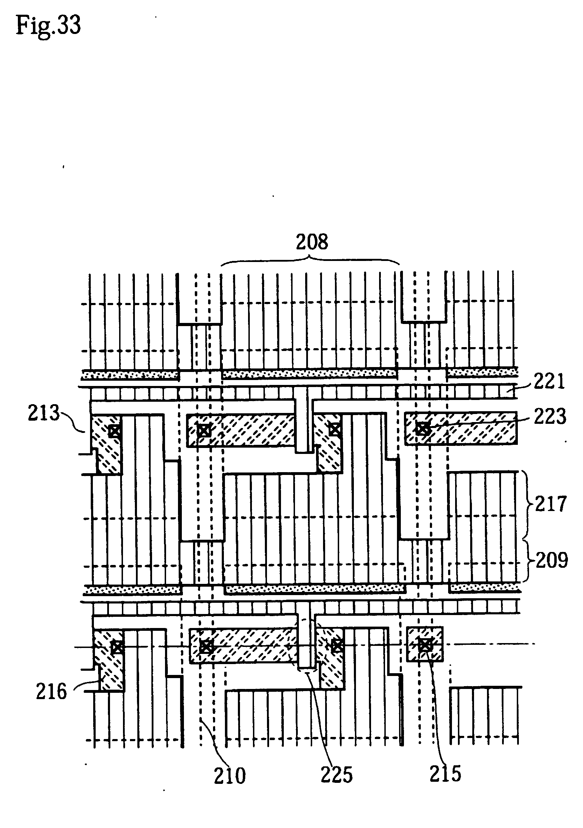

Fig. 33 shows a horizontal sectional view of a reflective-type LCD device according to Embodiment 11. The reflective-type LCD device according to Embodiment 11 has basically the same configuration in the cross section and electrical connection as that of the prior art device, but differs from the prior art device in a relative position in a horizontal section of a light blocking layer 208 existing over the MOS transistor 99 on the substrate, with the insulating layers interposed therebetween. Specifically, the channel 225 (provided beneath the gate 213) of the MOS transistor 99 is disposed so that the channel 225 is approximately the center of the light blocking layer 208.

By employing such a disposition, even if a light intensity of a part of the reading light passing through the gaps between the pixel electrodes and reaching the edge of the light blocking layer 208 is the same as that in the prior art device, the light is attenuated corresponding to the increased distance from the edge of the light blocking layer 208 to the channel, and as a result, light blocking performance is improved.

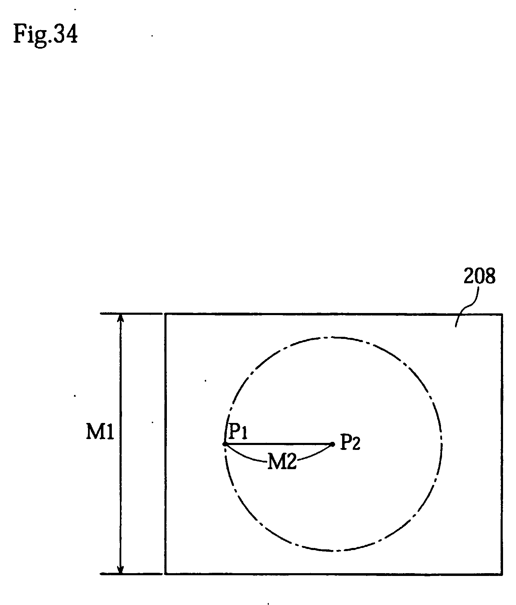

Regarding a relative positioning of the channel 225 and the light blocking layer 208, it is preferable that a distance in a plan view between a center (a geometrical centroid in a plan view) of the channel 225 and a center (a geometrical centroid in a plan view) of the light blocking layer 208 is equal to or less than 2/3 of a square root of an area of the light blocking layer 208. For example, as shown in Fig. 34, in the case where the light blocking layer 208 has a square-like shape having a side length M1, it is preferable that a distance M2 between the center P1 of the channel and the center P2 of the light blocking layer 208 satisfy $M2 \leqq (2/3) \cdot M1$. In other words, the center of the channel P1 should be disposed in a circle having the center P2 and the diameter being $(2/3) \cdot M1$. If the light blocking layer 208 has a rectangular shape with 12 μm × 10 μm, the center of the channel should be disposed at a point whose distance from the center of the light blocking layer 208 is less than $(2/3) \times (12 \,\mu m \times 10 \,\mu m)^{1/2} \fallingdotseq 7.3 \,\mu m$. It is to be noted that the optimum range may be determined taking a thickness of the light blocking layer 208 into consideration. For example, in the case where a thickness of the light blocking layer is larger, the above-mentioned constant 2/3 may be changed to a value less than 2/3, while in the case where a thickness of the light blocking layer is smaller, the constant 2/3 may be changed to a value greater than 2/3.

Although this embodiment describes a device using a single crystal Si substrate, such a substrate that poly-crystalline Si is formed on a glass (or quartz) substrate as in Embodiment 7 may also be used.

Some of the preferred embodiments of the present invention have been described in Embodiments 7 to 11 above. In the foregoing Embodiments 7 to 11, the common voltage line 209 may be omitted. Specifically, the storage capacitor is not provided between the reflective pixel electrode 204 and the common voltage line 209, but may be formed, for example, between the scanning line 209 being either in the upstream or the downstream and the reflective pixel electrode 204. When the common voltage line 209 is employed, it may be provided parallel to the scanning line 221 as shown in Figs. 22 and 23, or parallel to the signal line 210 as shown in Fig. 27. In addition, the planarizing layer 205, the second light blocking layer 206, the second insulating layer 207, the first light blocking layer 208, the first insulating layer 211, the field oxide layer 212, the p-well 219 and so forth are also not essential in the present invention, although it is preferable that these components are provided. In Embodiments 10 and 11, however, at least one of the insulating layers or the planarizing layer is necessary. The number of layers in the light blocking structure may be further increased. In the case of a single crystal Si substrate, the p-well 219 may be omitted and instead, a p-type Si substrate may be employed.

Further, Embodiments 7, 9, and 11 describe the cases in which the lower capacitive electrode 224 in the storage capacitor is connected to the source 216 and the upper capacitive electrode 217 is connected to the common voltage line 209, and Embodiments 8 and 10 describe the cases in which the connections are the opposite of those in Embodiments 7, 9, and 11. However, in each of the embodiments, the connections are not limited to the ones described therein, and the opposite connections may be employed.

In addition, the capacitive oxide layer need not be provided on the same plane as the plane in which the MOS transistor or TFT is provided, and the oxide layer and the capacitive oxide layer may have a different thickness from each other. The capacitive oxide layer need not necessarily be a MOS capacitance. Although the planarizing step is required in order to obtain a sufficient reflectivity, the step is not necessarily essential to the present invention.

When poly-crystalline Si is employed, the substrate need not be glass or quartz, but may be a general insulator. For example, a plastic substrate or a sapphire substrate may be employed. In addition, the MOS transistors and TFTs described in the foregoing Embodiments are n-channel types (in which the charge carrier in the channel is electrons) but of course, p-channel types (in which the charge carrier is holes) may be employed. When p-channel MOS transistors are employed, the substrate may be a p-type Si substrate in which n-well is provided, or an n-type substrate alone.

The substrate need not be a crystalline Si substrate, but may be a poly-crystalline Si substrate or may be an SOI (silicon on insulator) substrate.

In addition, the MOS transistor and TFT may be provided in plural numbers in a pixel.

In addition, a mode for the liquid crystal 203 is not particularly limited. Various modes may be employed such as TN (Twisted Nematic) liquid crystal, STN (Super Twisted Nematic) liquid crystal, ECB (Electrically Controlled Birefringence) type liquid crystal including VA liquid crystal (Vertical Alignment liquid crystal, or Homeotropic liquid crystal) and homogeneous alignment liquid crystal, bend-type liquid crystal, IPS (In-plane Switching) liquid crystal, GH (Guest-Host) liquid crystal, polymer dispersed liquid crystal, ferroelectric liquid crystal, anti-ferroelectric liquid crystal, and so forth. Furthermore, materials other than liquid crystal may be used if the materials are such that optical characteristics of the materials change by applying voltage. For example, it is considered that electro-optic crystals such as BSO (Bismuth Silicon Oxide) and the like, and materials that show electroluminescence can be used for such materials.

Further, it is of course possible to combine some of the foregoing Embodiments 7 to 11.

EMBODIMENT 12

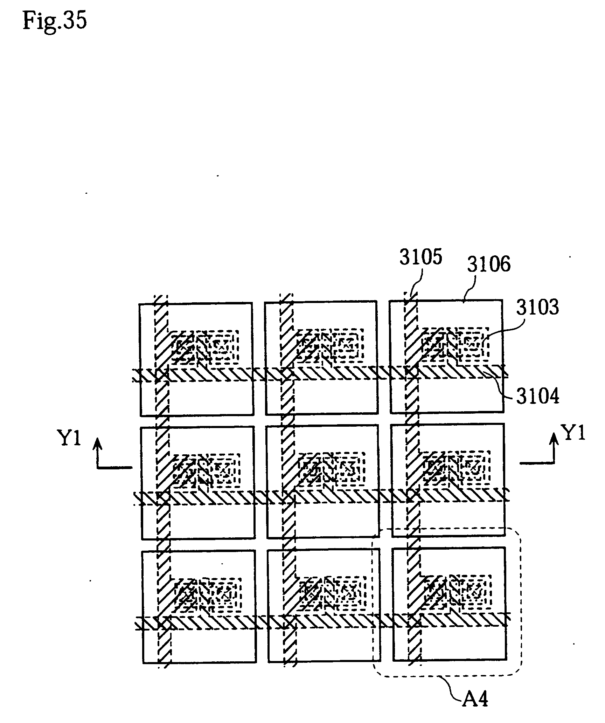

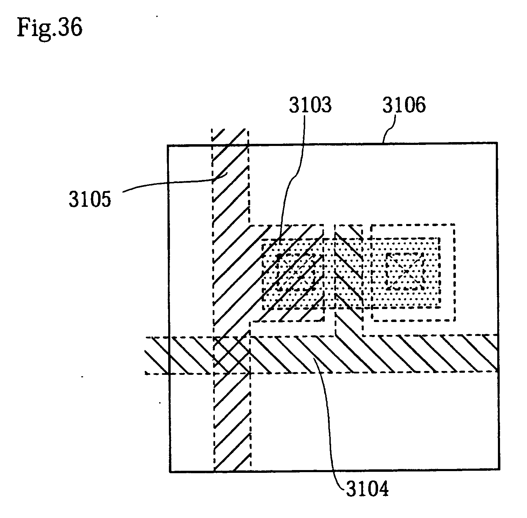

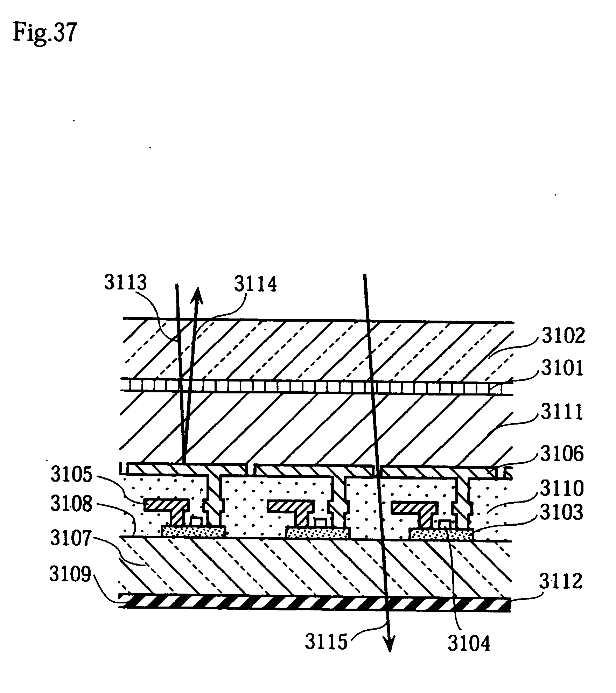

Fig. 35 shows a plan view of a reflective-type LCD device according to Embodiment 12, Fig. 36 shows an enlarged view of a portion A4 in Fig. 35, and Fig. 37 shows a cross sectional view taken along the line Y1-Y1 in Fig. 35. Embodiment 12 describes a reflective-type LCD device employing a substrate in which a poly-crystalline Si thin film is formed on a transparent insulating substrate (for example, a glass substrate or a quartz substrate), as in Embodiment 7. This Embodiment 12 is characterized in that a lower surface (back surface) of the insulating substrate is subjected to a surface treatment for preventing reflection of light in order to prevent interfacial reflection at the back surface of insulating substrate and thereby suppress a variation of pixel electrode voltages. Embodiments 13 to 17 to be described later are also characterized in that interfacial reflection at the back surface of the insulating substrate is prevented and thereby a variation of pixel electrode voltages is suppressed.

Shown in Figs. 35 to 37 are a counter electrode 3101, a first substrate 3102, a TFT 3103 as a pixel switching element, a scanning line 3104, a signal line 3105, a reflective pixel electrode 3106, an insulating substrate 3107, a front surface 3108 (a surface on which the TFT is formed) of the insulating substrate, a back surface 3109 (a surface on which the TFT is not formed) of the insulating substrate, an insulating layer 3110, a liquid crystal layer 3111, an anti-reflection treated layer 3112, an incident light 3113, a modulated output light 3114, and a transmitted light 3115.

The insulating substrate 3107 is composed of glass, a liquid crystal of the liquid crystal layer 3107 is composed of a vertical alignment (VA) mode liquid crystal using a nematic liquid crystal having a negative dielectric anisotropy, and the anti-reflection treated layer 3112 is composed of a multi-layered film of magnesium fluoride or silicon oxide / titanium oxide.

The pixel switching element 3103 is disposed under the reflective pixel electrode 3106 so as to be shielded from light. The scanning line 3104 and the signal line 3105 etc. are composed of opaque materials which reflect light and therefore disposed so that the areas of the lines occupying an area under the gap between the reflective electrodes is minimized, by which the light transmitted through the gap between the reflective electrodes next to each other can pass through the device as much as possible. Generally, scanning lines and signal lines are made of metals such as aluminum, or of poly-silicon in which impurities are doped.

In this Embodiment 12, by providing the anti-reflection layer 3112, more than 99 % of the transmitted light 3115 is discharged out of the device without causing interfacial reflection. Consequently, even with an incident light with an illuminance level of 1 million lux, a good display characteristic was obtained without deteriorating a contrast.

In fabricating the device, firstly the surface treatment was performed on the back surface of the insulating substrate 3107, and thereafter TFTs, electrodes and so forth were formed on the front surface, since such a surface treatment requires a high temperature in the fabricating step.

EMBODIMENT 13

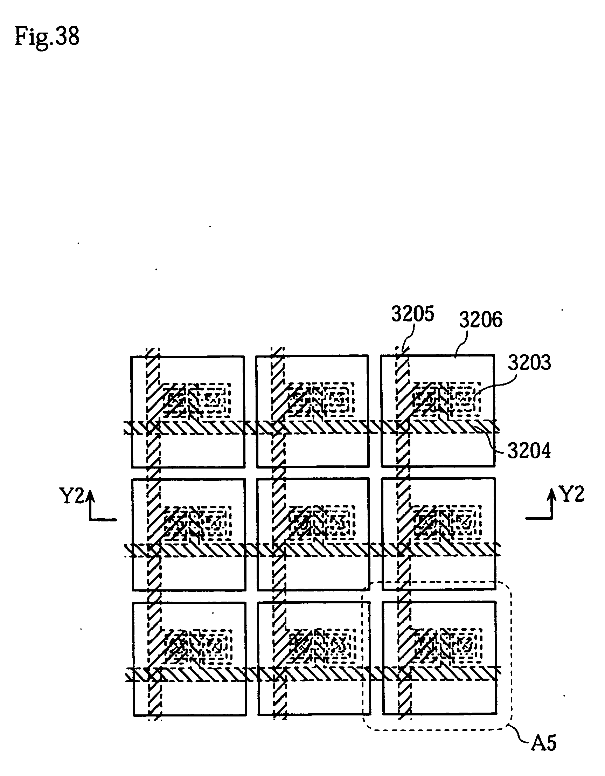

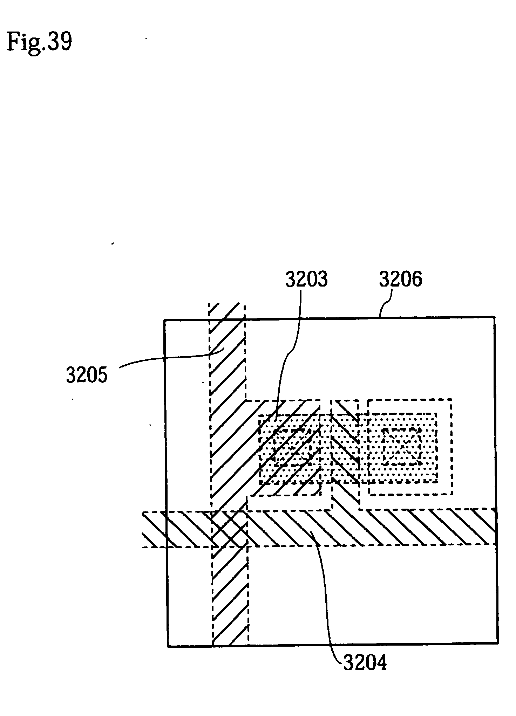

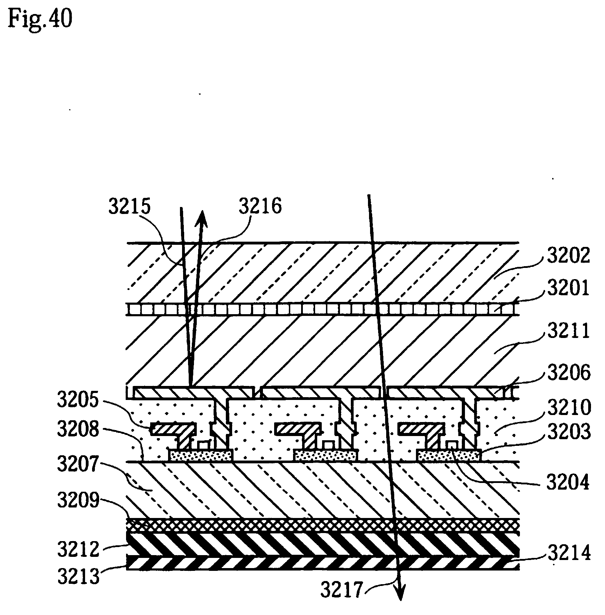

Fig. 38 shows a plan view of a reflective-type LCD device according to Embodiment 13, Fig. 39 shows an enlarged view of a portion A5 in Fig. 38, and Fig. 40 shows a cross sectional view taken along the line Y2-Y2 in Fig. 38. Shown in Fig. 38 to 40 are a counter electrode 3201, a counter substrate 3202, a TFT 3203, a scanning line 3204, a signal line 3205, a reflective pixel electrode 3206, an insulating substrate 3207 composed of glass, a front surface 3208 of the insulating substrate, a back surface 3209 of the insulating substrate, an insulating layer 3210, a liquid crystal layer 3211, an adhesive layer 3212, a film plate 3213, an anti-reflection treated layer 3214, an incident light 3215, a modulated output light 3216, and a transmitted light 3217.

Embodiment 13 employs a multi-layered film of magnesium fluoride or silicon oxide / titanium oxide is used for the anti-reflection treated layer 3214. Embodiment 13 is characterized in that firstly the anti-reflection treated layer 3214 is formed on one side of the transparent organic film plate 3213 and thereafter an adhesive material (adhesive layer 3212) is coated on the other side, and subsequently the film plate 3213 is attached to the back surface 3209 of the insulating substrate 3207 using the adhesive material (adhesive layer 3212). The rest of the configuration is identical to that of Embodiment 12. The reflective indices of glass, the adhesive material (adhesive layer 3212), and the film plate are approximately 1.5, and therefore virtually no interfacial reflection occurred at the back surface 3209 of the insulating substrate 3207.

Since the film 3213 is attached afterwards, the fabrication is made easy to a remarkable extent. Furthermore, if attaching of the film 3213 is performed after tests of the device confirm that the device is good, loss and cost can be reduced.

In the foregoing Embodiment 12, the anti-reflection treated layer is formed firstly, and therefore there are some restrictions in chemicals and process temperatures. By contrast, Embodiment 13 is free from such restrictions.

As described above, according to Embodiment 13, display performance approximately equal to that of Embodiment 12 is achieved by a simpler fabricating method.

EMBODIMENT 14

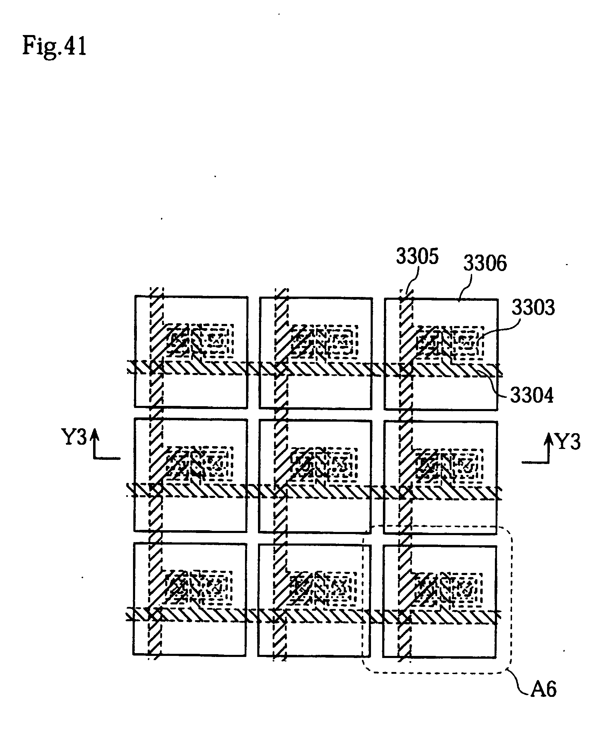

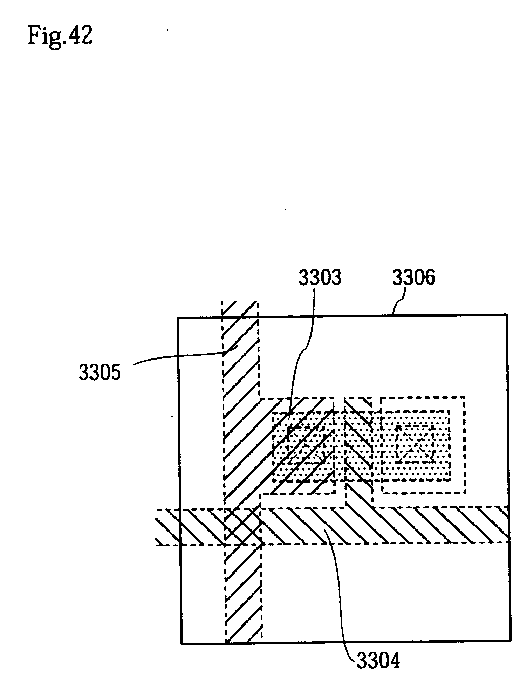

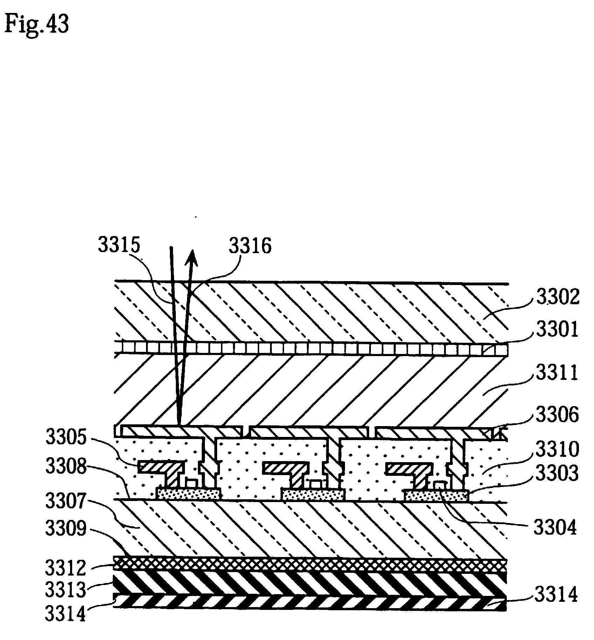

Fig. 41 shows a plan view of a reflective-type LCD device according to Embodiment 14, Fig. 42 shows an enlarged view of a portion A6 in Fig. 41, and Fig. 43 shows a cross sectional view taken along the line Y3-Y3 in Fig. 41. Shown in Fig. 41 to 43 are a counter electrode 3301, a counter substrate 3302, a TFT 3303, a scanning line 3304, a signal line 3305, a reflective pixel electrode 3306, an insulating substrate 3307, a front surface 3308 of the insulating substrate 3307, a back surface 3309 of the insulating substrate 3307 composed of glass, an insulating layer 3310, a liquid crystal layer 3311, an adhesive layer 3312, a pigment-containing film plate 3313, an anti-reflection treated layer 3314, an incident light 3315, a modulated output light 3316, and a transmitted light 3317.

This embodiment is identical to the foregoing Embodiment 13 except the pigment-containing film plate 3313. In the pigment-containing film plate 3313, the base film plate has a refractive index of approximately 1.5, which causes virtually no interfacial reflection.

The reflective-type LCD devices according to Embodiment 12 and 13 have a configuration such that the whole light passing through the gap between the reflective pixel electrodes are let out of the device, but they are not protected from the light incoming from the back of the device.

In reality, however, unless a structure that fully absorbs the transmitted light from the reflective-type LCD device is provided, the transmitted light from the device is reflected by external structures such as, for example, the casing 67 shown in Fig. 1, and reenters the device, causing degradation of the display performance.

In view of this, in this embodiment, a pigment is dispersed in the film plate in order to reduce the amount of light passing through the device. In addition, because the anti-reflection treated layer 3314 is provided, it is not necessary to absorb the whole light. Further, the reflected light coming from outside the device enters the pigment-containing film plate 3313, which is absorbed there.

Having such a configuration, the device according to Embodiment 14 achieved remarkably reduction in stray light in a liquid crystal projector set, and no degradation in contrast was observed up to a level of 500 million lux. It is noted, however, that because of the layer for absorbing a light, the absorbed light is turned into heat, causing a slight temperature rise of the reflective-type LCD device. In such a case, it may be preferable that a cooling system such as an air-cooling fan be provided. It is also noted that the pigment-containing film plate 3313 may be of any material that can absorb light, may contain a dye or the like material other than a pigment, and may be of such a material that the film per se is opaque or colored.

Regarding the wavelengths to be absorbed, at least part of the wavelengths of the incident light should be included. The pigment-containing film plate may preferably be, but certainly is not limited to, black.

The pigment-containing film plate 3313 may be a polarizing plate. A polarizing plate absorbs a polarized light component parallel to the absorbing axis of the polarizing plate, but allows a light component parallel to the transmission axis of the polarizing plate to pass through. A direction of polarization of the light reflected outside the device is rotated in most cases, and accordingly, most of the light which reenters the back surface of the device is absorbed. A polarizing plate is generally made of a plate in which a pigment or iodine is dispersed, but may be of any film plate which generates a polarization effect.

EMBODIMENT 15

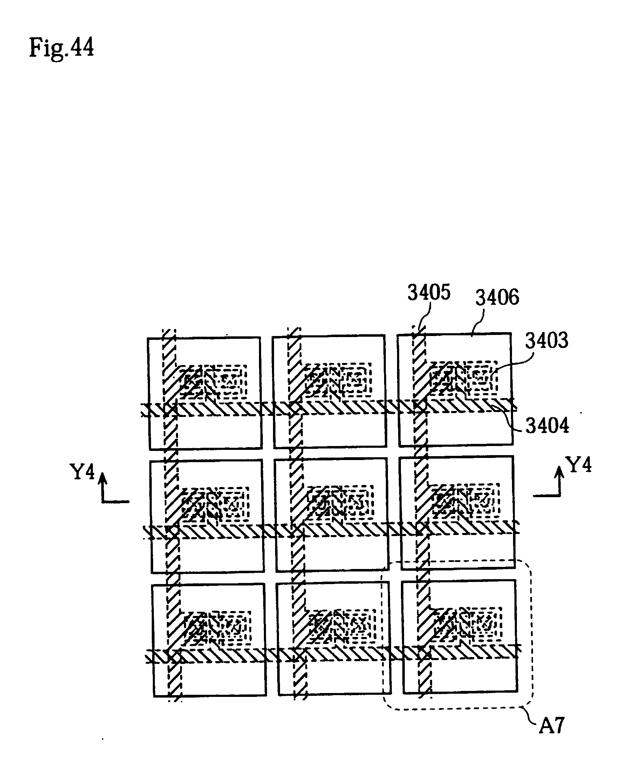

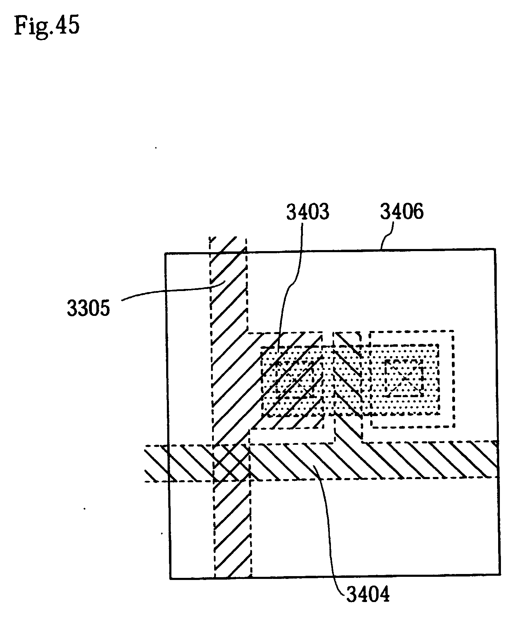

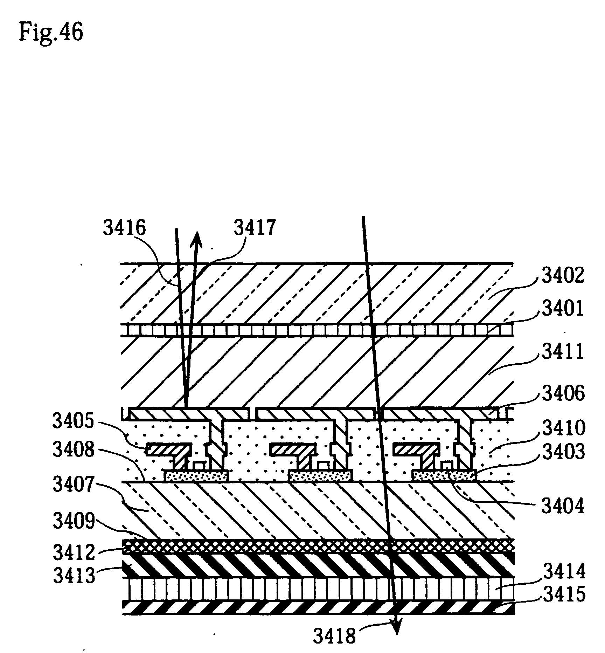

Fig. 44 shows a plan view of a reflective-type LCD device according to Embodiment 15, Fig. 45 shows an enlarged view of a portion A4 in Fig. 44, and Fig. 46 shows a cross sectional view taken along the line Y4-Y4 in Fig. 44. Shown in Fig. 44 to 46 are a counter electrode 3401, a counter substrate 3402, a TFT 3403, a scanning line 3404, a signal line 3405, a reflective pixel electrode 3406, a semiconductor substrate 3407, a front surface 3408 of the semiconductor substrate, a back surface 3409 of the semiconductor substrate, an insulating layer 3410, a liquid crystal layer 3411, an adhesive layer 3412, a polarizing plate 3413, a retardation plate 3414, an anti-reflection treated layer 3415, an incident light 3316, a modulated output light 3417, and a transmitted light 3418.

The configuration of the device according to this embodiment is approximately identical to that of the foregoing Embodiment 14, except that a polarizing plate is employed for the film plate, and the retardation plate 3414 is provided between the polarizing plate 3414 and the anti-reflection layer 3415. A refractive index of the retardation plate 3414 is also approximately 1.5. A phase difference by the retardation plate 3414 is preferable to be 1/4 of a wavelength of the incident light.

In Embodiment 15, the polarizing plate absorbs a polarized light component parallel to the absorbing axis of the polarizing plate, but allows a light component parallel to the transmitting axis to pass through, and a phase of the light component in a direction of the transmitting axis is shifted by $\lambda/4$. The shifted light is reflected outside the device, and the phase of the shifted light is further shifted by $\lambda/4$ when the light reenters the device from the back surface. Accordingly, a phase difference of $\lambda/2$ is caused when the light reenters the polarizing plate 3413, which makes the light be in agreement with the absorbing axis of the polarizing plate, and thus, much of the light is absorbed. Thereby, even when a material that reflects light (for example, a casing 67 shown in Fig. 1) was present in the vicinity of the back surface of the device, no degradation of contrast was observed up to a level of 500 million lux of incident light. It is noted that regarding a slight temperature rise of the reflective-type LCD device, the same discussion as given in Embodiment 14 applies.

Regarding the arrangement of the polarizing plate and the retardation plate, an arrangement shown in Fig. 46 is the most effective, but the polarizing plate and the retardation plate may be disposed in a reversed manner.

EMBODIMENT 16

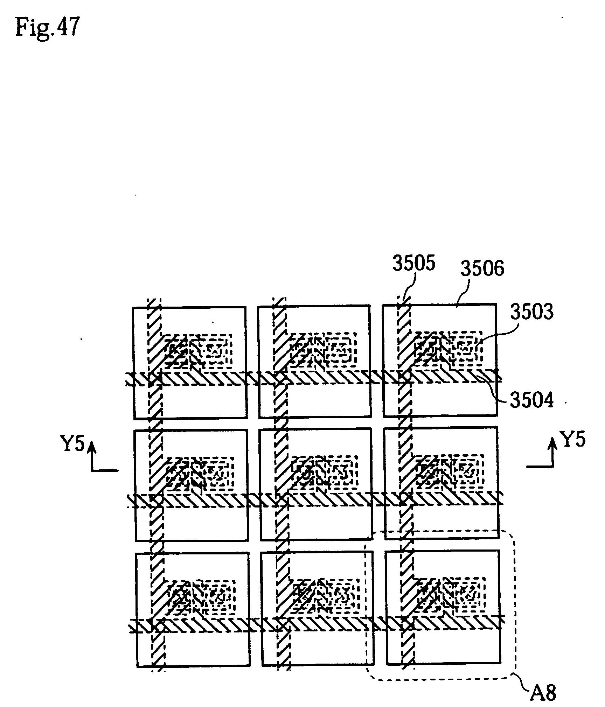

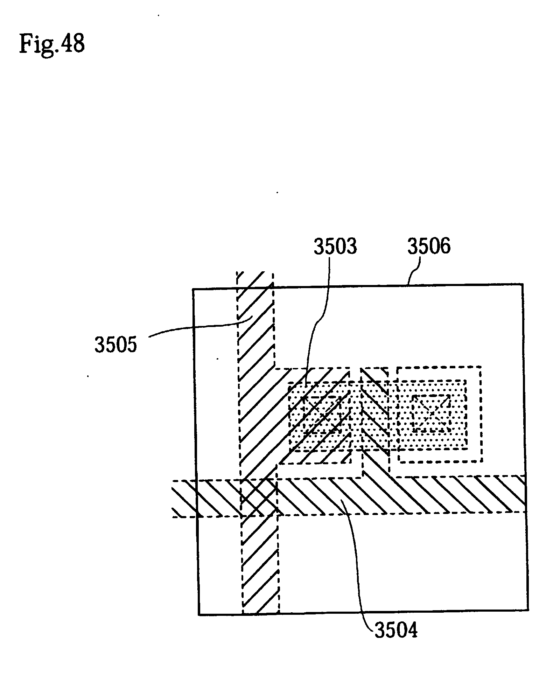

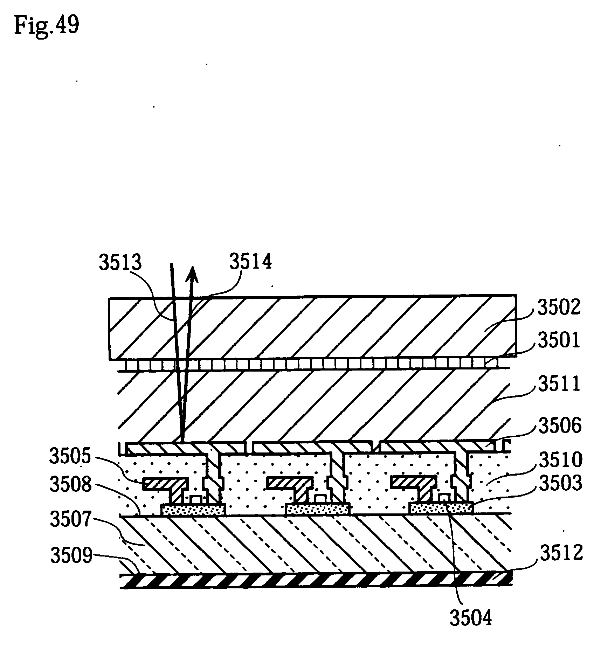

Fig. 47 shows a plan view of a reflective-type LCD device according to Embodiment 16, Fig. 48 shows an enlarged view of a portion A8 in Fig. 47, and Fig. 49 shows a cross sectional view taken along the line Y5-Y5 in Fig. 47. Shown in Fig. 47 to 49 are a counter electrode 3501, a counter substrate 3502, a pixel switching element 3503, a scanning line 3504, a signal line 3505, a reflective pixel electrode 3506, an insulating substrate 3507, a front surface 3508 of the insulating substrate, a back surface 3509 of the insulating substrate, an insulating layer 3510, a liquid crystal layer 3511, a light absorbing layer 3412, an incident light 3513, and a modulated output light 3514.

In this embodiment, the light absorbing layer 3512 is provided in place of the anti-reflection treated layer 3112 in the foregoing Embodiment 12, so that a light passing through the gap of the reflective pixel electrodes is led to and absorbed in the light absorbing layer, without being reflected at the back surface 3509 of the semiconductor substrate.

The light absorbing layer may be formed initially as in Embodiment 12, and may be formed lastly as in Embodiment 13. A simple example would be that, after a reflective-type LCD device is prepared, paint is applied on the back surface to form the light absorbing layer. Thereby, even when a material that reflects light (for example, a casing 67 shown in Fig. 1) was present in the vicinity of the back surface of the device, no degradation of contrast was observed up to a level of 500 million lux of incident light. However, a temperature of the reflective-type LCD device in this Embodiment 16 rises higher than that in Embodiment 14, and therefore it is preferable that a cooling system is provided for the reflective-type LCD device according to Embodiment 16.

EMBODIMENT 17

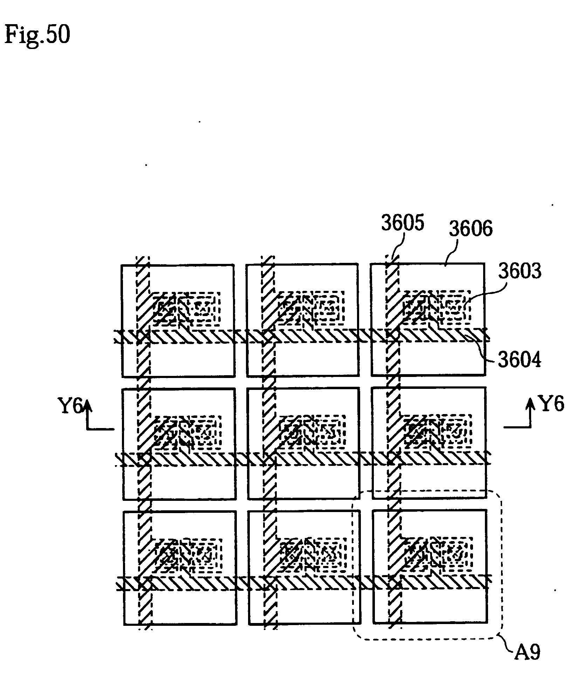

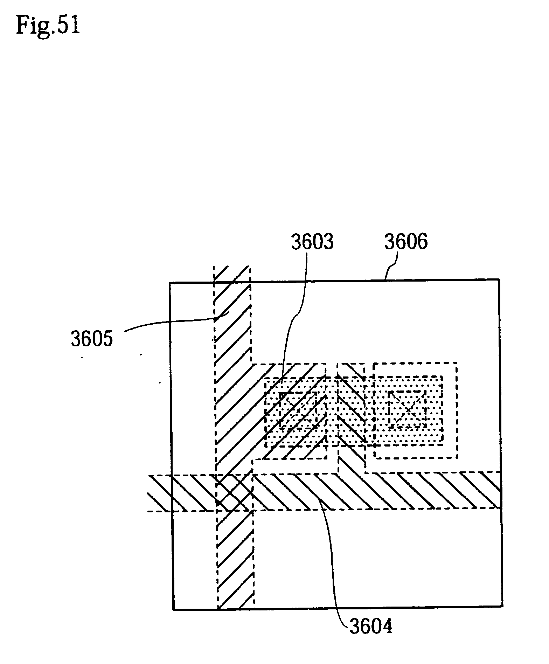

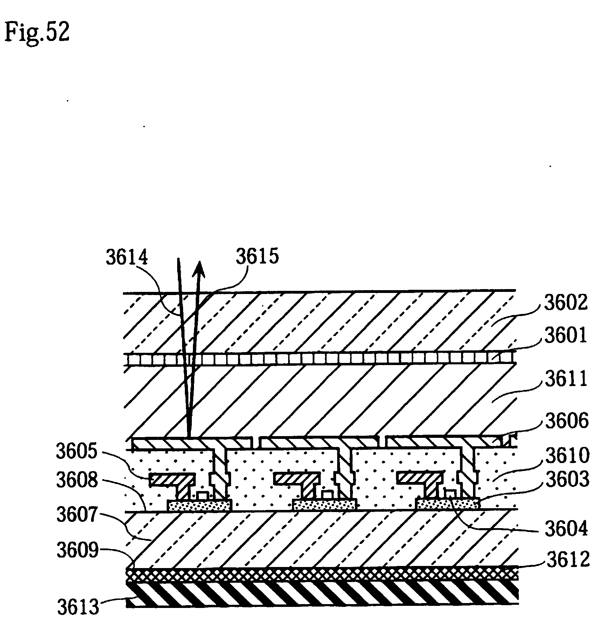

Fig. 50 shows a plan view of a reflective-type LCD device according to Embodiment 17, Fig. 51 shows an enlarged view of a portion A9 in Fig. 50, and Fig. 52 shows a cross sectional view taken along the line Y6-Y6 in Fig. 50. Shown in Fig. 50 to 52 are a counter electrode 3601, a counter substrate 3602, a TFT 3603, a scanning line 3604, a signal line 3605, a reflective pixel electrode 3606, an insulating substrate 3607, a front surface 3608 of the insulating substrate, a back surface 3609 of the insulating substrate, an insulating layer 3610, a liquid crystal layer 3611, an adhesive layer 3612, a pigment-containing film plate 3613, an incident light 3614, and a modulated output light 3615.

This Embodiment 17 is characterized in that the pigment-containing film plate 3613 is attached to the back surface 3609 of the insulating substrate 3607 using an adhesive material (adhesive layer 3612), and thereby an equivalent function to that of Embodiment 16 is achieved. Thereby, as in the foregoing Embodiment 16, even when a material that reflects light was present in the vicinity of the back surface of the device, no degradation of contrast was observed up to a level of 500 million lux of incident light. However, a temperature of the reflective-type LCD device rises higher than that in Embodiment 14, and therefore it is preferable that a cooling system is provided for the reflective-type LCD device.

Supplementary Remarks for Embodiments 12 to 17

Although only the basic configurations of the reflective-type LCD device are shown in the foregoing Embodiments 12 to 17, it is to be noted that many variations are possible. For example, an alignment layer may be employed to align the liquid crystal, and beads and the like may be employed to obtain a thickness of the liquid crystal layer. The mode of the liquid crystal is not limited to VA, but other modes such as TN and the like may be employed. Further, the incident light may be a polarized light, a natural light, or a light having a certain wavelength range.

**INDUSTRIAL APPLICABILITY**

As has been described, the following advantageous effects are achieved by the present invention.

(1) A photoelectric transducer producing a photocurrent is provided on a semiconductor substrate, and the photocurrent produced by the photoelectric transducer is made to flow in such a direction that it cancels a photocurrent produced in a pixel switching element. Thereby, a variation in pixel electrode voltages can be minimized. As a result, even when an illuminance of the incident light is large, flicker is eliminated and it is made possible to attain a good image in which a luminance variation and a degradation of a light utilization are reduced.

(2) A large storage capacitance can be obtained by making a storage capacitor using a ferroelectric thin film, or by providing a groove in a semiconductor substrate and utilizing a sidewall of the groove to obtain a capacitance, and as a result, a variation of pixel electrode voltages can be minimized.

(3) A variation of pixel electrode voltage can be minimized by setting a ratio W/L of a channel width W to a channel length L to be in a predetermined range, or by forming a storage capacitor having a multi-layered structure, or by forming an insulating layer having an organic insulator containing carbon particles, or by disposing a channel in a pixel switching element to be in an approximately center position in a plane with regard to a light blocking layer.

(4) In a reflective-type LCD device in which a pixel switching element is formed on a transparent insulating substrate, by treating a lower surface (back surface) of the insulating substrate with a surface treatment such that a light is not reflected, an interfacial reflection at the back surface of the insulating substrate can be prevented. Thereby, a variation of pixel electrode voltages caused by the interfacial reflection at the back surface of the insulating substrate can be suppressed.

**Claims**

1. A reflective-type display device comprising a semiconductor substrate, a transparent counter substrate having a transparent electrode, a light-modulating layer disposed between said semiconductor substrate and said counter substrate, wherein:

   on said semiconductor substrate, a pixel switching element is formed at each intersectional position of a plurality of signal lines and a plurality of scanning lines, said signal lines and scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and
   said reflective-type display device implements a display operation by applying a voltage between said transparent electrode and said pixel electrode such as to change an optical status of said light modulating layer in response to said applied voltage,
   said reflective-type display device characterized in that:
   in each pixel, a storage capacitor electrically connected to said pixel electrode is provided on said semiconductor substrate, and
   in each pixel, a photoelectric transducer electrically connected to said pixel electrode is provided on said semiconductor substrate, said photoelectric transducer wherein a photocurrent is produced by an incident light, and said photocurrent flows in a direction such that said photocurrent cancels a photocurrent produced in said pixel switching element.

2. A reflective-type display device comprising a semiconductor substrate, a transparent counter substrate having a transparent electrode, a light-modulating layer disposed between said semiconductor substrate and said counter substrate, wherein:

   on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate, and

in each pixel, a photoelectric transducer electrically connected to said pixel electrode is provided on said semiconductor substrate, said photoelectric transducer wherein a photocurrent is produced by an incident light, and said photocurrent flows in a direction such that said photocurrent cancels a photocurrent produced in said pixel switching element.

3.  A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate, and

a photocurrent generated in said n-channel MOS transistor and a photocurrent generated in said p-channel MOS transistor flow in directions such that said photocurrents cancel each other.

4.  A reflective-type display device as claimed in claim 3 characterized in that:

said pixel electrode is composed of a pair of an n-channel MOS transistor and an p-channel MOS transistor each in which one of a drain electrode and a source electrode is connected to said signal line and the other one of the drain electrode and the source electrode is connected to said pixel electrode.

5.  A reflective-type display device according to claim 3 or claim 4, wherein:

an electrode voltage of said counter substrate is approximately equal to $V_C$, where a substrate bias voltage of an n-channel MOS transistor is $V_{B1}$, a substrate bias voltage of a p-channel MOS transistor is $V_{B2}$, and $V_C$ is a pixel electrode voltage such that a photocurrent in said n-channel MOS transistor and a photocurrent in said p-channel MOS transistor, both of which photocurrents being produced by an incident light, are made to be equal during a period in which said p-channel MOS transistor and said n-channel MOS transistor are switched off.

6.  A reflective-type display device according to claim 3, 4 or 5, wherein:

a minimum modulation voltage $V_M$ is equal to or less than $(V_{B2}—V_C)$ and $(V_C—V_{B2})$, where said minimum modulation voltage $V_M$ is an absolute value of a voltage such that a reflectivity of 90 % of a maximum reflectivity $R_{max}$ is obtained in the case where a voltage-reflectivity characteristic of said light-modulating layer is a normally-off type, or that a reflectivity of 10 % of a maximum reflectivity $R_{max}$ is obtained in the case where a voltage-reflectivity characteristic of said light-modulating layer is a normally-on type.

7.  A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and

said reflective-type display device implements a display operation by applying a voltage between said transparent electrode and said pixel electrode such as to change an optical status of said light modulating layer in response to said applied voltage,

said reflective-type display device characterized in that:

said pixel electrode is composed of a MOS transistor in which one of a drain electrode and a source electrode is electrically connected to said signal line and the other one of the drain electrode and the source electrode is electrically connected to said pixel electrode,

in each pixel, a storage capacitor electrically connected to said pixel electrode is provided on said semiconductor substrate, and

in each pixel, a diode electrically connected to said pixel electrode is provided on said semiconductor substrate, said diode wherein a conduction type of a semiconductor region connected to said pixel electrode is different from a conduction type of a semiconductor region connected to said pixel electrode in said MOS transistor, and a photocurrent produced in said diode flows in a direction such that said photocurrent cancels a photocurrent produced in said pixel switching element.

8. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and

said reflective-type display device implements a display operation by applying a voltage between said transparent electrode and said pixel electrode such as to change an optical status of said light modulating layer in response to said applied voltage,

said reflective-type display device characterized in that:

said pixel electrode is composed of a MOS transistor in which one of a drain electrode and a source electrode is electrically connected to said signal line and the other one of the drain electrode and the source electrode is electrically connected to said pixel electrode,

in each pixel, a storage capacitor electrically connected to said pixel electrode is provided on said semiconductor substrate, and

in each pixel, a diode electrically connected to said pixel electrode is provided on said semiconductor substrate, said diode wherein a conduction type of a semiconductor region connected to said pixel electrode is different from a conduction type of a semiconductor region connected to said pixel electrode in said MOS transistor, and a photocurrent produced in said diode flows in a direction such that said photocurrent cancels a photocurrent produced in said pixel switching element.

9. A reflective-type display device according to claim 7 or claim 8, wherein:

an electrode voltage of said counter substrate is approximately equal to $V_C$, where a substrate bias voltage of said MOS transistor is $V_{B1}$, an electrode voltage of an electrode in said diode not connected to said pixel electrode is $V_{B2}$, and $V_C$ is a pixel electrode voltage such that a photocurrent in said MOS transistor and a photocurrent in said diode, both which photocurrents being produced by an incident light, are made to be equal during a period in which said MOS transistor is switched off.

10. A reflective-type display device according to claim 9, wherein:

a minimum modulation voltage $V_M$ is equal to or less than $(V_{B2}—V_C)$ and $(V_C—V_{B2})$, where said minimum modulation voltage $V_M$ is an absolute value of a voltage such that a reflectivity of 90 % of a maximum reflectivity $R_{max}$ is obtained in the case where a voltage-reflectivity characteristic of said light-modulating layer is a normally-off type, or that a reflectivity of 10 % of a maximum reflectivity $R_{max}$ is obtained in the case where a voltage-reflectivity characteristic of said light-modulating layer is a normally-on type.

11. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element and
said reflective-type display device implements a display operation by applying a voltage between said transparent electrode and said pixel electrode such as to change an optical status of said light modulating layer in response to said applied voltage,
said reflective-type display device characterized in that:
in each pixel, a storage capacitor electrically connected to said pixel electrode is provided on said semiconductor substrate, and
said storage capacitor is formed of a thin film substantially composed of a ferroelectric material.

12. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and
said reflective-type display device implements a display operation by applying a voltage between said transparent electrode and said pixel electrode such as to change an optical status of said light modulating layer in response to said applied voltage,
said reflective-type display device characterized in that:
in each pixel, a storage capacitor electrically connected to said pixel electrode is provided on said semiconductor substrate, and
said storage capacitor is formed of a thin film substantially composed of a ferroelectric material.

13. A reflective-type display device according to claim 11 or claim 12, wherein the thickness of said ferroelectric thin film is in the range of 2 nm to 5 μm.

14. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines arranged in a matrix such as to correspond to a matrix of a pixel arrangement, and over said pixel switching element a pixel electrode and a reflective layer are formed so that said reflective layer is layered over said pixel electrode, said pixel electrode provided for each pixel and electrically connected to said signal line via said pixel switching element, and

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate, and

said storage capacitor is formed of a thin film substantially composed of one of $Ta_2O_5$, $Y_2O_3$, $HfO_2$, $TiO_2$, $ZrO_2$ and $Nb_2O_5$.

15. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and

said reflective-type display device implements a display operation by applying a voltage between said transparent electrode and said pixel electrode such as to change an optical status of said light modulating layer in response to said applied voltage,
said reflective-type display device characterized in that:

in each pixel, a storage capacitor electrically connected to said pixel electrode is provided on said semiconductor substrate, and

said storage capacitor is formed of a thin film substantially composed of one of $Ta_2O_5$, $Y_2O_3$, $HfO_2$, $TiO_2$, $ZrO_2$, and $Nb_2O_5$.

16. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and
said reflective-type display device implements a display operation by applying a voltage between said transparent electrode and said pixel electrode such as to change an optical status of said light modulating layer in response to said applied voltage,
said reflective-type display device characterized in that:
in each pixel, a storage capacitor electrically connected to said pixel electrode is provided on said semiconductor substrate,
a groove is provided on a surface of said semiconductor substrate, and at least a part of said storage capacitor is formed on a side wall of said groove.

17. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and
said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate,

a groove is provided on a surface of said semiconductor substrate, and at least a part of said storage capacitor is formed on a side wall of said groove.

18. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate,

an upper surface of said pixel switching element is covered with an insulating layer, and

at least part of said storage capacitor is formed on said insulating layer.

19. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element , and

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate, and

an upper surface of said pixel switching element is covered with an insulating layer, and

at least part of said storage capacitor is formed on said insulating layer.

20. A reflective-type display device according to any of claims 11 to 19, wherein a common voltage line arranged approximately parallel to one of said signal line and said scanning line is provided, and one end of said storage capacitor is electrically connected to said common voltage line.

21. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and

said reflective-type display device implements a display operation by applying a voltage between said transparent electrode and said pixel electrode such as to change an optical status of said light modulating layer in response to said applied voltage,
said reflective-type display device characterized in that:

in each pixel, a storage capacitor electrically connected to said pixel electrode is provided on said semiconductor substrate, and

a ratio W/L is in the range of 0.005 to 1.5, where W is a channel width and L is a channel length in said pixel switching element.

22. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and said scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and, said reflective-type display device implements a display operation by applying a voltage between said transparent electrode and said pixel electrode such as to change an optical status of said light modulating layer in response to said applied voltage,
said reflective-type display device characterized in that:
in each pixel, a storage capacitor electrically connected to said pixel electrode is provided on said insulating substrate, and
a ratio W/L is in the range of 0.005 to 1.5, where W is a channel width and L is a channel length in said pixel switching element.

23. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and
said reflective-type display device implements a display operation by applying a voltage between said transparent electrode and said pixel electrode such as to change an optical status of said light modulating layer in response to said applied voltage,
said reflective-type display device characterized in that:
in each pixel, a storage capacitor electrically connected to said pixel electrode is provided on said semiconductor substrate, and
a ratio W/L is in the range of 0.005 to 1.5, where W is a channel width and L is a channel length in said pixel switching element.

24. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode electrically is disposed, said pixel electrode connected to said signal line via said pixel switching element and said pixel electrode having a reflective surface formed on a surface thereof, and,

said reflective-type display device implements a display operation by applying a voltage between said transparent electrode and said pixel electrode such as to change an optical status of said light modulating layer in response to said applied voltage,
said reflective-type display device characterized in that:
in each pixel, a storage capacitor electrically connected to said pixel electrode is provided on said insulating substrate, and
a ratio W/L is in the range of 0.005 to 1.5, where W is a channel width, and L is a channel length in said pixel switching element.

25. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and
said reflective-type display device implements a display operation by applying a voltage between said transparent electrode and said pixel electrode such as to change an optical status of said light modulating layer in response to said applied voltage,
said reflective-type display device characterized in that:
in each pixel, a storage capacitor electrically connected to said pixel electrode is provided on said semiconductor substrate, and
said storage capacitor has a layered structure in which N insulating layers are sandwiched between N+1 conductor layers or between N+1 semiconductor layers, and in said N+1 conductor layers or N+1 semiconductor layers, 2 to N layers constitutes a first electrode and the remaining layers constitutes a second electrode.

26. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and said scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and,
said reflective-type display device implements a display operation by applying a voltage between said transparent electrode and said pixel electrode such as to change an optical status of said light modulating layer in response to said applied voltage,
said reflective-type display device characterized in that:
in each pixel, a storage capacitor electrically connected to said pixel electrode is provided on said insulating substrate, and
said storage capacitor has a layered structure in which N insulating layers are sandwiched between N+1 conductor layers or between N+1 semiconductor layers, and in said N+1 conductor layers or N+1 semiconductor layers, 2 to N layers constitutes a first electrode and the remaining layers constitutes a second electrode.

27. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate, and

said storage capacitor has a layered structure in which N insulating layers are sandwiched between N+1 conductor layers or between N+1 semiconductor layers, and in said N+1 conductor layers or N+1 semiconductor layers, 2 to N layers constitutes a first electrode and the remaining layers constitutes a second electrode.

28. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode electrically is disposed, said pixel electrode connected to said signal line via said pixel switching element and said pixel electrode having a reflective surface formed on a surface thereof, and,

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said insulating substrate, and

said storage capacitor has a layered structure in which N insulating layers are sandwiched between N+1 conductor layers or between N+1 semiconductor layers, and in said N+1 conductor layers or N+1 semiconductor layers, 2 to N layers constitutes a first electrode and the remaining layers constitutes a second electrode.

29. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate, and

one or more insulating layers is/are provided over said pixel switching element, said one or more insulating layers including at least one insulating layer composed of an organic insulator containing carbon particles.

30. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and said scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and,

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said insulating substrate, and

one or more insulating layers is/are provided over said pixel switching element, said one or more insulating layers including at least one insulating layer composed of an organic insulator containing carbon particles.

31. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate, and

one or more insulating layers is/are provided over said pixel switching element, said one or more insulating layers including at least one insulating layer composed of an organic insulator containing carbon particles.

32. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode electrically is disposed, said pixel electrode connected to said signal line via said pixel switching element and said pixel electrode having a reflective surface formed on a surface thereof, and,

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said insulating substrate, and

one or more insulating layers is/are provided over said pixel switching element, said one or more insulating layers including at least one insulating layer composed of an organic insulator containing carbon particles.

33. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate,

a layer of conductor or semiconductor is formed over said pixel switching element so that an insulating layer is disposed between said pixel switching element and said layer of conductor or semiconductor, said layer of conductor or semiconductor constituting a light blocking layer separately provided for each pixel, and

a distance between a foot of a perpendicular dropped from a center of a channel in said pixel switching element to a plane of said light blocking layer and a centroid of said light blocking layer is equal to or less than 2/3 of a square root of an area of said light blocking layer.

34. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and said scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and, said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said insulating substrate,

a layer of conductor or semiconductor is formed over said pixel switching element so that an insulating layer is disposed between said pixel switching element and said layer of conductor or semiconductor, said layer of conductor or semiconductor constituting a light blocking layer separately provided for each pixel, and

a distance between a foot of a perpendicular dropped from a center of a channel in said pixel switching element to a plane of said light blocking layer and a centroid of said light blocking layer is equal to or less than 2/3 of a square root of an area of said light blocking layer.

35. A reflective-type display device comprising a semiconductor substrate, a transparent counter substrate having a transparent electrode, a light-modulating layer disposed between said semiconductor substrate and said counter substrate, wherein:

on said semiconductor substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode is disposed, said pixel electrode electrically connected to said signal line via said pixel switching element and said pixel electrode having a reflective surface formed on a surface thereof, and

said reflective-type display device implements a display operation by applying a voltage between said transparent electrode and said pixel electrode such as to change an optical status of said light modulating layer in response to said applied voltage,

said reflective-type display device characterized in that:

in each pixel, a storage capacitor electrically connected to said pixel electrode is provided on said semiconductor substrate,

a layer of conductor or semiconductor is formed over said pixel switching element so that an insulating layer is disposed between said pixel switching element and said layer of conductor or semiconductor, said layer of conductor or semiconductor constituting a light blocking layer separately provided for each pixel, and

a distance between a foot of a perpendicular dropped from a center of a channel in said pixel switching element to a plane of said light blocking layer and a centroid of said light blocking layer is equal to or less than 2/3 of a square root of an area of said light blocking layer.

36. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode electrically is disposed, said pixel electrode connected to said signal line via said pixel switching element and said pixel electrode having a reflective surface formed on a surface thereof, and,
said reflective-type display device implements a display operation by applying a voltage between said transparent electrode and said pixel electrode such as to change an optical status of said light modulating layer in response to said applied voltage,
said reflective-type display device characterized in that:
in each pixel, a storage capacitor electrically connected to said pixel electrode is provided on said insulating substrate,
a layer of conductor or semiconductor is formed over said pixel switching element so that an insulating layer is disposed between said pixel switching element and said layer of conductor or semiconductor, said layer of conductor or semiconductor constituting a light blocking layer separately provided for each pixel, and
a distance between a foot of a perpendicular dropped from a center of a channel in said pixel switching element to a plane of said light blocking layer and a centroid of said light blocking layer is equal to or less than 2/3 of a square root of an area of said light blocking layer.

37. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and said scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and,
said reflective-type display device implements a display operation by applying a voltage between said transparent electrode and said pixel electrode such as to change an optical status of said light modulating layer in response to said applied voltage,
said reflective-type display device characterized in that:
an antireflection-treated layer is formed on a lower surface of said insulating substrate.

38. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode electrically is disposed, said pixel electrode connected to said signal line via said pixel switching element and said pixel electrode having a reflective surface formed on a surface thereof, and,
said reflective-type display device implements a display operation by applying a voltage between said transparent electrode and said pixel electrode such as to change an optical status of said light modulating layer in response to said applied voltage,
said reflective-type display device characterized in that:
an antireflection-treated layer is formed on a lower surface of said insulating substrate.

39. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and said scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and,

said reflective-type display device implements a display operation by applying a voltage between said transparent electrode and said pixel electrode such as to change an optical status of said light modulating layer in response to said applied voltage,

said reflective-type display device characterized in that:

a film plate provided with an antireflection-treated layer on one of the surfaces of said film plate is attached on a lower surface of said insulating substrate by an adhesive layer provided with the other surface of said film plate, and

reflective indices of said insulating substrate, said adhesive layer, and said film plate are approximately equal.

**40.** A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode electrically is disposed, said pixel electrode connected to said signal line via said pixel switching element and said pixel electrode having a reflective surface formed on a surface thereof, and,

said reflective-type display device implements a display operation by applying a voltage between said transparent electrode and said pixel electrode such as to change an optical status of said light modulating layer in response to said applied voltage,

said reflective-type display device characterized in that:

a film plate provided with an antireflection-treated layer on one of the surfaces of said film plate is attached on a lower surface of said insulating substrate by an adhesive layer provided with the other surface of said film plate, and

reflective indices of said insulating substrate, said adhesive layer, and said film plate are approximately equal.

**41.** A reflective-type display device according to claim 39 or claim 40, wherein said film plate has the function of absorbing part of incident light.

**42.** A reflective-type display device according to claim 41, wherein said film plate is a polarizing plate.

**43.** A reflective-type display device according to claim 41, wherein said film plate comprises a layered structure composed of a polarizing plate and a retardation plate.

**44.** A reflective-type display device according to claim 43, wherein a retardation of said retardation plate is approximately $\lambda/4$, where $\lambda$ is a wavelength of the incident light.

**45.** A reflective-type display device according to claim 42, wherein an incident light is a polarized light, and an absorbing axis of said polarizing plate is approximately equal to a direction of polarization of said incident light.

**46.** A reflective-type display device according to claim 43 or claim 44, wherein the incident light is polarized light, and the absorbing axis of said polarizing plate is approximately equal to the direction of polarization of said incident light.

**47.** A reflective-type display device according to claim 42, 43 or 44 wherein the incident light is polarized light, said light modulating layer is a twisted-nematic mode liquid crystal layer, and the absorbing axis of said polarizing plate is approximately equal to such a direction that the angle of twist of said liquid crystal is added to the direction of polarization of said polarized light.

**48.** A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and said scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and,

said reflective-type display device implements a display operation by applying a voltage between said transparent electrode and said pixel electrode such as to change an optical status of said light modulating layer in response to said applied voltage,
said reflective-type display device characterized in that:

a light absorbing layer is formed on a lower surface of said insulating substrate.

49. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode electrically is disposed, said pixel electrode connected to said signal line via said pixel switching element and said pixel electrode having a reflective surface formed on a surface thereof, and,
said reflective-type display device implements a display operation by applying a voltage between said transparent electrode and said pixel electrode such as to change an optical status of said light modulating layer in response to said applied voltage,
said reflective-type display device characterized in that:
a light absorbing layer is formed on a lower surface of said insulating substrate.

50. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and said scanning lines arranged in a matrix such as to correspond to a matrix of a pixel arrangement, and over said pixel switching element, a pixel electrode and a reflective layer are formed so that said reflective layer is layered over said pixel electrode, said pixel electrode provided for each pixel and electrically connected to said signal line via said pixel switching element, and,
said reflective-type display device implements a display operation by applying a voltage between said transparent electrode and said pixel electrode such as to change an optical status of said light modulating layer in response to said applied voltage,
said reflective-type display device characterized in that:
a film plate in which a material for absorbing an incident light is dispersed is attached on a lower surface of said insulating substrate with an adhesive layer interposed between said film plate and said insulating substrate, said material including one of a dye, a pigment, and a colorant, and
reflective indices of said insulating substrate, said adhesive layer, and said film plate are approximately equal.

51. A reflective-type display device comprising a transparent insulating substrate, a transparent counter substrate having a transparent electrode, a light-modulating layer disposed between said insulating substrate and said counter substrate, wherein:

on said insulating substrate, a pixel switching element is formed at each intersectional position of a plurality of signal lines and a plurality of scanning lines, said signal lines and scanning lines being arranged in a matrix so as to correspond to a matrix of a pixel arrangement, and over said pixel switching element, a pixel electrode electrically is disposed, said pixel electrode connected to said signal line via said pixel switching element and said pixel electrode having a reflective surface formed on a surface thereof, and,
said reflective-type display device implements a display operation by applying a voltage between said transparent electrode and said pixel electrode such as to change an optical status of said light modulating layer in response to said applied voltage,
said reflective-type display device characterized in that:
a film plate in which a material for absorbing an incident light is dispersed is attached on a lower surface of said insulating substrate with an adhesive layer interposed between said film plate and said insulating substrate, said material including one of a dye, a pigment, and a colorant,

reflective indices of said insulating substrate, said adhesive layer, and said film plate are approximately equal.

52. An image device comprising a light source, a semitransparent mirror, and a liquid crystal light valve, wherein said liquid crystal light valve is composed of a reflective-type display device according to any preceding claim.

Fig.1

Fig.2

Fig.3

Fig.4

Fig.5

Fig.6

Fig.7

Y

L$_3$

L$_2$

L$_1$

V$_{G2ON}$   V'$_{DM}$   0   V$_{DM}$ V$_{G1ON}$   V$_{DD}$
(Signal Line Voltage)

Range  of V$_{DD}$
(Signal Line Voltage)

Fig.8

Fig.9

(Each arrow ↑ shows a moment at which a pixel is selected.)

Fig.10

(a)

(b)

# Fig.11

(a)

(b)

(c)

(d)

Fig.12

Fig.13

Fig.14

Single Pixel

100

101
102
103
104
105
106
107
108
119
120

113
110
109
111
112
115
114
116

A1

MOS Transistor
Region 99

Storage Capacitor
Region 130

Fig.15

Fig.16

Single Pixel

101
102
103
104
105
106
107
108

113
110
109
111

112
115
114
116

123
119
122
124
120

MOS Transistor
Region 99

Storage Capacitor
Region 130

Fig.17

Fig.18

Single Pixel

MOS Transistor
Region 99

Storage Capacitor
Region 130

101
102
103
104
105
106
107
126
125
108
119
120

113
110
109
111
112
115
114
116

Fig.19

101
102
103
104
113
111
110
115
119  116  124
123
120

**Fig.20**

Fig.21

Fig.22

Fig.23

EP 1 037 093 A1

Fig.24

Fig.25

Single Pixel

—201
—202
—203
—204
—205
—206
—207
—208
—219
—220

213
210
X9
209
211
212
215
214
216

X9

MOS Transistor
Region 99

Storage Capacitor
Region 130

A2

Fig.26

Fig.27

Fig.28

Single Pixel

— 201
— 202
— 203
— 204
— 205
— 206
— 207
— 208
— 213
— 214
— 219
— 220

210
209
211
212
215
216

A3

MOS Transistor
Region 99

Storage Capacitor
Region 130

Fig.29

211   227 228 229
      230
216

Fig.30

Fig.31

## Fig.32

Single Pixel

MOS Transistor
Region 99

Storage Capacitor
Region 130

Fig.33

**Fig.34**

208

M1

P1

M2

P2

Fig.35

3105　3106

3103

3104

Y1

Y1

A4

Fig.36

3103    3106

3105

3104

Fig.37

3113    3114

3102
3101
3111
3106
3105
3110
3108
3103
3107
3109
3112
3115    3104

Fig.38

Fig.39

3203    3206

3205

3204

Fig.40

Fig.41

Fig.42

Fig.43

3315    3316

3302
3301
3311
3306
3305
3308    3310
3303
3307    3304
3309
3312
3313    3314
3314

Fig.44

Fig.45

3403   3406

3305

3404

Fig.46

3416    3417

3402
3401
3411
3406
3405
3410
3408
3403
3407
3404
3409
3412
3413
3414
3415

3418

Fig.47

Fig.48

Fig.49

Fig.50

Fig.51

3603    3606

3605

3604

Fig.52

3614    3615

3602
3601
3611
3606

3605
3608
3607
3609

3610
3603

3604
3612

3613

## Fig.53

Fig.54

Fg.55

Fig.56

Fig.57

(Each arrow ↑ shows a moment at which a pixel is selected.)

EP 1 037 093 A1

## INTERNATIONAL SEARCH REPORT

International application No.

PCT/JP98/05365

| A. CLASSIFICATION OF SUBJECT MATTER |
|---|
| Int.Cl⁶ G02F1/136, 500, G02F1/133, 550 |
| According to International Patent Classification (IPC) or to both national classification and IPC |

| B. FIELDS SEARCHED |
|---|
| Minimum documentation searched (classification system followed by classification symbols)<br>  Int.Cl⁶ G02F1/136, 500, G02F1/133, 550 |
| Documentation searched other than minimum documentation to the extent that such documents are included in the fields searched<br>  Jitsuyo Shinan Koho    1926-1998<br>  Kokai Jitsuyo Shinan Koho   1971-1995 |
| Electronic data base consulted during the international search (name of data base and, where practicable, search terms used) |

### C. DOCUMENTS CONSIDERED TO BE RELEVANT

| Category* | Citation of document, with indication, where appropriate, of the relevant passages | Relevant to claim No. |
|---|---|---|
| X<br>Y<br><br>A | JP, 2-204726, A (Matsushita Electric Industrial<br>Co., Ltd.),<br>14 August, 1990 (14. 08. 90),<br>Page 1, lower left column, lines 5 to 14 ; page 2,<br>lower left column, lines 2 to 14 ; Fig. 1<br>(Family: none) | 50<br>15-49, 51-68,<br>73-76<br>1-14, 77, 78 |
| Y<br><br>A | JP, 2-245742, A (Matsushita Electric Industrial<br>Co., Ltd.),<br>1 October, 1990 (01. 10. 90),<br>Page 2, upper right column, line 9 to lower right<br>column, line 2 ; Fig. 2 (Family: none) | 15-68, 73-76<br><br>1-14, 77, 78 |
| Y | JP, 5-53141, A (Fujitsu Ltd.),<br>5 March, 1993 (05. 03. 93),<br>Page 4, left column, lines 19 to 39 ; Fig. 1<br>(Family: none) | 15-20 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search<br>  27 January, 1999 (27. 01. 99) | Date of mailing of the international search report<br>  9 February, 1999 (09. 02. 99) |
|---|---|
| Name and mailing address of the ISA/<br>  Japanese Patent Office | Authorized officer |
| Facsimile No. | Telephone No. |

Form PCT/ISA/210 (second sheet) (July 1992)

117

## INTERNATIONAL SEARCH REPORT

International application No.

PCT/JP98/05365

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 58-90770, A (Mitsubishi Electric Corp.), 30 May, 1983 (30. 05. 83), Page 1, lower left column, lines 5 to 13 (Family: none) | 21-24 |
| Y | JP, 64-81262, A (Seiko Epson Corp.), 27 March, 1989 (27. 03. 89), Page 2, lower left column, lines 4 to 10, 18 to page 3, upper left column, line 1 ; Fig. 1 (Family: none) | 25-28 |
| Y | JP, 6-67207, A (Seiko Epson Corp.), 11 March, 1994 (11. 03. 94), Page 2, left column, lines 2 to 6, right column, lines 16 to 28 ; Figs. 1, 3 (Family: none) | 25-28 |
| Y | JP, 9-22024, A (Sony Corp.), 21 January, 1997 (21. 01. 97), Page 3, right column, line 44 to page 4, left column, line 33 ; Fig. 1 (Family: none) | 29-32 |
| Y | JP, 62-129822, A (Oki Electric Industry Co., Ltd.), 12 June, 1987 (12. 06. 87), Page 2, upper right column, line 3 to lower left column, line 6 ; page 5, upper right column, line 2 to lower left column, line 2 ; Figs. 1, 6 (Family: none) | 33-36 |
| Y | JP, 9-55512, A (Matsushita Electric Industrial Co., Ltd.), 25 February, 1997 (25. 02. 97), Page 3, right column, lines 24 to 30 ; Fig. 1 (Family: none) | 33-36 |
| Y | JP, 2-44317, A (Hitachi,Ltd.), 14 February, 1990 (14. 02. 90), Page 2, upper left column, line 15 to upper right column, line 3, lower left column, lines 1 to 17 ; Fig. 2 (Family: none) | 37-40 |
| Y | JP, 4-56828, A (NEC Corp.), 24 February, 1992 (24. 02. 92), Page 3, upper left column, line 16 to lower left column, line 6 ; Fig. 1 & EP, A1, 464579 & EP, A1, 668528 | 37-40 |
| Y | JP, 59-195682, A (Toshiba Corp.), 6 November, 1984 (06. 11. 84), Page 3, upper right column, line 17 to lower left column, line 12 ; Fig. 3 (Family: none) | 41-44 |
| Y | JP, 6-242465, A (Hitachi,Ltd., et al.), 2 September, 1994 (02. 09. 94), Page 5, left column, lines 32 to 40 ; Fig. 1 (Family: none) | 41-44 |

Form PCT/ISA/210 (continuation of second sheet) (July 1992)

## INTERNATIONAL SEARCH REPORT

International application No.

PCT/JP98/05365

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP, 9-69628, A (Pioneer Video Corp., et al.), 11 March, 1997 (11. 03. 97), Page 7, left column, line 47 to page 8, left column, line 33 ; Fig. 5 (Family: none) | 45-48 |
| Y | JP, 9-68719, A (Pioneer Video Corp., et al.), 11 March, 1997 (11. 03. 97), Page 5, left column, line 17 to right column, line 46 ; Fig. 2 (Family: none) | 45-48 |
| Y | JP, 9-68718, A (Pioneer Video Corp., et al.), 11 March, 1997 (11. 03. 97), Page 4, right column, line 35 to page 5, left column, line 46 ; Fig. 1 (Family: none) | 45-48 |
| Y | JP, 6-194690, A (Hitachi,Ltd., et al.), 15 July, 1994 (15. 07. 94), Page 5, right column, line 39 to page 6, right column, line 29 ; Fig. 4 (Family: none) | 45-48 |
| Y | JP, 55-95980, A (Suwa Seikosha K.K.), 21 July, 1980 (21. 07. 80), Page 2, upper right column, line 17 to lower right column, line 5 ; Fig. 3 (Family: none) | 45-48 |
| Y | JP, 7-287102, A (Dainippon Printing Co., Ltd.), 31 October, 1995 (31. 10. 95), Page 8, right column, line 48 to page 9, left column, line 12 ; Fig. 15 (Family: none) | 51-68 |
| Y A | JP, 4-310914, A (Seiko Epson Corp.), 2 November, 1992 (02. 11. 92), Page 2, right column, lines 23 to 35 ; Fig. 1 (Family: none) | 57-60, 63-66 69-72 |
| Y | JP, 4-348321, A (Ricoh Co., Ltd.), 3 December, 1992 (03. 12. 92), Page 2, left column, lines 1 to 9, 23 to 27 ; page 5, left column, lines 34 to 41 ; Fig. 10 (Family: none) | 73-76 |
| Y | JP, 3-68920, A (Asahi Glass Co., Ltd.), 25 March, 1991 (25. 03. 91), Page 1, lower left column, lines 5 to 14 ; page 5, upper left column, lines 2 to 6 ; Fig. 2 (Family: none) | 73-76 |
| Y | JP, 46-38377, A (N.V. Optische Industrie "de Oude Delft"), 11 November, 1971 (11. 11. 71), Page 1, left column, line 32 to right column, line 7 ; Fig. 1 (Family: none) | 75, 76 |

Form PCT/ISA/210 (continuation of second sheet) (July 1992)